# EUROPEAN PATENT APPLICATION

(11) **EP 4 567 089 A1**
(43) Date of publication of application: **11.06.2025**
(21) Application number: 24217668.3
(22) Date of filing: 05.12.2024
(51) Int. Cl.: C09K 19/18, C09K 19/34, C09K 19/30, C09K 19/12

(54) **REFLECTIVE LIQUID CRYSTAL PANEL**

(30) Priority: 07.12.2023 EP 23215065
(71) Applicant: Merck Patent GmbH, 64293 Darmstadt (DE)
(72) Inventor: Saito, Izumi, 64293 Darmstadt (DE); Weiss, Kristin, 64293 Darmstadt (DE)
(74) Representative: Merck Patent Association

(57) **Abstract**

The present invention relates to LCoS panels using liquid crystal (LC) media having negative dielectric anisotropy and to the LC media comprised therein. The disclosed liquid crystal medium (LC medium) has negative dielectric anisotropy and high optical anisotropy and is particularly useful in electro-optical displays including projection systems based on vertical alignment (VA) nematic panels.

## Description

The present invention relates to Liquid Crystal on Silicon panels (LCoS panels) using liquid crystal (LC) media having negative dielectric anisotropy and to the LC media comprised therein.

The liquid crystal medium (LC medium) has negative dielectric anisotropy, very high optical anisotropy and is particularly useful in electro-optical microdisplays or projection systems based on vertical alignment (VA) nematic panels.

LCoS panels are used as reflective type matrix arrays in devices like projection systems, near-eye displays or beam-steering applications. In the most common mode the display modulates the orientation of polarization like most of the conventional LC displays (amplitude modulation). Some applications of LCoS make use of controlled phase modulation of coherent light in order to control spatial distribution of light beams including image projection. In view of new applications and light sources the development of LCoS panels has use for improvements.

The alignment layer is usually applied on the electrodes (where such electrodes are present) such that it is in contact with the LC medium and induces initial alignment of the LC molecules. The alignment layer in LCoS panels often consists of an inorganic alignment material which is more temperature resistant than the polyimide layers used mostly in other LC panels for desktop or TV applications, but the alignment strength of the inorganic materials is often reduced. The variable alignment properties of these inorganic materials require careful testing. For LCoS panels there is demand for LC media which have high alignment property on inorganic alignment materials. In addition, these devices usually require high light stability and longer lifetime under high light intensities and temperature stress (like standard operating temperatures of about 60-70°C). Some applications also require high temperature ranges (as in outdoor equipment and vehicles) and short response times.

Another problem observed in prior art is that the use of conventional LC media in LCoS panels often leads to the occurrence of defects (like misalignment, white spots, mura, bubbles and dark areas) in the display due to the harsh temperatures and irradiation during use. It is therefore desirable to provide LC media which lead to reduced display defects after continued use. This means they must be stable in themselves and combine well with adjacent materials, e. g. the inorganic alignment layers.

Another problem observed in prior art is that LC media for use in displays, including but not limited to displays of the LCoS type, do often exhibit high viscosities and, as a consequence, long switching times.

In addition, there is a great demand for displays, and LC media for use in such displays, which enable a high specific resistance at the same time as a large working-temperature range, short response times, and a low threshold voltage, a multiplicity of grey shades, high contrast, have high reliability and high values for the VHR after UV exposure.

The invention is based on the object of providing novel suitable LC media for use in devices, which do not have the disadvantages indicated above or do so to a reduced extent.

The invention further has the object of providing LCoS panels which do not have the above-mentioned disadvantages, or do so only to a reduced extent, and at the same time have low viscosity, high birefringence, negative dielectric anisotropy, high transmission or reflectance and a high clearing point.

In particular, the invention is based on the object of providing LC media which are suitable for phase modulated displays. Here the retardation of a light signal is modulated pixel by pixel. The resulting reflected light can have controlled intensity by interference. Applications of small scale projectors are for example in the field of augmented reality applications in near-eye devices, head-up displays, projection displays in cars or similar.

These objects have been achieved in accordance with the present invention by materials and processes as described in the present application. In particular, it has been found, surprisingly, that the use of liquid crystalline hosts as described hereinafter allows achieving the advantageous effects as mentioned above.

In one apect the invention relates to an LCoS panel comprising a LC medium comprising
a) one or more compounds of formula I 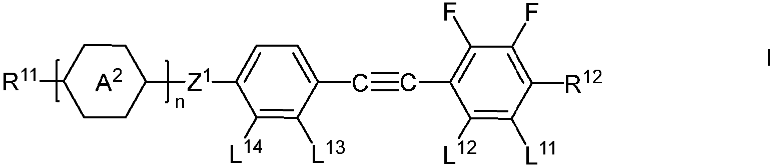 in which
   R¹¹ and R¹² denotes alkyl having 1 to 7 C atoms, alkoxy having 1 to 7 C atoms, or alkoxyalkyl, alkenyl or alkenyloxy having 2 to 7 C atoms, where, in addition, one or more CH₂ groups in these radicals may each be replaced, independently of one another by 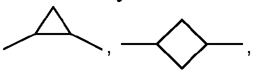 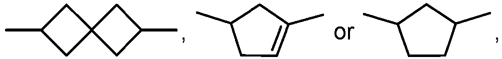 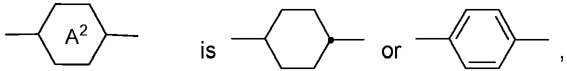 preferably 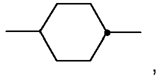
   Z¹ a single bond, -CH₂CH₂- or -(CO)O-, preferably a single bond,
   n independently 0 or 1,
   L¹¹, L¹², L¹³, L¹⁴ independently H or methyl,
b) one or more compounds of formula III 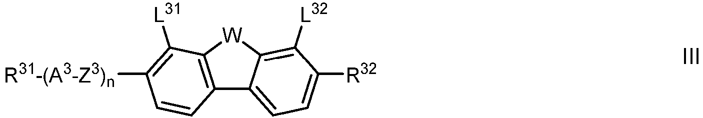 in which
   - R³¹ and R³²: each, independently of one another, denote H, an alkyl or alkoxy radical having 1 to 7 C atoms, where one or more CH₂ groups in these radicals may each be replaced, independently of one another, by 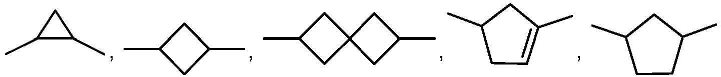 , -C≡C-, -CF₂O-, -OCF₂-, -CH=CH-, -O-, -CO-O- or -O-CO- in such a way that O atoms are not linked directly to one another, and in which one or more H atoms may be replaced by halogen,
   - A³: on each occurrence, independently of one another, denotes a 1,4-phenylene radical, in which one or two CH groups may be replaced by N, or
   - n: denotes 0, 1 or 2,
   - Z³: on each occurrence independently of one another denotes -CF₂O-, -OCF₂-, -CH₂O-, -OCH₂-, -CH₂-, -CH₂CH₂-, -CH=CH-, -C≡C- or a single bond,
   - L³¹ and L³²: each, independently of one another, denote F, CI, CF₃ or CHF₂, and
   - W: denotes O or S.
   and
c) one or more compounds of formula IV 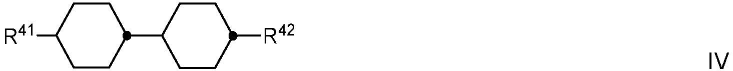 in which
   - R⁴¹: denotes an unsubstituted alkyl radical having 1 to 7 C atoms or an unsubstituted alkenyl radical having 2 to 7 C atoms, preferably an n-alkyl radical, particularly preferably having 2, 3, 4 or 5 C atoms, and
   - R⁴²: denotes an unsubstituted alkyl radical having 1 to 7 C atoms or an unsubstituted alkoxy radical having 1 to 6 C atoms, both preferably having 2 to 5 C atoms, an unsubstituted alkenyl radical having 2 to 7 C atoms, preferably having 2, 3 or 4 C atoms,

   wherein optionally and preferably one or more compounds of formula IV are selected from formula IV-1 to IV-4, more preferably of IV-1 to IV-3, and most preferably of compounds of formula IV-2,
   preferably alone or in combination with any of IV-1, IV-3 and IV-4, most preferably in combination with IV-3: 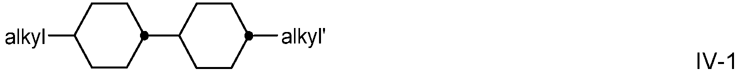 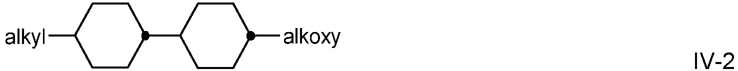 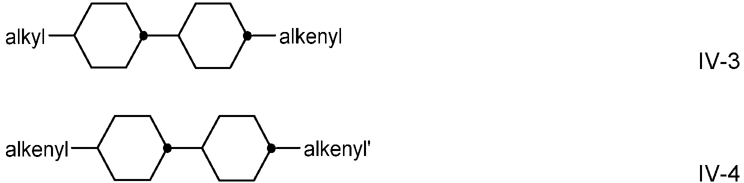 wherein
      - alkyl: denotes alkyl having 1 to 7 C atoms, and
      - alkoxy: denotes alkoxy having 1 to 5 C atoms.

The invention furthermore relates to a liquid crystal medium as disclosed above for the LCoS panel.

The invention furthermore relates to a process for preparing an LC medium as described above and below, comprising the steps of mixing one or more compounds of the formulae I, III and IV, optionally with further LC compounds and/or additives.

The invention further relates to a projection device comprising the LCoS panel according to the invention and light directing elements. The light directing elements can be chosen from lenses, mirrors, half-mirrors, prisms or similar.

The invention furthermore relates to the use of LC media according to the invention in displays. The invention further relates to an LC display comprising an LC medium according to the invention of the IPS, FFS, UB-FFS, UBplus, VA or PS-VA type. The invention furthermore relates to the use of LC media according to the invention in polymer stabilised VA or self-aligned-VA displays, and to a polymer stabilised VA displays comprising the LC medium according to the invention.

The invention furthermore relates to an LC display of the VA or PSA type comprising two substrates, at least one which is transparent to light, an electrode provided on each substrate or two electrodes provided on only one of the substrates, and located between the substrates a layer of an LC medium that comprises one or more polymerisable compounds and an LC component as described above and below, wherein the polymerisable compounds are polymerised between the substrates of the display.

The invention furthermore relates to an LC display of the VA type comprising two opposing substrates, one is transparent and one is a silicon semiconductor backplane.

The invention furthermore relates to a process for manufacturing an LCoS panel as described above and below, comprising the steps of filling or otherwise providing an

LC medium as described above and below, between the substrates of the panel and sealing it.

Preferred embodiments are also disclosed in the dependent claims and can also be taken from the description.

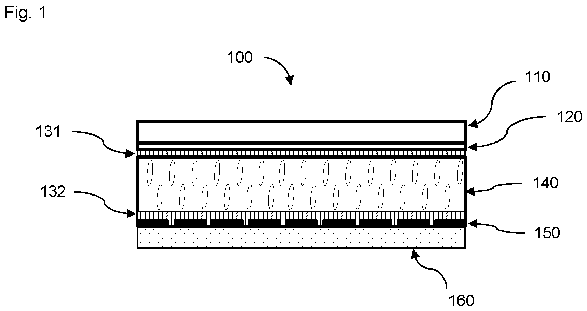

Brief description of Fig. 1:
In Fig. 1 there is provided a reflective spatial light modulator, in particular a LCoS panel 100 including the liquid crystal material 140 as defined throughout this disclosure, sandwiched between a transparent glass layer 110 having a transparent electrode 120, a pixelated mirror 150 mounted on a silicon CMOS backplane 160 and its mounting (not shown). The mirror is divided into a two-dimensional array of individually addressable pixels. Pre-alignment of the liquid crystal 140 is provided by alignment layers 131 and 132.

The displays according to the invention have two electrodes, preferably in the form of transparent layers, which are applied to one or both of the substrates. In a typical reflective display, one continuous transparent electrode is applied to the transparent substrate. The opposite electrode is formed as separately addressable pixels.

It was surprisingly found that the use of the liquid crystal medium according to the invention enables displays with fast response times, a low threshold voltage and a high birefringence, as well as high reliability when exposed to radiation and thermal stress.

In particular, the medium according to the invention is distinguished by good alignment properties on various alignment materials, especially on inorganic alignment materials.

The LC media according to the invention show the following advantageous properties when used in VA or FFS displays:
- improved transmission of the display,
- a high clearing temperature,
- sufficient stability against heat and/or UV,
- a high voltage-holding-ratio,
- relative fast switching, and
- good LTS.

The LC media according to the invention show the following advantageous properties when used in reflective displays including projection systems:
- a high clearing temperature,
- relative fast switching,
- sufficient stability against heat, light and/or UV, and
- excellent alignment on inorganic alignment materials.

In particular, the liquid crystal medium according to the invention shows a favourably low ratio of rotational viscosity to the splay elastic constant γ₁ / K₁. This contributes to improved switching behaviour especially at low driving voltages which is useful to enable energy-saving displays.

In the following the essentiall and optional components of the LC media are disclosed in more detail, which relate to preferred embodiments of the media and the LC displays containing them.

The LCOS panel and the medium preferably comprise additionally:
d) 0.1 % to 0.9% of one or more compounds of formula ST-1 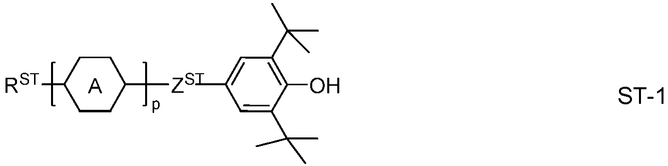 wherein
- R^{ST}: denotes H, an alkyl or alkoxy radical having 1 to 15 C atoms, where, in addition, one or more CH₂ groups in these radicals may each be replaced, independently of one another by -C≡C-, -CF₂O-, -OCF₂-, -CH=CH-, 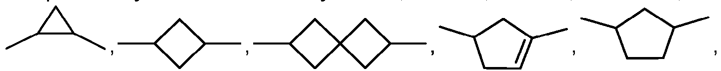 -O-, -CO-O- or -O-CO- in such a way that O atoms are not linked directly to one another, and in which, in addition, one or more H atoms may be replaced by halogen, 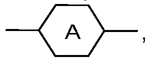 on each occurrence, identically or differently, denotes 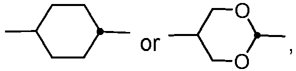
- Z^{ST}: each, independently of one another, denote -CO-O-, -O-CO-, -CF₂O-, -OCF₂-, -CH₂O-, -OCH₂-, -CH₂-, -CH₂CH₂-, -(CH₂)₄-, -CH=CH-, -CH₂O-, -C₂F₄-, -CH₂CF₂-, -CF₂CH₂-, -CF=CF-, -CH=CF-, -CF=CH-, -CH=CH-, -C=C- or a single bond, and
- p: denotes 0, 1 or 2.

In one embodiment of the invention a liquid crystal medium is preferred, which further comprises one or more compounds selected from the group of the formulae e):
e) IIA, IIB, IIC, IID and IIE, 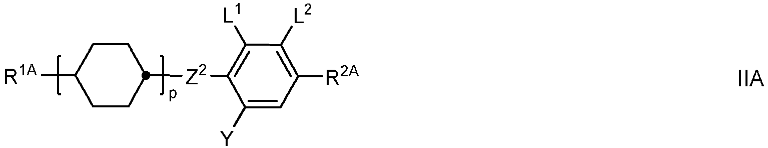 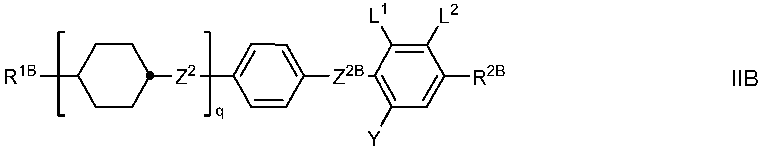 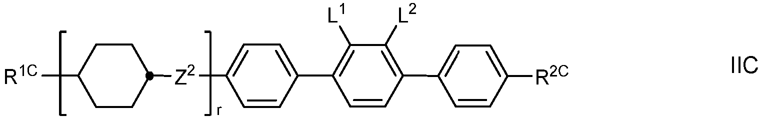 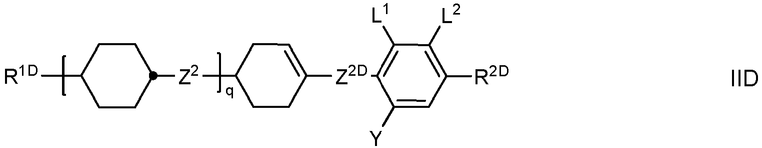 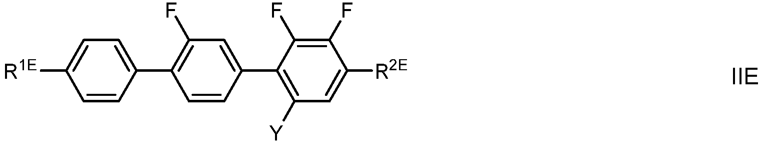 in which
- R^{1A}, R^{1B}, R^{1C} and R^{1D}: each, independently of one another, denote H, an alkyl radical having 1 to 7 C atoms or an alkenyl radical having 2 to 7 C atoms, each of which is unsubstituted, or at least monosubstituted by halogen, where one or more CH₂ groups in these radicals may be replaced by -O-, -S-, 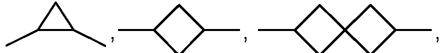 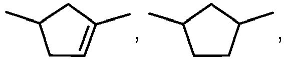 -C=C-, -CF₂O-, -OCF₂-, -OC-O- or -O-COin such a way that O atoms are not linked directly to one another;
- R^{2A}, R^{2B}, R^{2C}, and R^{2D}: each, independently of one another, denote H, an alkyl radical having 1 to 7 C atoms or an alkenyl radical having 2 to 7 C atoms, each of which is unsubstituted, or at least monosubstituted by halogen, where one or more CH₂ groups in these radicals may be replaced by -O-, -S-, 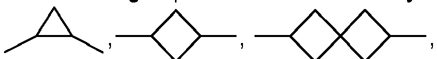 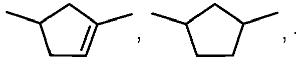 -C=C-, -CF₂O-, -OCF₂-, -OC-O- or -O-COin such a way that O atoms are not linked directly to one another, preferably alkoxy with 1-6, more preferably 2-5 C atoms;
- R^{1E}: denotes H, an alkyl radical having 1 to 7 C atoms or an alkenyl radical having 2 to 7 C atoms, each of which is unsubstituted, or at least monosubstituted by halogen, where one or more CH₂ groups in these radicals may be replaced by -O-, -S-, 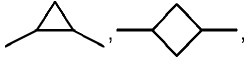 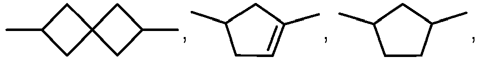 -C≡C-, -CF₂O-, -OCF₂-, -OC-O- or -O-CO- in such a way that O atoms are not linked directly to one another;
- R^{2E}: denotes an alkoxy or alkyl radical having 1 to 7 C atoms or an alkenyl radical having 2 to 7 C atoms, each of which is unsubstituted, or at least monosubstituted by halogen, where one or more CH₂ groups in these radicals may be replaced by 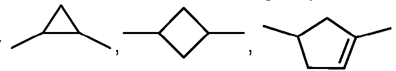 or 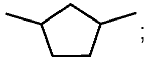
- L¹ and L²: each, independently of one another, denote F, CI, CF₃ or CHF₂;
- Y: denotes H, F, Cl, CF₃, CHF₂ or CH₃;
- Z², Z^{2B} and Z^{2D}: each, independently of one another, denote a single bond, -CH₂CH₂-, -CH=CH-, -CF₂CF₂-, -CF=CF-, -CF₂O-, -OCF₂-, -CH₂O-, -OCH₂-, -COO-, -OCO-
- p: denotes 0, 1 or 2
- q: denotes 0 or 1 and
- v: denotes 1, 2, 3, 4, 5, or 6.

In one embodiment of the invention a liquid crystal medium is preferred, wherein the medium comprises one or more compounds selected from the group of compounds of the formulae T-1 to T-3: 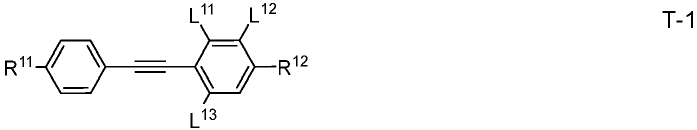 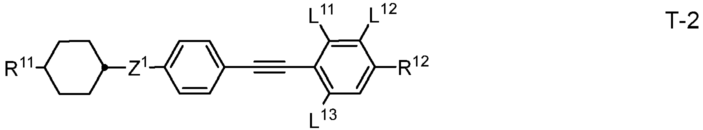 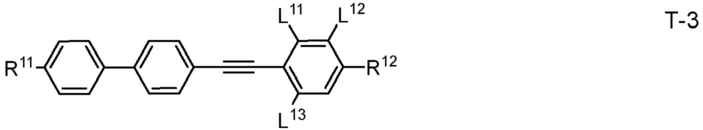 in which R¹¹, R¹² denote alkyl having 1 to 7 C atoms, alkoxy having 1 to 7 C atoms, or alkoxyalkyl, alkenyl or alkenyloxy having 2 to 7 C atoms, where, in addition, one or more CH₂ groups in these radicals may each be replaced, independently of one another by 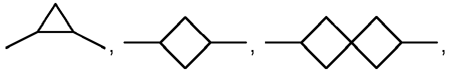 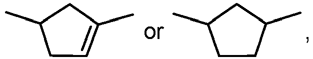
Z¹ is a single bond, -CH₂CH₂-, -CH=CH-, -CFzO-, -OCF₂-, -CHzO-, -OCHz-, -COO-, -OCO-, -C₂F₄-, -CF=CF- or -CH=CHCH₂O-,
L¹¹, L¹² are H, F or CH₃, where L¹¹ and L¹² are not both F,
   and
L¹³ is H or F.

In formulae T-1 and T-2 preferably
R¹¹ is n-alkyl or alkenyl having up to 7 C atoms, most preferably n-alkyl having 1 to 5 C atoms, and
R¹² is n-alkoxy or alkenyloxy having 1 to 6 C atoms, most preferably n-alkoxy having 1 to 4 C atoms,
and in formula T-3 preferably
R¹¹ is n-alkyl or alkenyl having up to 7 C atoms, most preferably n-alkyl having 1 to 5 C atoms, and
R¹² is n-alkyl or alkenyl having up to 7 C atoms, most preferably n-alkyl having up to 5 C atoms.

The liquid-crystal media according to the present invention preferably comprise one or more compounds of formula T-1, preferably selected from the group of compounds of formulae T-1a to T-1c, most preferably of formula T-1a,

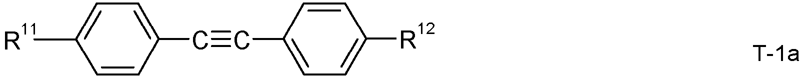

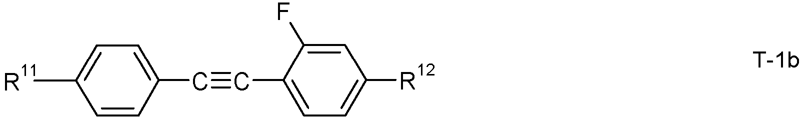

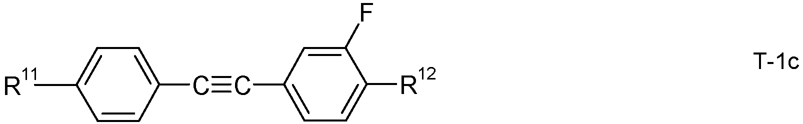

The liquid-crystal media according to the present invention preferably comprise one or more compounds of formula T-2, preferably selected from the group of compounds of formulae T-2a to T-2e, preferably of formula T-2a, 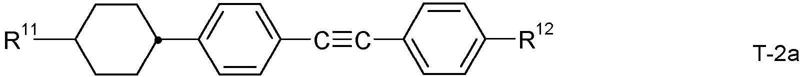 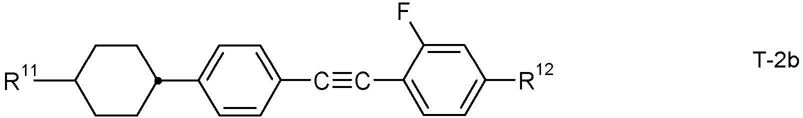 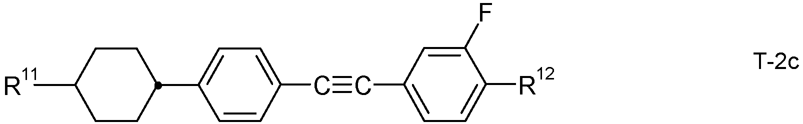 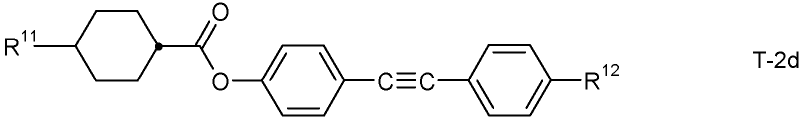 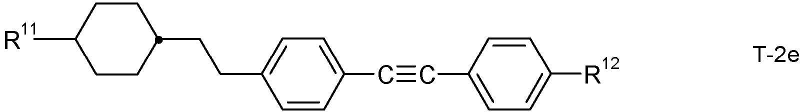 wherein the occurring groups have the respective meanings given above for T-2.

The liquid-crystal media according to the present invention preferably comprise one or more compounds of formula T-3, preferably selected from the group of compounds of formulae T-3a to T-3c, preferably of formulae T-3a and/or T-3c, most preferably of formula T-3c, 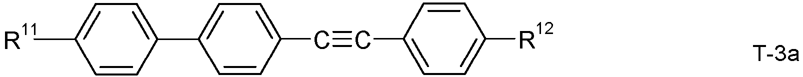 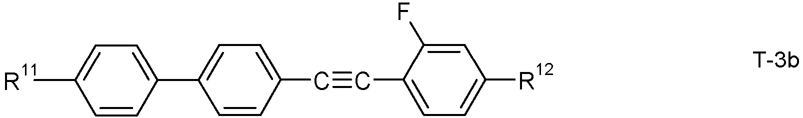 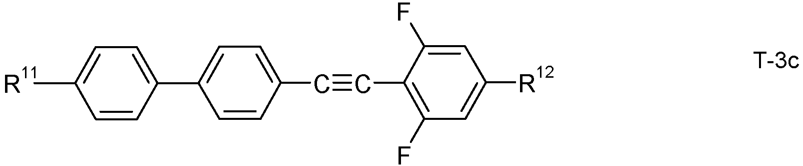 wherein the occurring groups have the respective meanings given above for T-3.

In a preferred embodiment of the invention a liquid crystal medium comprises one or more compounds selected from the group of compounds of the formulae I-1 to I-3: 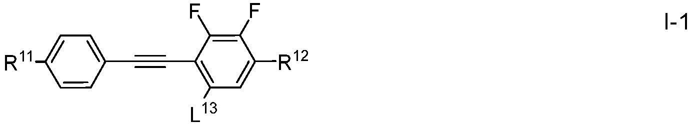 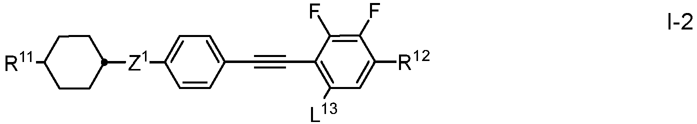 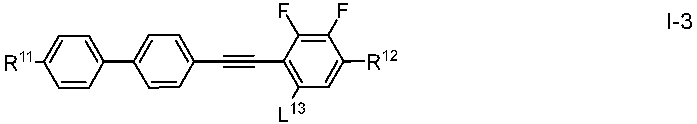 in which R¹¹, R¹² denote alkyl having 1 to 7 C atoms, alkoxy having 1 to 7 C atoms, or alkoxyalkyl, alkenyl or alkenyloxy having 2 to 7 C atoms, where, in addition, one or more CH₂ groups in these radicals may each be replaced, independently of one another by 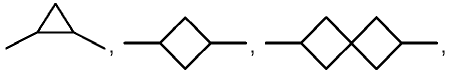 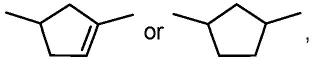
Z¹ is a single bond, -CH₂CH₂-, -CH=CH-, -CF₂O-, -OCF₂-, -CH₂O-, -OCH₂-, -COO-, -OCO-, -C₂F₄-, -CF=CF- or -CH=CHCH₂O-, preferably a single bond,
   and
L¹³ H is or F.

Preferred compounds of the formulae IIA, IIB, IIC, IID and IIE are indicated below: 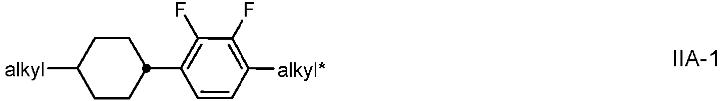 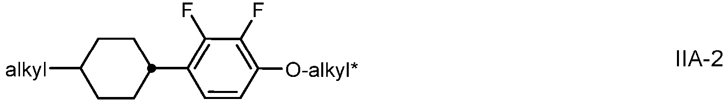 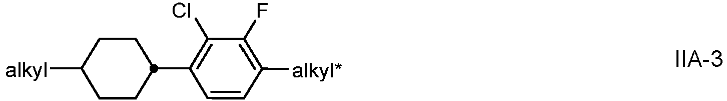 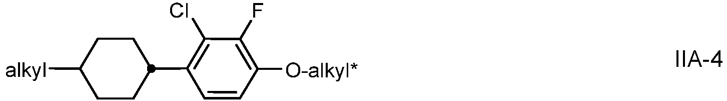 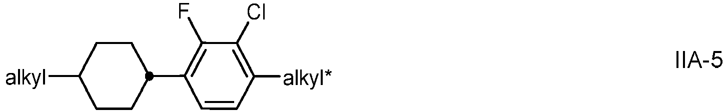 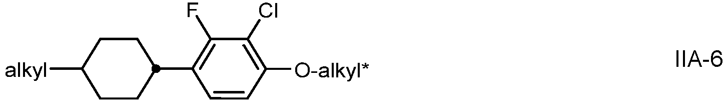 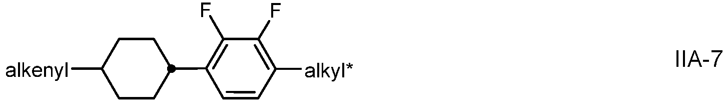 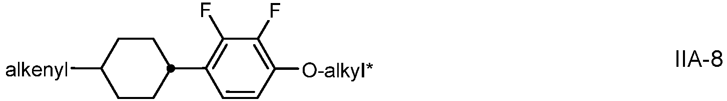 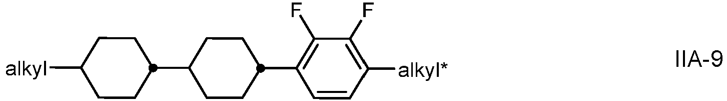 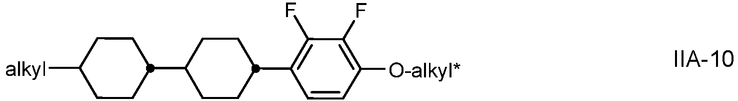 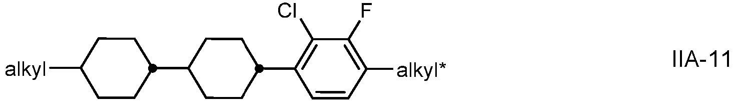 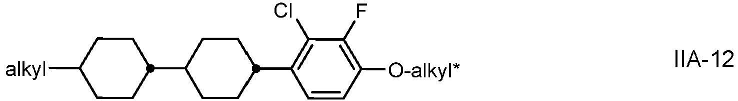 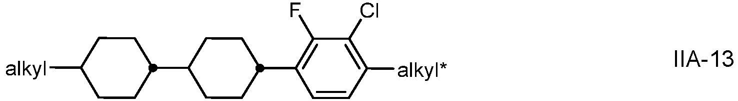 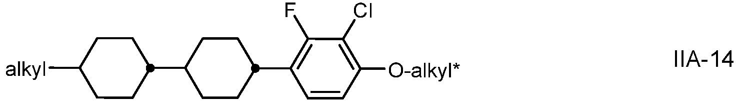 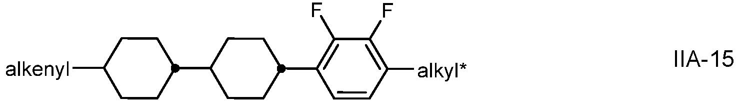 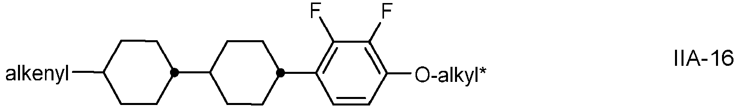 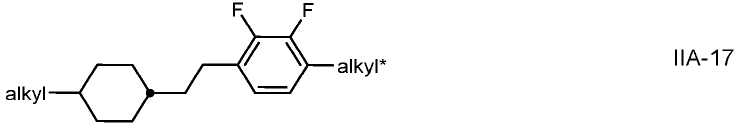 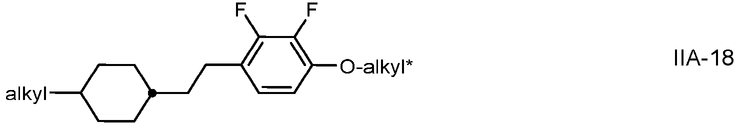 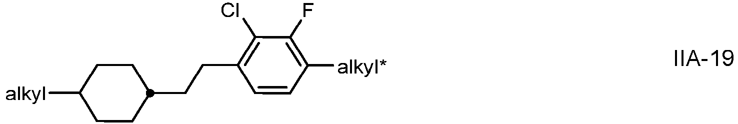 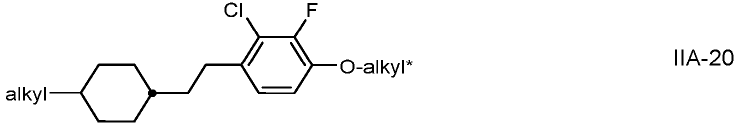 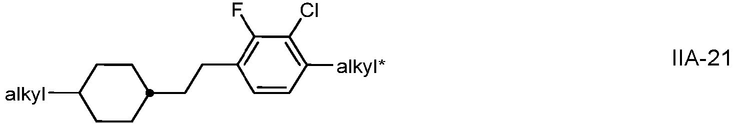 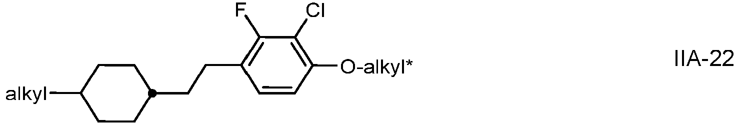 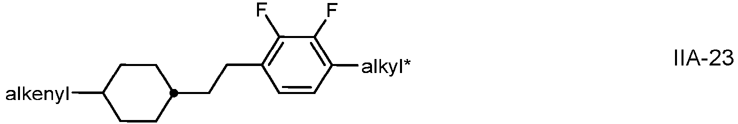 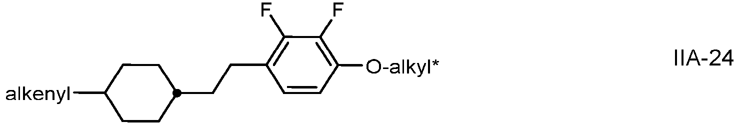 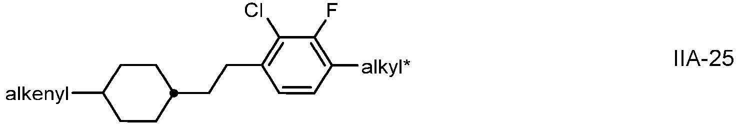 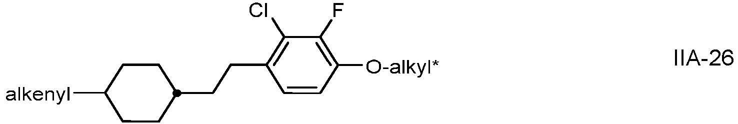 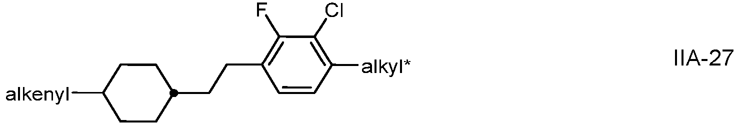 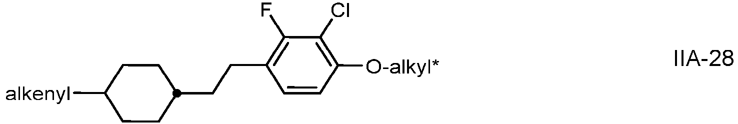 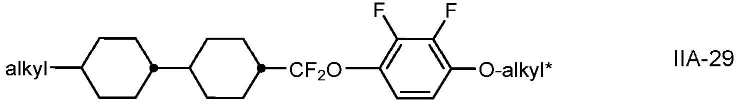 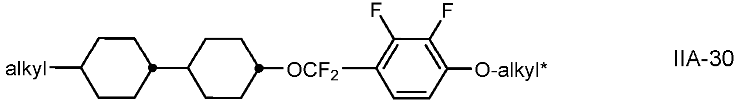 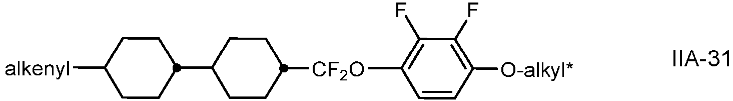 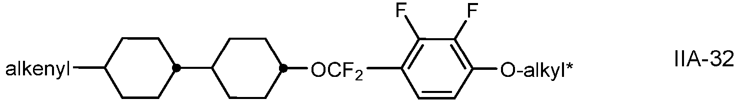 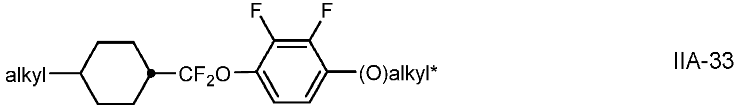 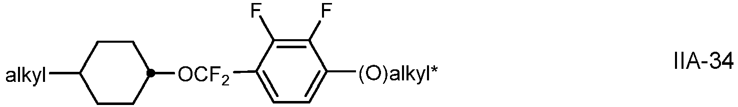 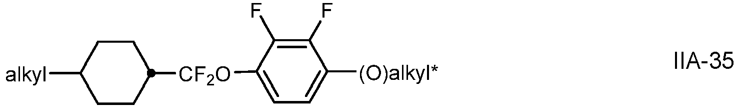 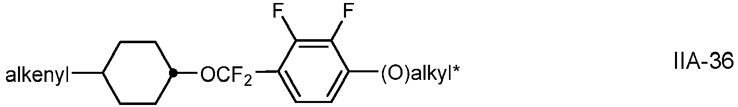 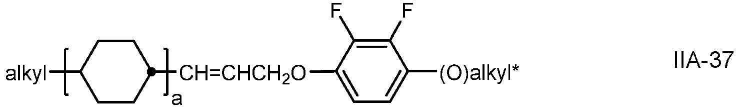 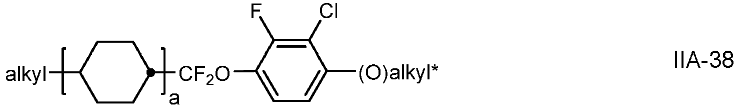 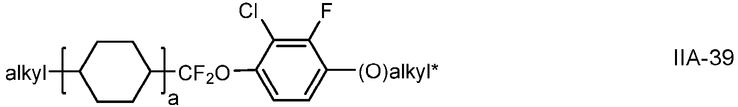 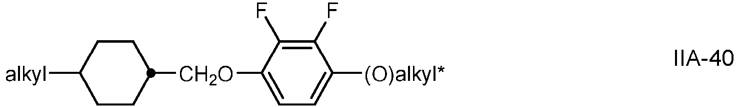 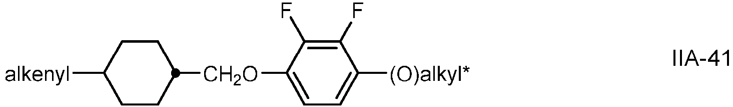 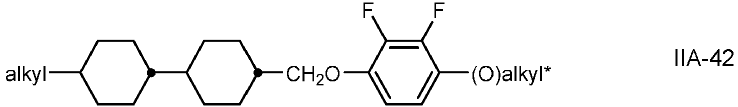 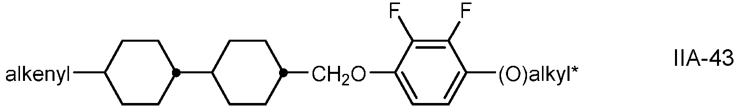 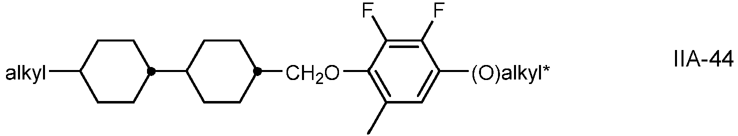 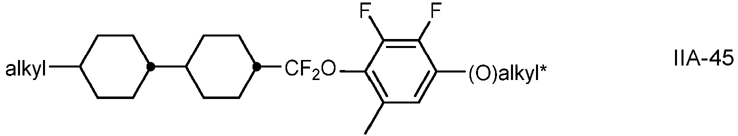 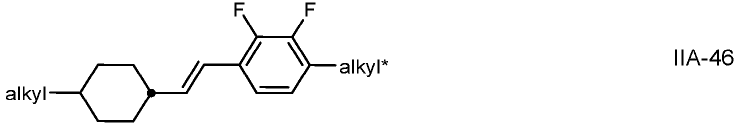 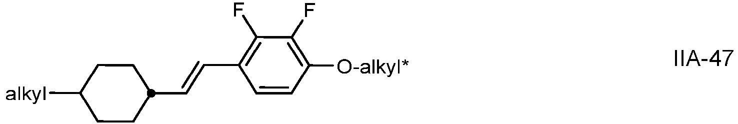 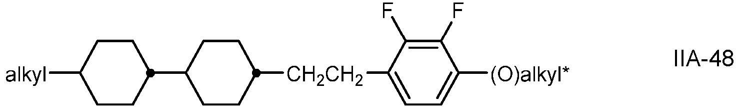 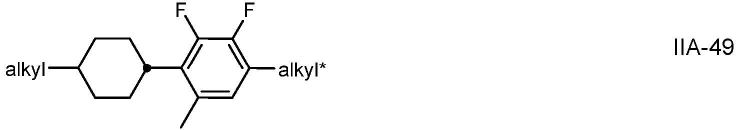 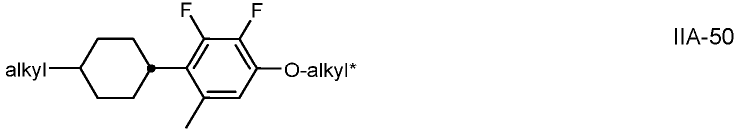 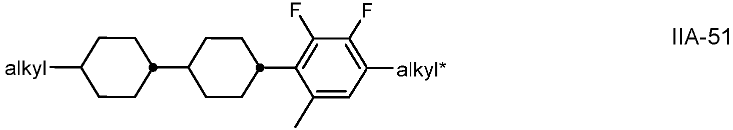 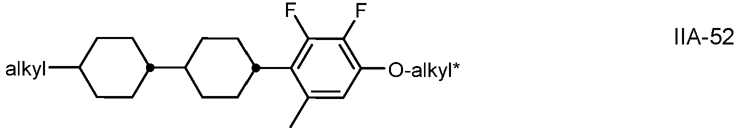 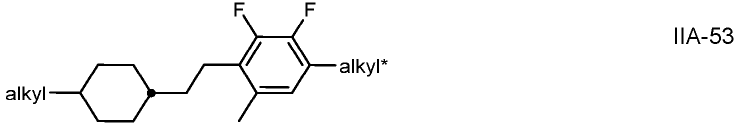 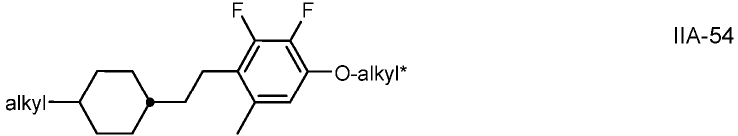 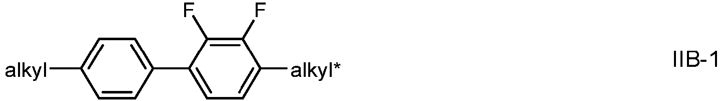 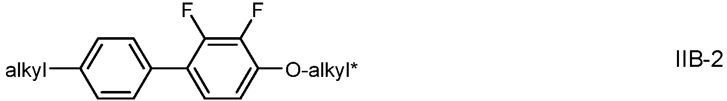 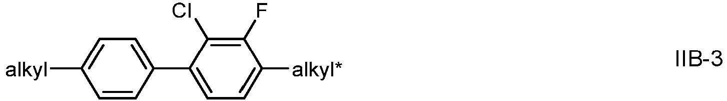 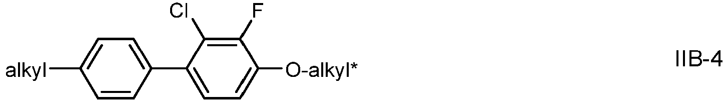 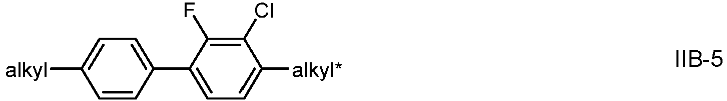 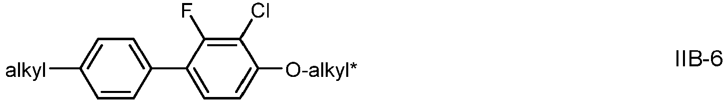 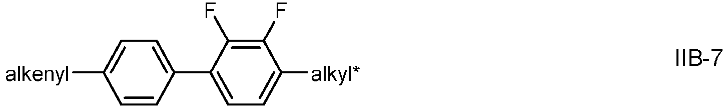 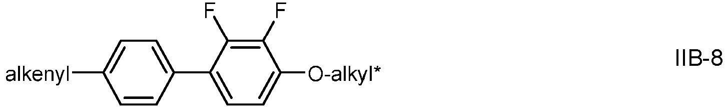 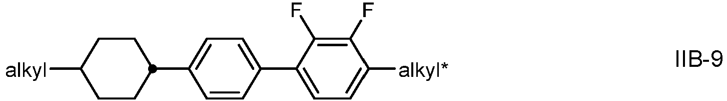 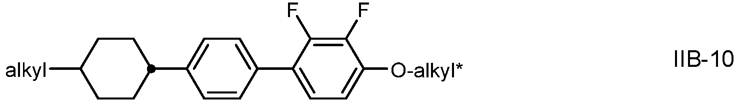 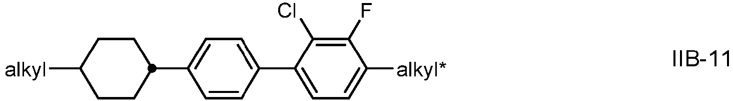 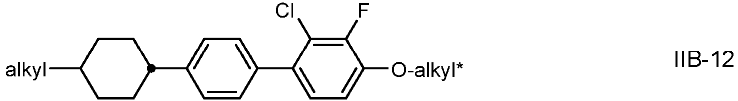 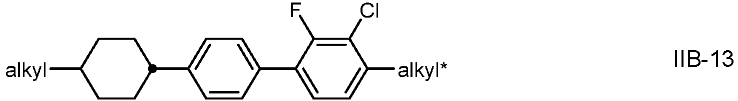 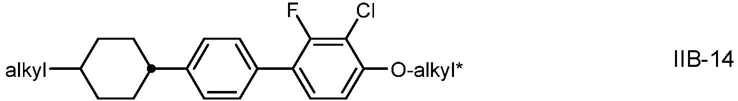 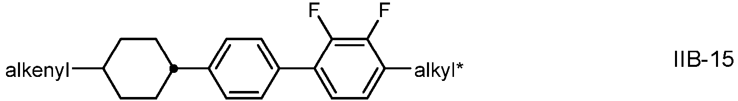 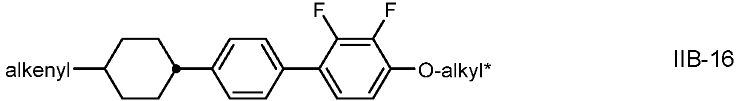 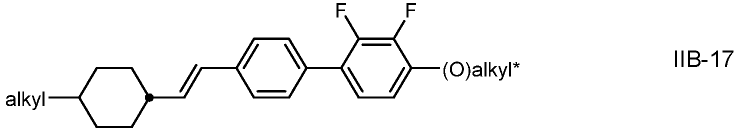 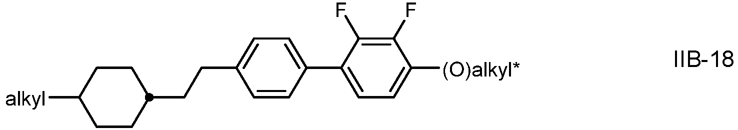 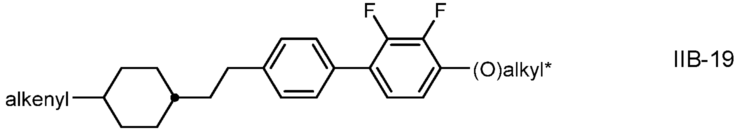 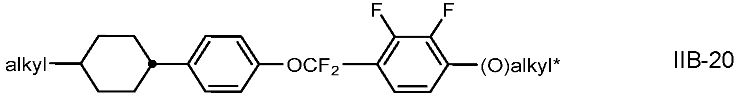 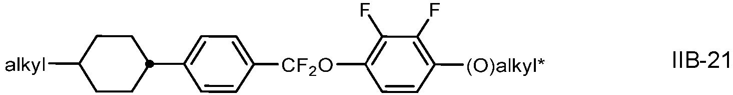 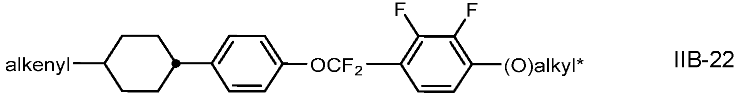 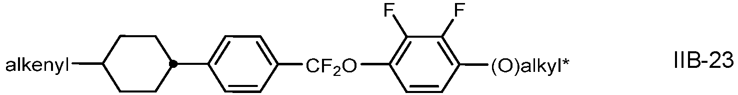 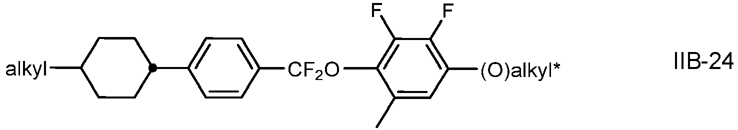 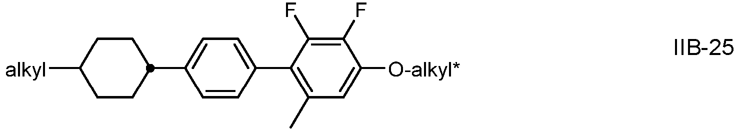 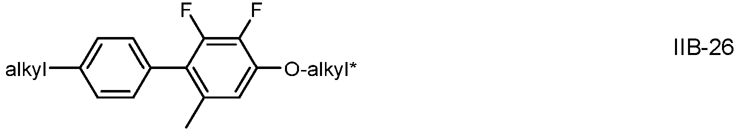 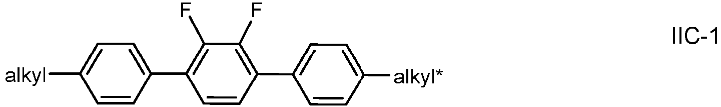 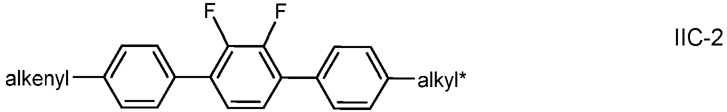 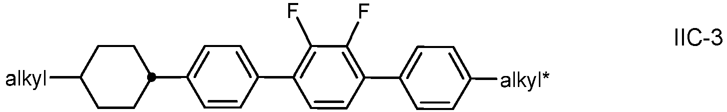 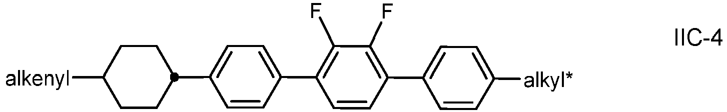 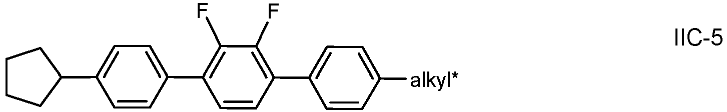 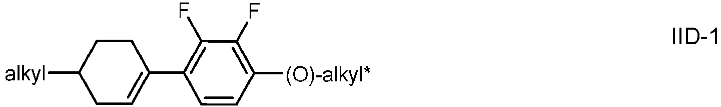 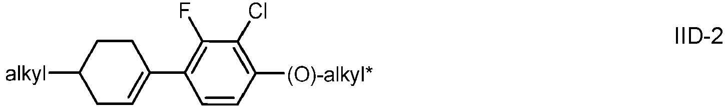 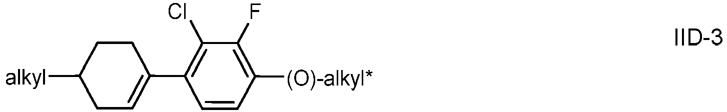 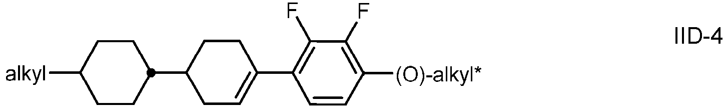 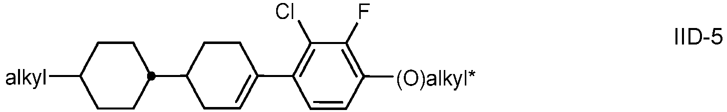 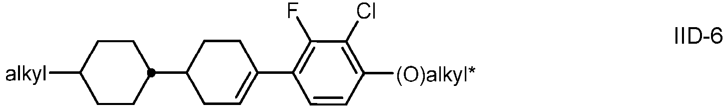 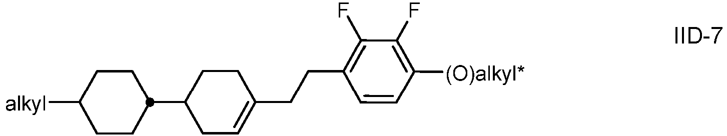 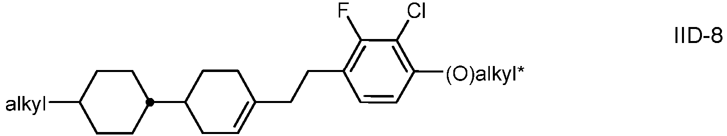 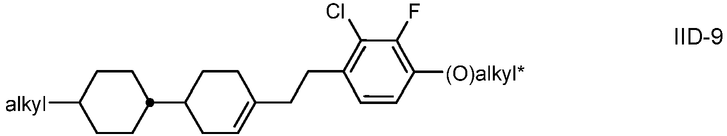 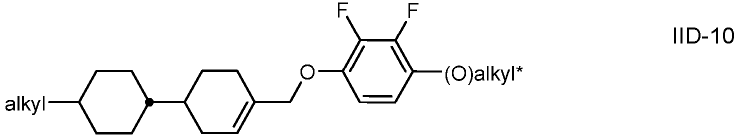 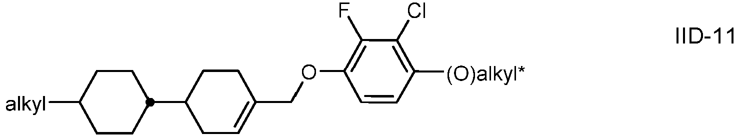 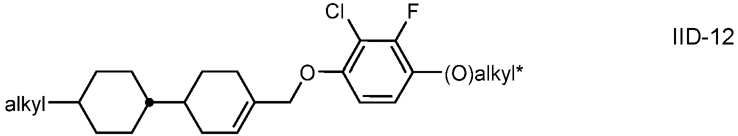 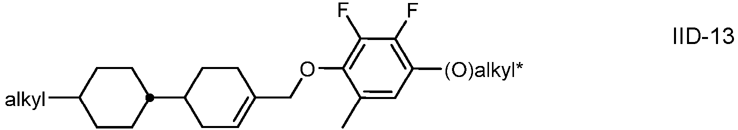 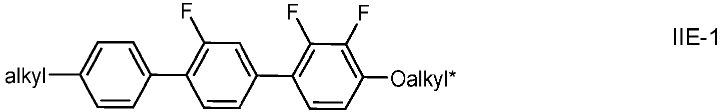 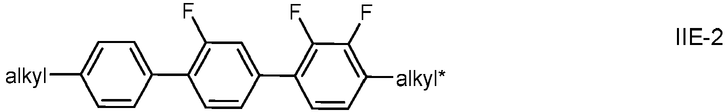 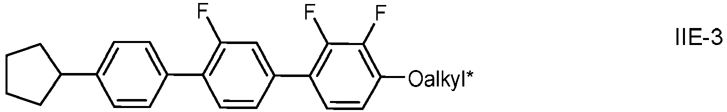 in which the parameter a denotes 1 or 2, alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond, preferably an oxygen atom. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferred compounds of the formula IID are selected from the following sub-formulae: 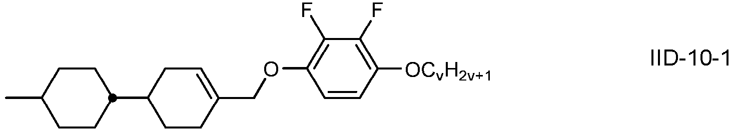 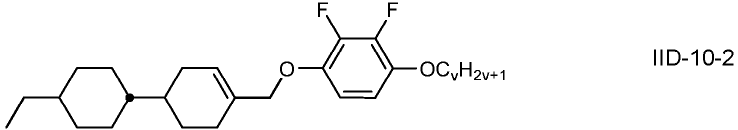 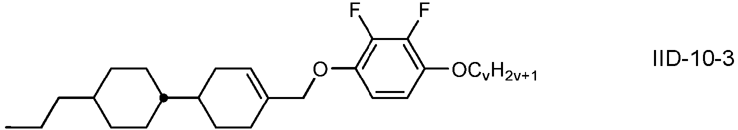 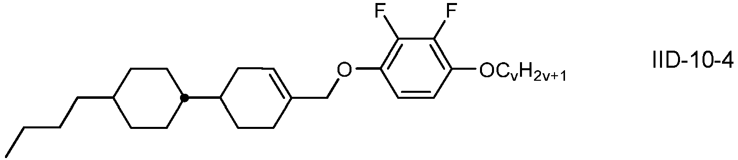 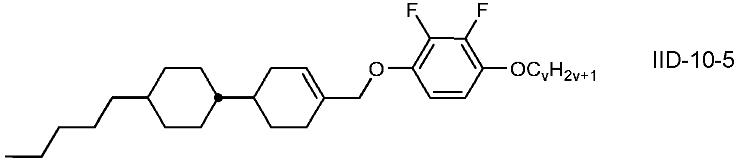 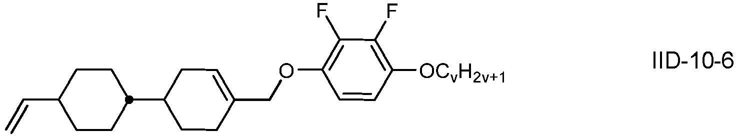 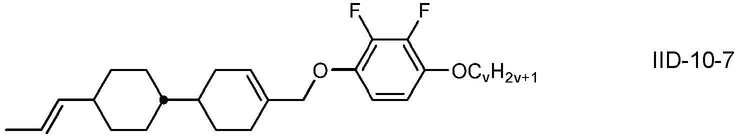 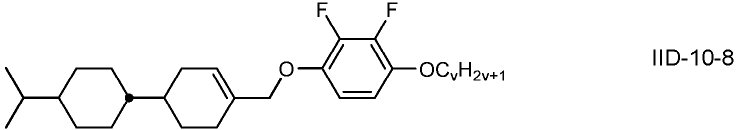 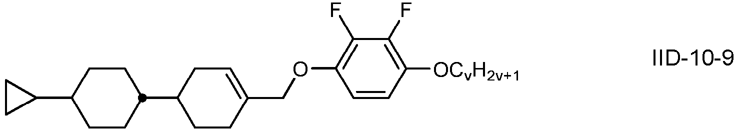 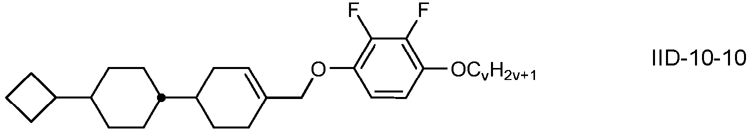 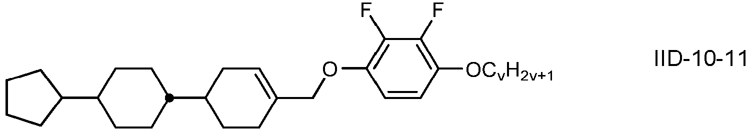 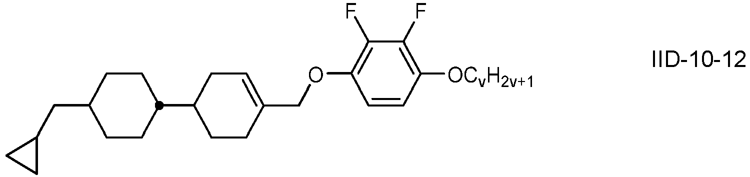 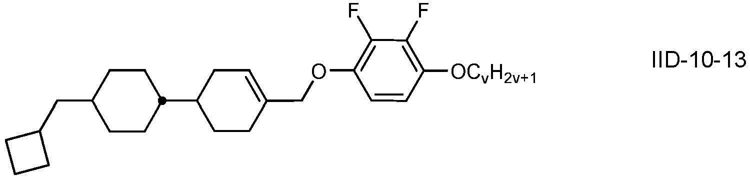 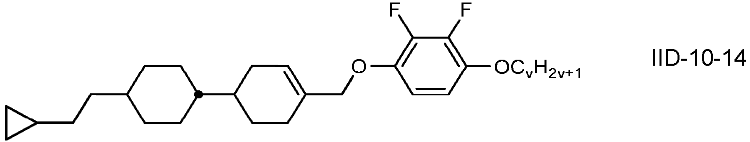 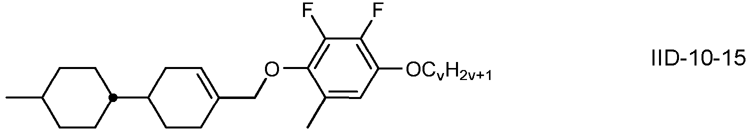 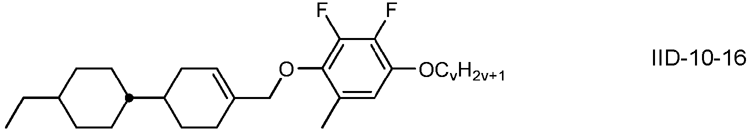 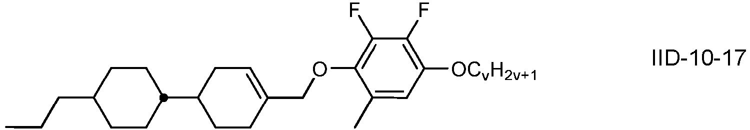 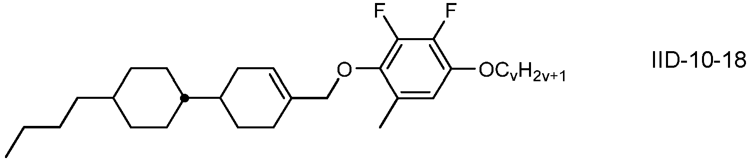 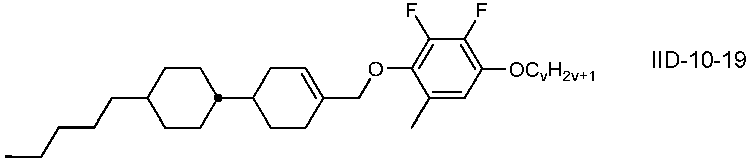 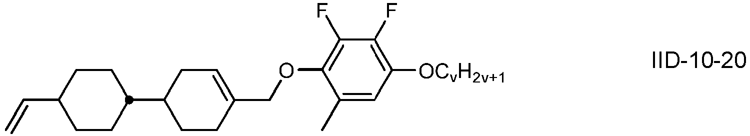 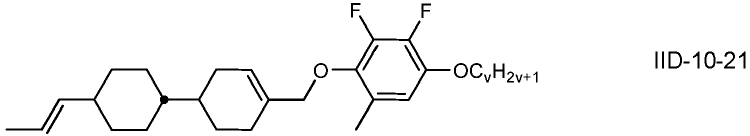 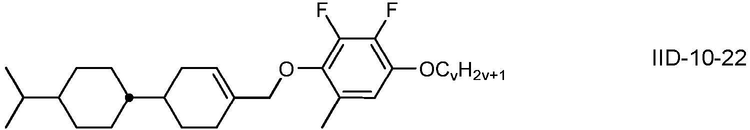 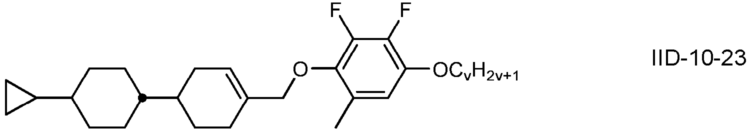 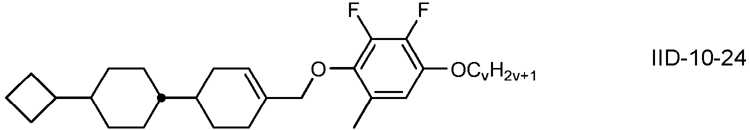 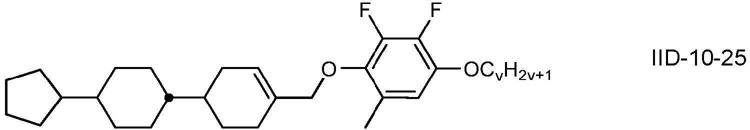 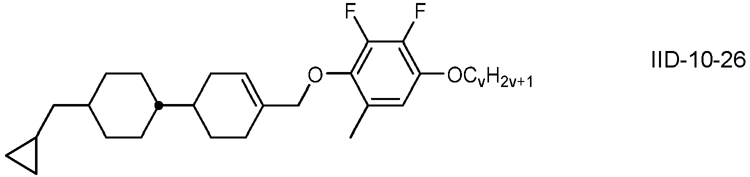 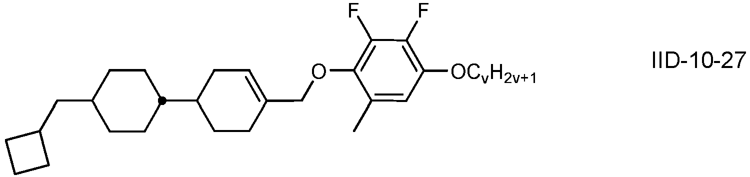 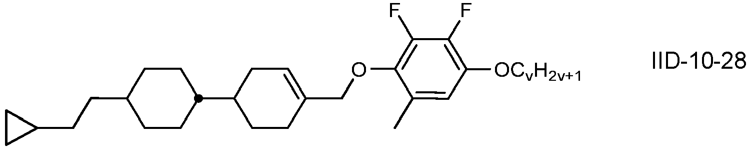 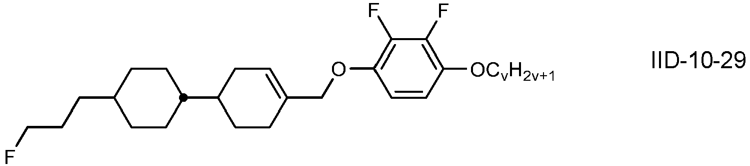 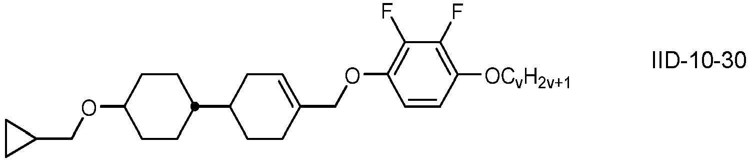 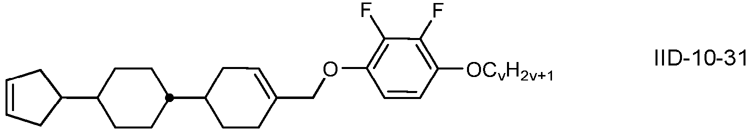 wherein v denotes 1, 2, 3, 4, 5 or 6.

In a preferred embodiment, the medium comprises one or more compounds of formula IID-10a 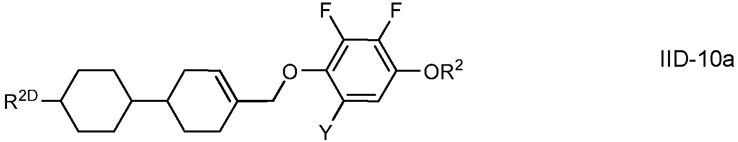 in which the occurring groups and parameters have the meanings given above under formula IID, and preferably
R^{2D} denotes 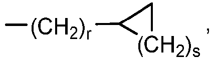
in which r is 0, 1, 2, 3, 4, 5 or 6, and s is 1, 2 or 3.

In a preferred embodiment, the medium comprises one or more compounds of formula IIE as follows 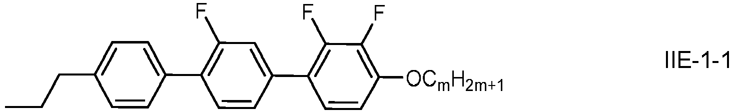 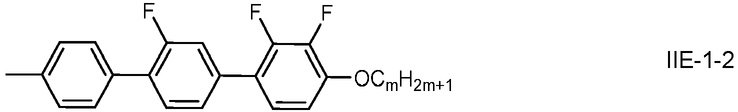 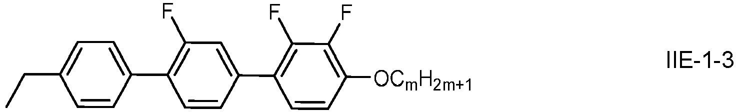 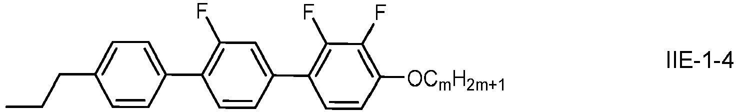 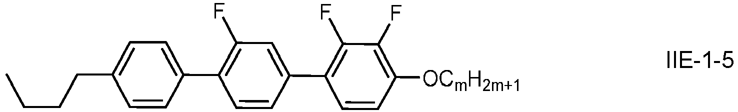 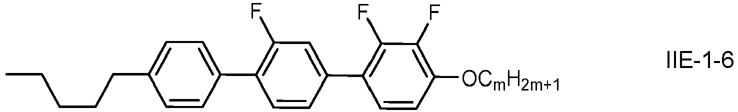 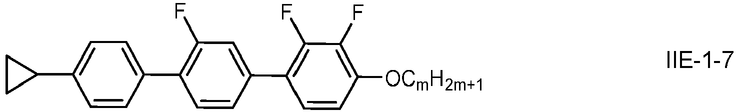 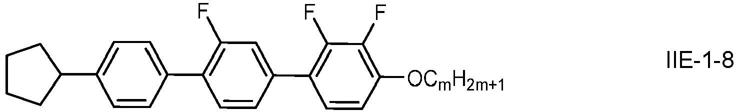 in which
m is 1, 2, 3, or 4, preferably 2 or 4.

More preferred media according to the invention comprise one or more compounds of the formulae IIA-2, IIA-8, IIA-10, IIA-16, IIA-18, IIA-40, IIA-41, IIA-42, IIA-43, IIB-2, IIB-10, IIB-16, IIC-1, IIC-3, IID-4, IID-10 and IIE-1.

Very preferred media according to the invention comprise one or more compounds of formula IIB-2 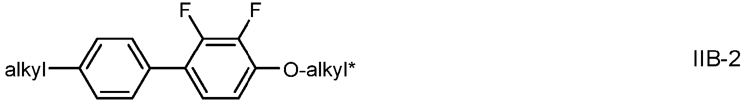 in which alkyl and alkyl* each, independently of one another, denote a straight-chain alkyl radical having 1-6 C atoms, and (O) denotes an oxygen atom or a single bond, in particular the compounds IIB-2-1 and IIB-2-2:

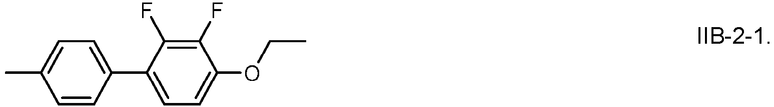

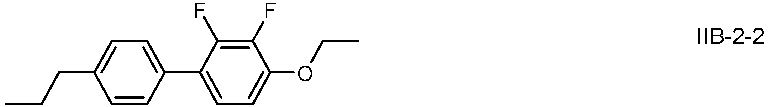

Preferred media according to the invention comprise at least one compound of the formula IIC-1, 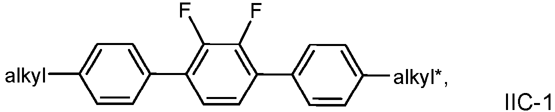 in which alkyl and alkyl* have the meanings indicated above, preferably in amounts of 0.5 % to 5 % by weight, in particular 1 % to 3 % by weight.

In particular, the medium comprises one or more compounds of the formula IIA-2 selected from the following sub-formulae:

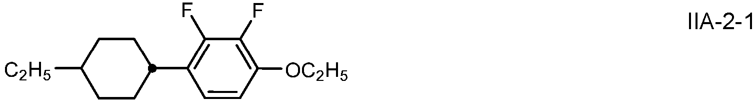

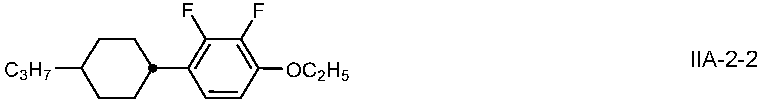

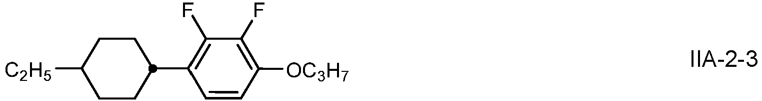

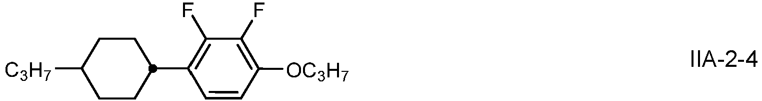

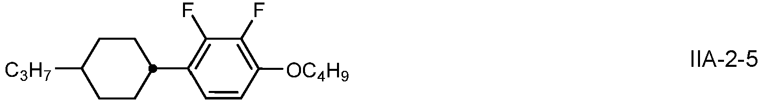

Alternatively, preferably in addition to the compounds of the formulae IIA-2-1 to IIA-2-5, the medium comprises one or more compounds of the formulae IIA-2a-1 to IIA-2a-5:

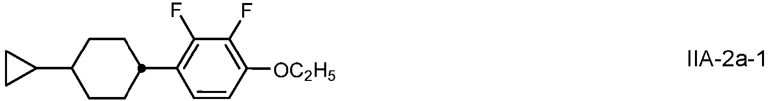

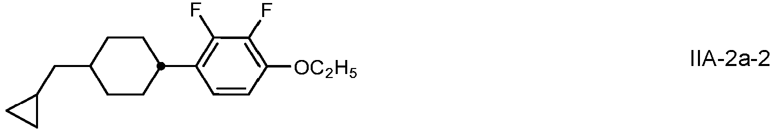

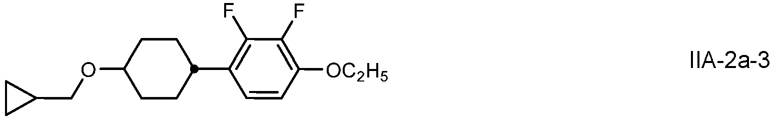

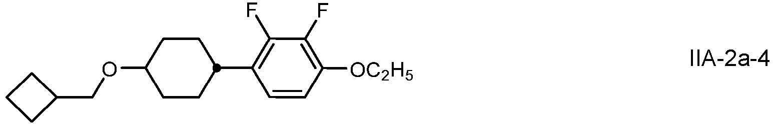

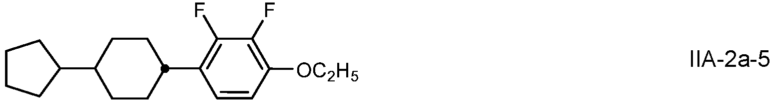

In particular, the medium comprises one or more compounds of the formula IIB-10 selected from the following sub-formulae:

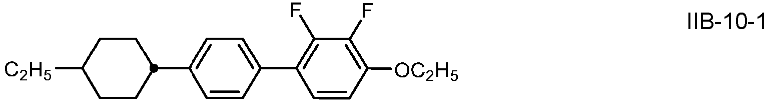

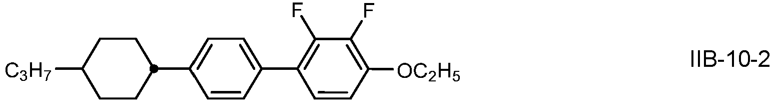

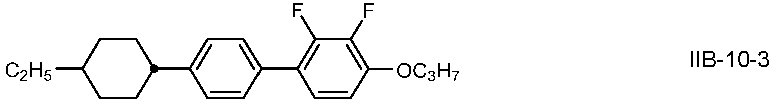

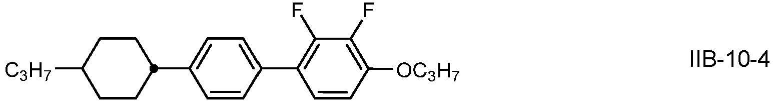

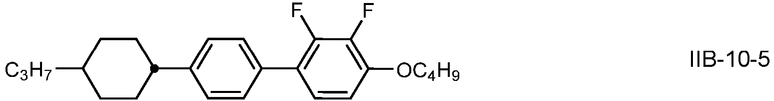

Alternatively, preferably in addition to the compounds of the formulae IIB-10-1 to IIB-10-5, the medium comprises one or more compounds of the formulae IIB-10a-1 to IIB-10a-5:

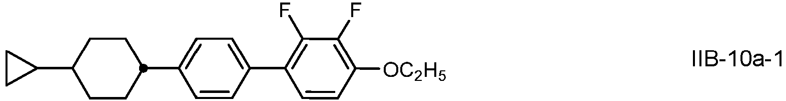

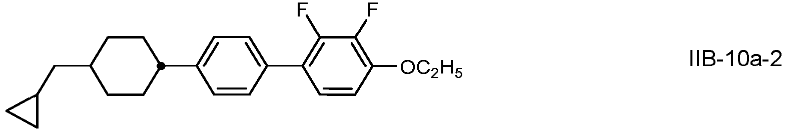

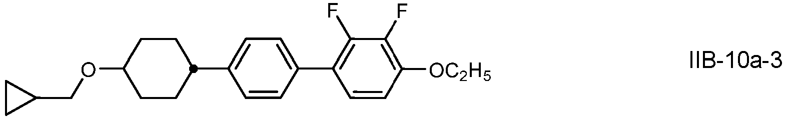

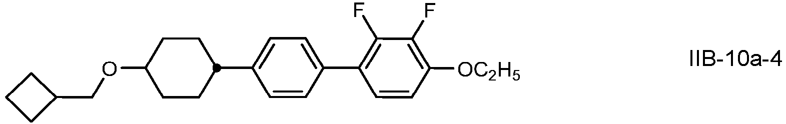

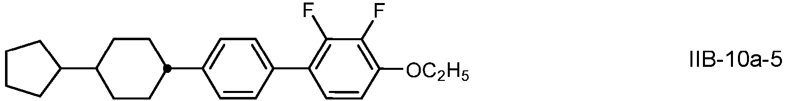

Very preferably, the medium according to the invention comprises one or more compounds of formula IIE, in particular the compounds of the formula IIE-1-1 to IIE-1-8, and most preferably one or more of the compounds of formulaa IIE-1-1-1 to IIE-1-1-4:

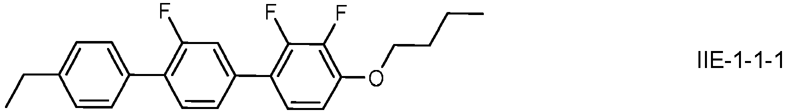

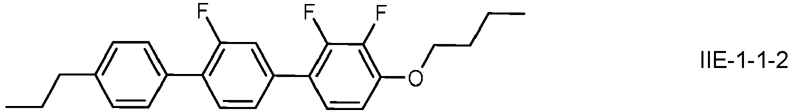

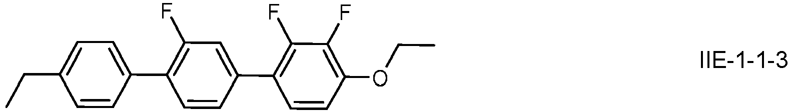

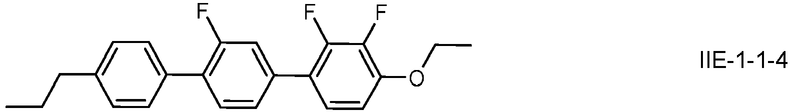

The compounds of formula III are preferably selected from the compounds of the formula III-1 III-2 and/or III-4 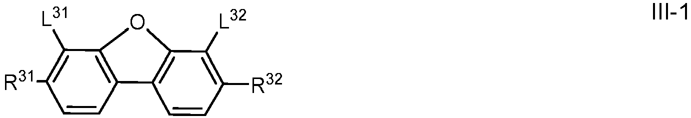 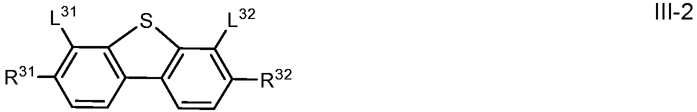 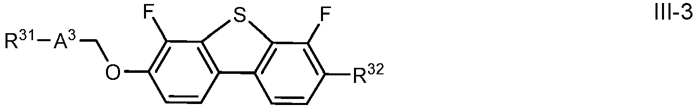 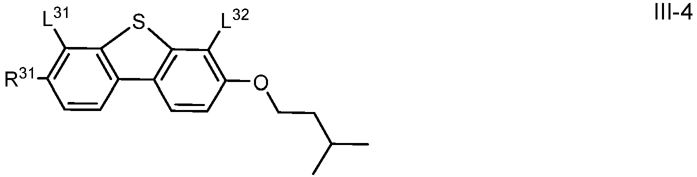 in which the occurring groups have the same meanings as given under formula III above and preferably
R³¹ and R³² each, independently of one another, denote an alkyl or alkoxy radical having 1 to 15 C atoms or an alkenyl radical having 2 to 15 C atoms, more preferably one or both of them denote an alkoxy radical having 1 to 7 C atoms,
   and
L³¹ and L³² preferably denote F.

The liquid crystal medium according to the invention preferably comprises one, two or more compounds of formula !!!-2. In a preferred embodiment the liquid crystal medium contains at least one compound of formula !!!-1 and at least one compound of formula III-2. In a further preferred embodiment the liquid crystal medium contains at least one compound of formula III-2 and at least one compound of the formula III-3.

Preferably, the compounds of the formula !!!-1 selected from the group of compounds of formulae III-1-1 to !!!-1-10, preferably of formula !!!-1-6, 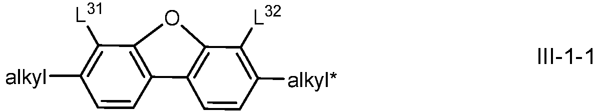 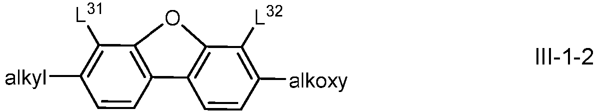 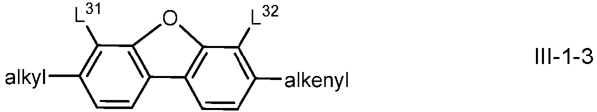 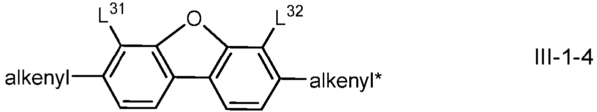 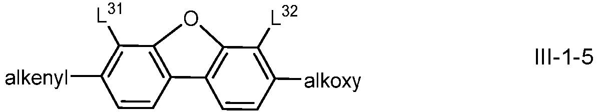 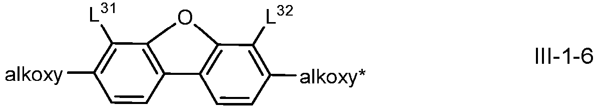 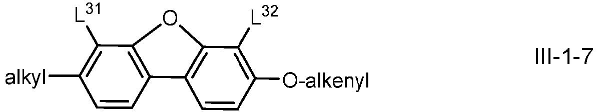 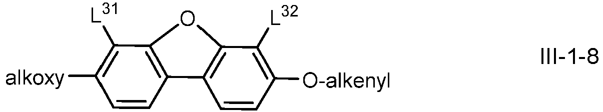 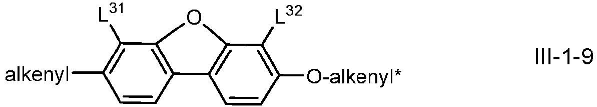 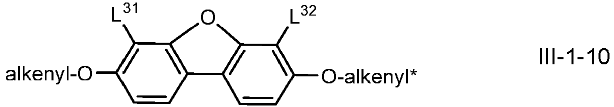 in which
alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and L³¹ and L³² each, independently of one another, denote F or CI, preferably both F.

Preferably, the compounds of the formula III-2 are selected from the group of compounds of formulae III-2-1 to !!!-2-10, preferably of formula III-2-6, 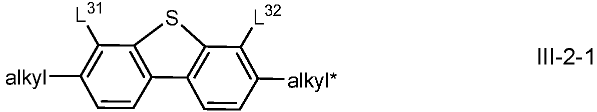 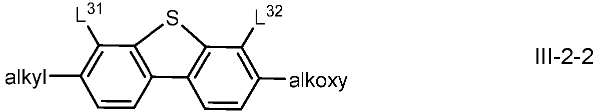 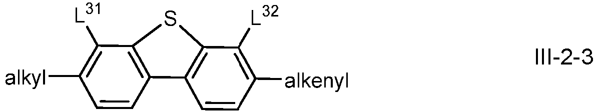 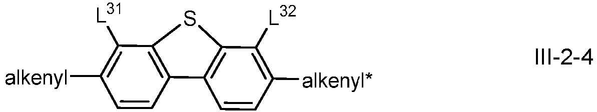 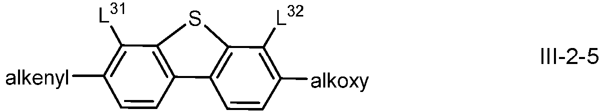 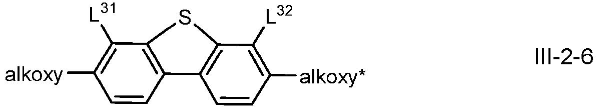 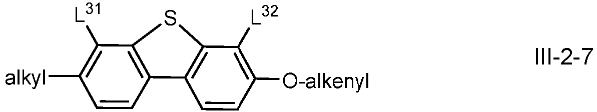 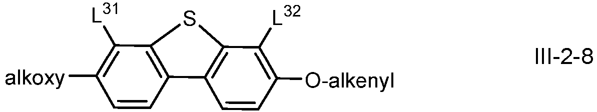 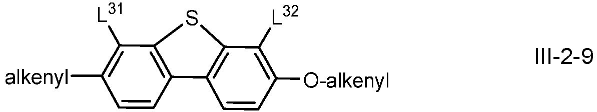 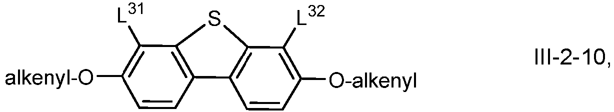 in which
alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and L³¹ and L³² each, independently of one another, denote F or CI, preferably both F.

Optionally the medium comprises one or more compounds of the formula IIIA-1 and/or IIIA-2 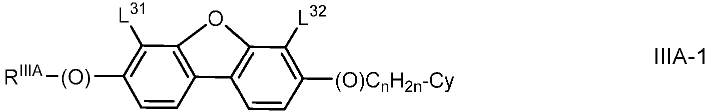 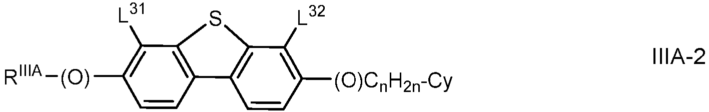 in which L³¹ and L³² have the same meanings as given under formula III, (O) denotes O or a single bond,
R^{IIIA} denotes alkyl or alkenyl having up to 7 C atoms or a group Cy-CₘH₂ₘ₊₁,
m and n are, identically or differently, 0, 1, 2, 3, 4, 5 or 6, preferably 1, 2 or 3, very preferably 1,
Cy denotes a cycloaliphatic group having 3, 4 or 5 ring atoms, which is optionally substituted with alkyl or alkenyl each having up to 3 C atoms, or with halogen or CN, and preferably denotes cyclopropyl, cyclobutyl, cyclopentyl or cyclopentenyl.

The compounds of formula IIIA-1 and/or IIIA-2 are contained in the medium either alternatively or in addition to the compounds of formula III, preferably additionally.

Very preferred compounds of the formulae IIIA-1 and IIIA-2 are the following: 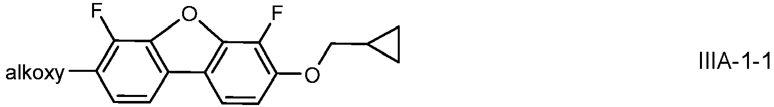 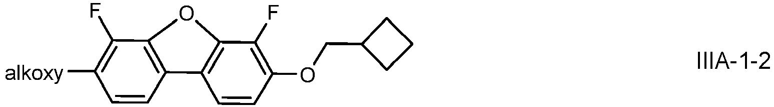 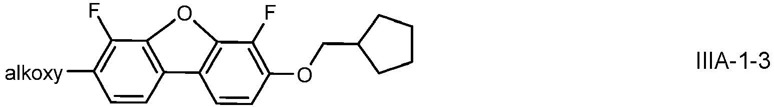 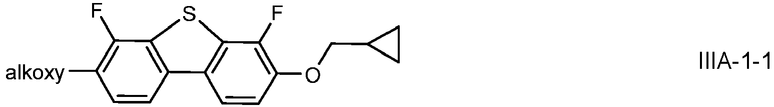 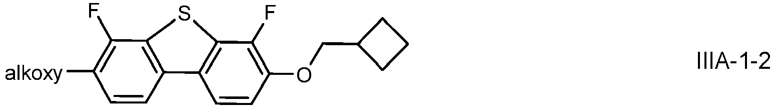 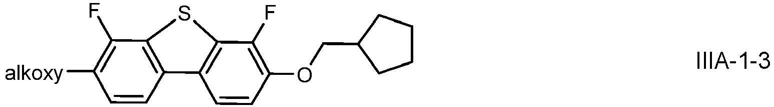 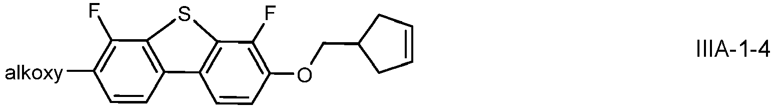 in which alkoxy denotes a straight-chain alkoxy radical having 1-6 C atoms or alternatively -(CH₂)ₙF in which n is 2, 3, 4, or 5, preferably C₂H₄F.

In a preferred embodiment of the present invention, the medium comprises one or more compounds of formula III-3 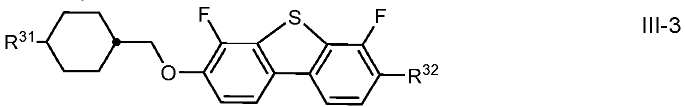 in which
R³¹, R³² identically or differently, denote H, an alkyl or alkoxy radical having 1 to 15 C atoms, in which one or more CH₂ groups in these radicals are optionally replaced, independently of one another, by -C≡C-, -CFzO-, -OCF₂-, -CH=CH-, 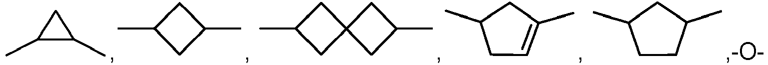 , -CO-O- or -O-CO- in such a way that O atoms are not linked directly to one another, and in which, in addition, one or more H atoms may be replaced by halogen.

The compounds of formula III-3 are preferably selected from the group of compounds of the formulae III-3-1 to III-3-10: 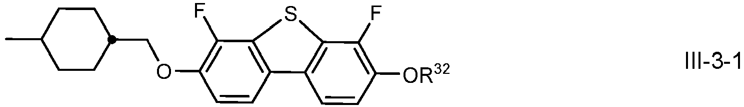 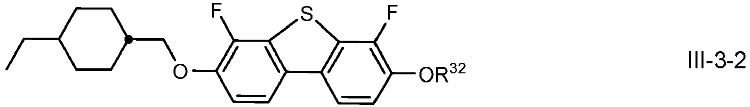 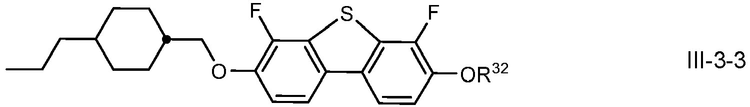 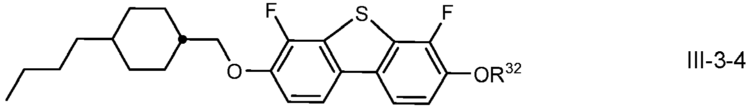 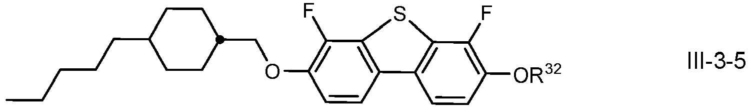 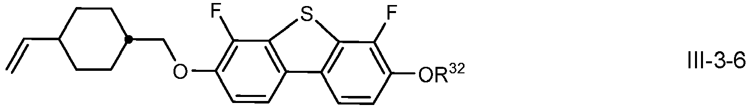 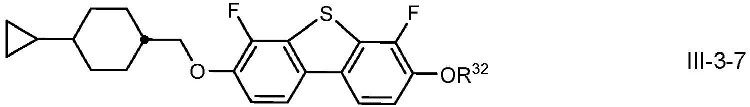 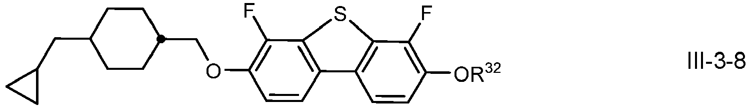 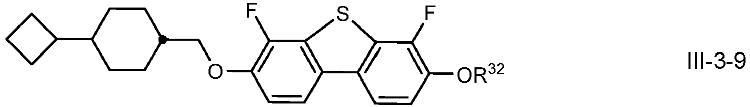 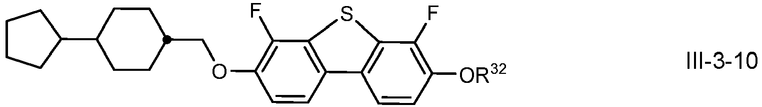 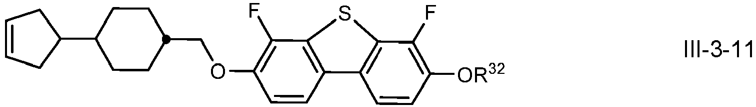 in which R³² denotes alkyl having 1 to 7 C-atoms, preferably ethyl, n-propyl or n-butyl, or alternatively cyclopropylmethyl, cyclobutylmethyl or cyclopentylmethyl or alternatively -(CH₂)ₙF in which n is 2,3,4, or 5, preferably C₂H₄F.

In a preferred embodiment of the present invention, the medium comprises one or more compounds of the formulae III-4 to III-6, preferably of formula III-5, 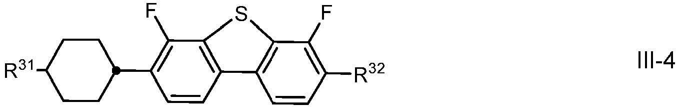 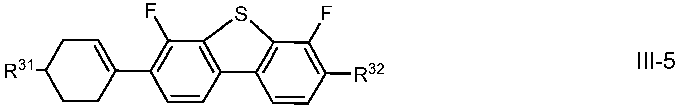 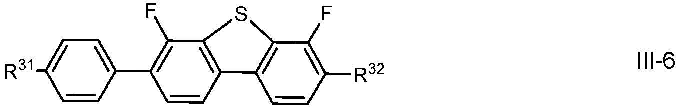 in which the parameters have the meanings given above, R³¹ preferably denotes straight-chain alkyl having 1 to 7 C atoms and R³² preferably denotes alkoxy having 1 to 7 C atoms.

In a preferred embodiment the media according to the invention comprise one or more compounds of the formula III selected from the group of compounds of formulae III-7 to III-9, preferably of formula III-8, 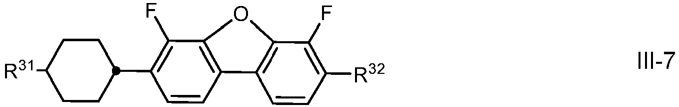 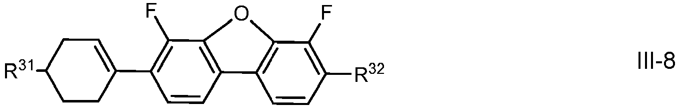 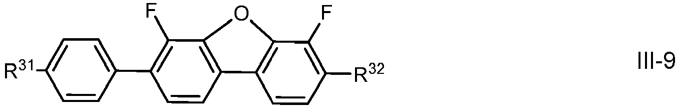 in which the parameters have the meanings given above, R³¹ preferably denotes straight-chain alkyl having 1 to 7 C atoms and R³² preferably denotes alkoxy having 1 to 7 C atoms.

In a preferred embodiment, the medium comprises one or more compounds of the formula IV, 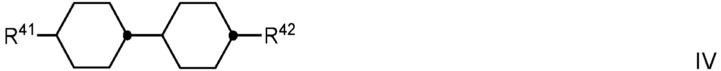 in which
- R⁴¹: denotes an unsubstituted alkyl radical having 1 to 7 C atoms or an unsubstituted alkenyl radical having 2 to 7 C atoms, preferably an n-alkyl radical, particularly preferably having 2, 3, 4 or 5 C atoms, and
- R⁴²: denotes an unsubstituted alkyl radical having 1 to 7 C atoms or an unsubstituted alkoxy radical having 1 to 6 C atoms, both preferably having 2 to 5 C atoms, an unsubstituted alkenyl radical having 2 to 7 C atoms, preferably having 2, 3 or 4 C atoms, more preferably a vinyl radical or a 1-propenyl radical and in particular a vinyl radical,
where the compounds of formula I are excluded from formula IV and its sub-formulae.

The compounds of the formula IV are preferably selected from the group of the compounds of the formulae IV-1 to IV-4, 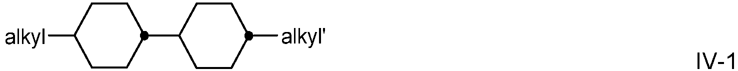 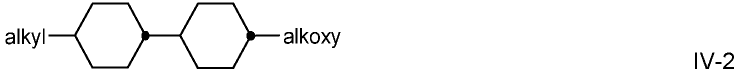 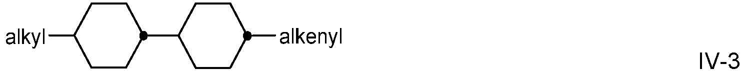 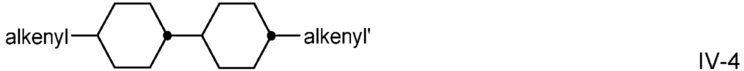 in which
alkyl and alkyl', independently of one another, denote alkyl having 1 to 7 C atoms, preferably having 2 to 5 C atoms,
alkenyl denotes an alkenyl radical having 2 to 5 C atoms, preferably having 2 to 4 C atoms, particularly preferably 2 C atoms,
alkenyl' denotes an alkenyl radical having 2 to 5 C atoms, preferably having 2 to 4 C atoms, particularly preferably having 2 to 3 C atoms, and
alkoxy denotes alkoxy having 1 to 5 C atoms, preferably having 2 to 4 C atoms. Preferably one or more compounds of formula IV are selected from formulae IV-1, IV-2 and IV-3, and more preferably of compounds of formula IV-2,
more preferably IV-2 alone or in combination with any of IV-1 and IV-3, most preferably in combination with IV-3.

Preferably the medium contains in addition to the compounds of formula IV-2 one or more compounds selected from the compounds of the formulae IV-1, IV-3 and IV-4.

Preferably, the medium comprises one or more compounds selected from the compounds of the formulae IV-1-1 to IV-1-4

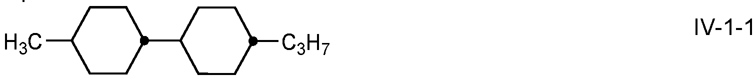

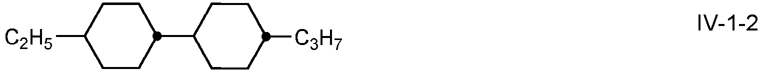

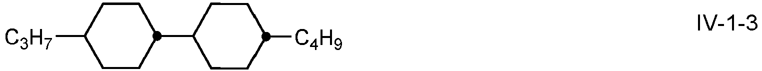

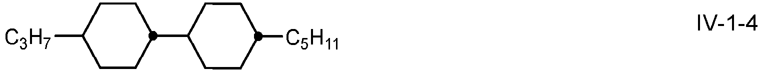

Very preferably, the medium according to the invention comprises the compound of formula IV-1-1.

Very preferably, the medium according to the invention comprises one or more compounds of the formulae IV-1-1 to IV-1-6

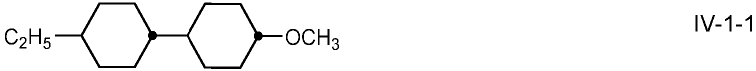

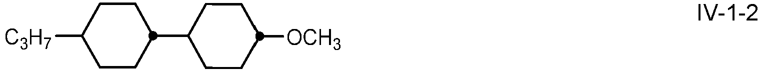

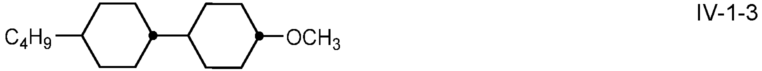

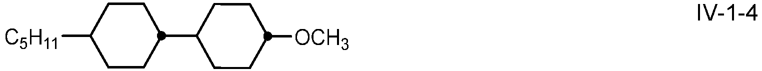

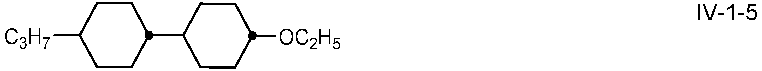

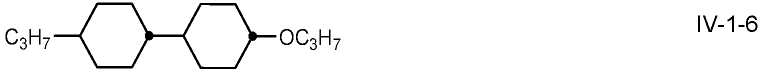

In a preferred embodiment, the medium according to the invention comprises one or more compounds of formula IV-3, 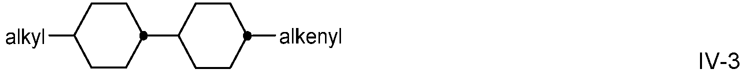 in which very preferably alkyl denotes an alkyl radical having 1 to 7 C atoms, in particular n-ethyl or n-propyl, very particularly n-propyl, and alkenyl denotes 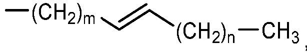 in which m is 0, 1 or 2, preferably 0, and n is 0, 1 or 2, preferably 0 or 1,

in particular selected from the compounds of the formulae IV-3-1 to IV-3-6, very particularly preferably of the formula IV-3-2:

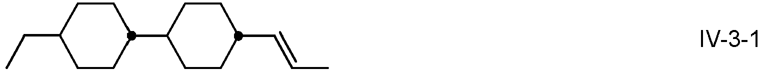

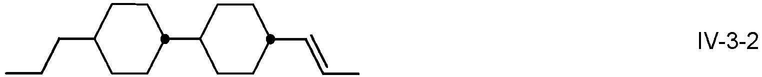

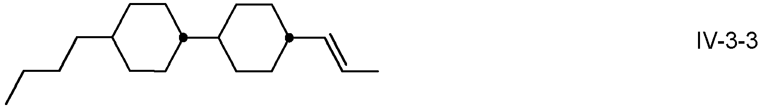

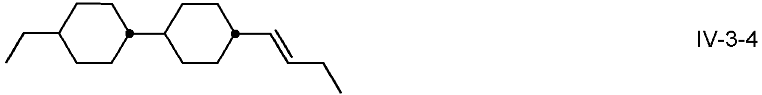

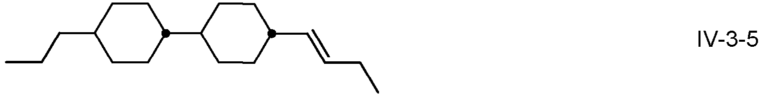

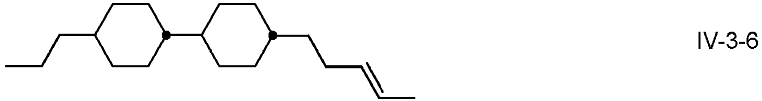

In a preferred embodiment, the medium comprises, in particular in addition to the compounds of the formulae IV-3-1 to IV-3-6, one or more compounds of the formulae IV-3-7 to IV-3-9

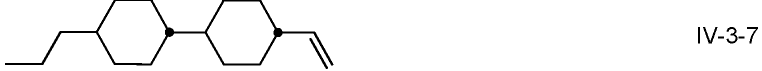

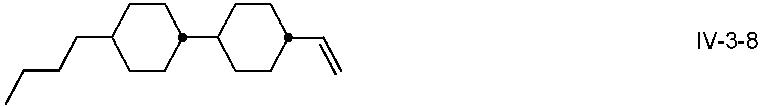

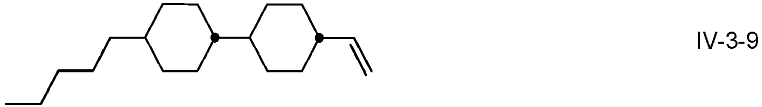

Preferably, the concentration of the compounds of the formulae IV-3-7 to IV-3-9 in the medium according to the invention is less than 5% or less than 4% or less than 3%, very preferably 0% to 1%, in particular 0%.

Very preferably, the medium according to the invention comprises one or more compounds of the formula IV-3 and one or more compounds of the formula IV-1, where the total concentration of the compounds of the formula IV-1 is in the range of from 1% to 30%.

Very preferably, the medium according to the invention comprises a compound of formula IV-4, in particular selected from the compounds of the formulae IV-4-1 to IV-4-3, in particular of the formula IV-4-3

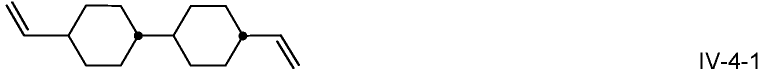

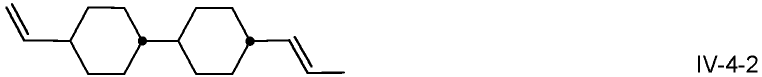

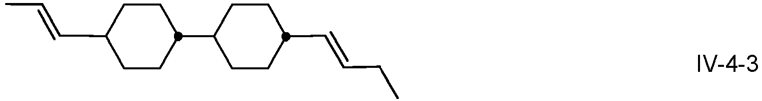

In a preferred embodiment, the medium according to the invention comprises one or more compounds selected from formulae IA-1 to IA-18: 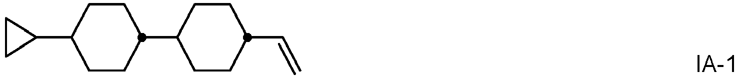 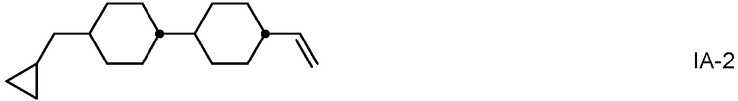 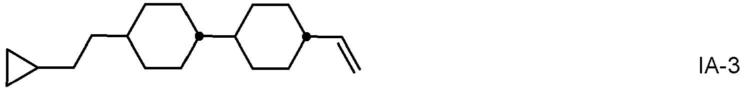 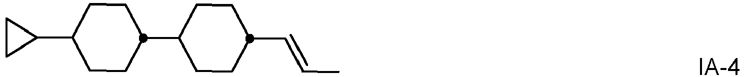 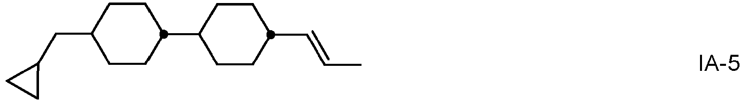 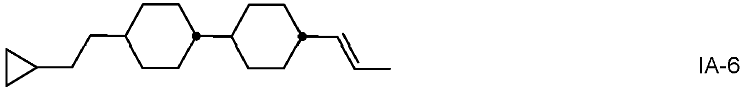 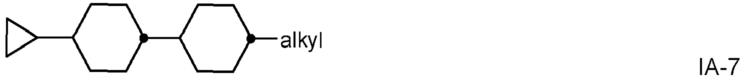 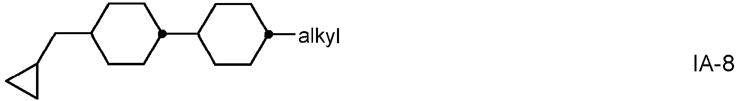 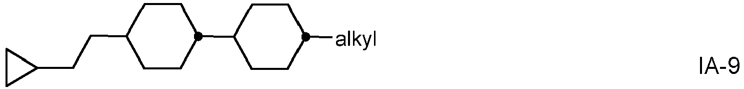 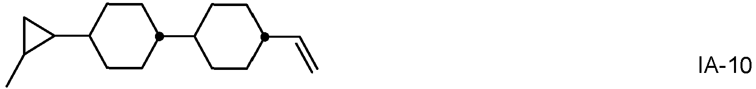 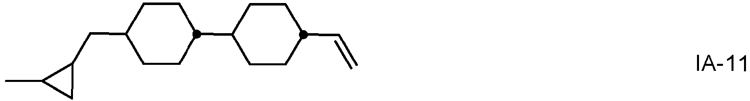 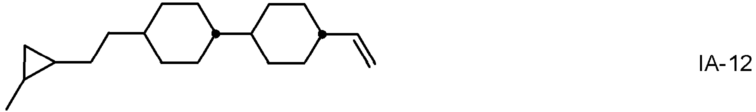 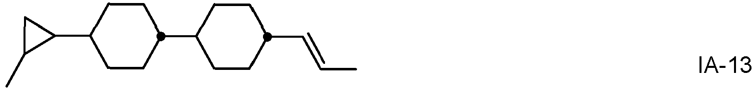 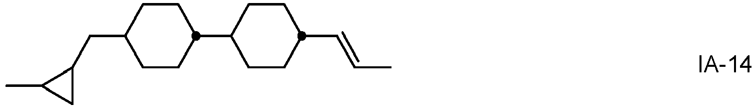 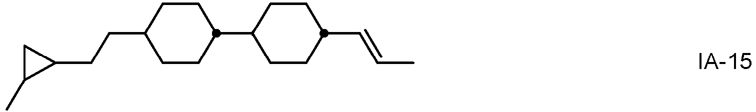 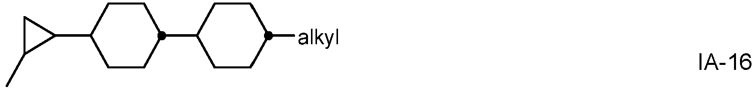 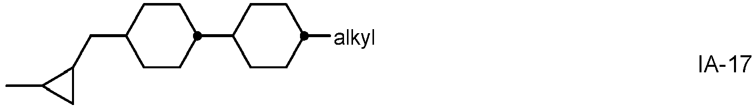 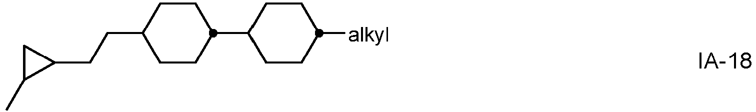 in which alkyl denotes methyl, ethyl, n-propyl, isopropyl, n-butyl, isobutyl, or n-pentyl.

The LC medium according to the invention preferably comprises one or more compounds of the formula IVa, 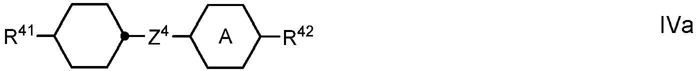 in which
R⁴¹ and R⁴² each, independently of one another, denote a straight-chain alkyl, alkoxy, alkenyl, alkoxyalkyl or alkenyloxy radical having up to 12 C atoms, and 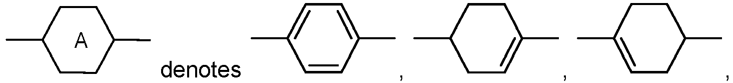 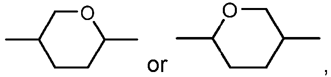
Z⁴ denotes a single bond, -CH₂CH₂-, -CH=CH-, -CFzO-, -OCF₂-, -CHzO-, -OCH₂-, -COO-, -OCO-, -C₂F₄-, -C₄H₈-, -CF=CF-.

Preferred compounds of the formula IVa are indicated below: 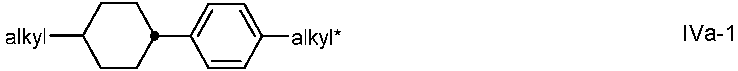 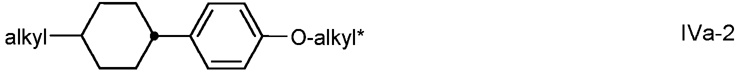 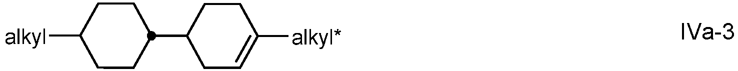 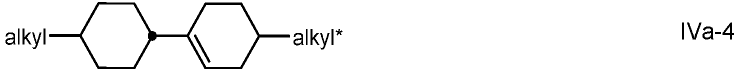 in which
alkyl and alkyl* each, independently of one another, denote a straight-chain alkyl radical having 1 to 6 C atoms.

The medium according to the invention preferably comprises at least one compound of the formula IVa-1 and/or formula IVa-2, very preferably of formula IVa-2, in particular the compounds IVa-2 in which alkyl denotes n-propyl and alkyl* denotes methyl.

The proportion of compounds of the formula IVa in the mixture as a whole is preferably less than 5 % by weight, very preferably less than 2% by weight.

Preferably, the medium comprises one or more compounds of formula IVb-1 to IVb-3 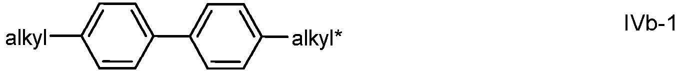 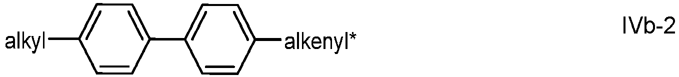 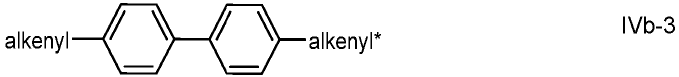 in which
alkyl and alkyl* each, independently of one another, denote a straight-chain alkyl radical having 1 to 6 C atoms, and
alkenyl and alkenyl* each, independently of one another, denote a straight-chain alkenyl radical having 2 to 6 C atoms.

The proportion of the compounds of the formulae IV-1 to IV-3 in the mixture as a whole is preferably less than 3 % by weight, in particular less than 2 % by weight. Of the compounds of the formulae IVb-1 to IVb-3, the compounds of the formula IVb-2 are particularly preferred.

Very particularly preferred biphenyls are 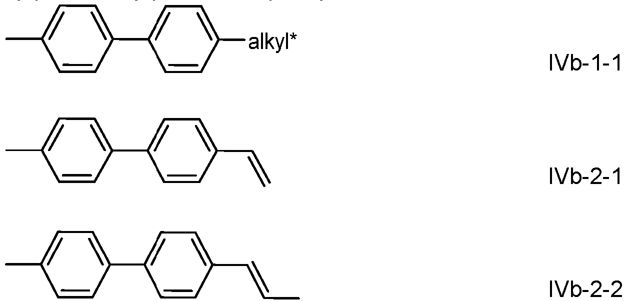 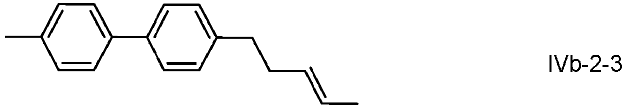 in which alkyl* denotes an alkyl radical having 1 to 6 C atoms and preferably denotes n-propyl or n-butyl. The medium according to the invention particularly preferably comprises one or more compounds of the formulae IVb-1-1 and/or IVb-2-3.

In the compounds of the formula IVb-1-1 alkyl* denotes preferably propyl, butyl and pentyl and most preferably propyl.

In a preferred embodiment, the medium according to the invention comprises one or more compounds of formula V 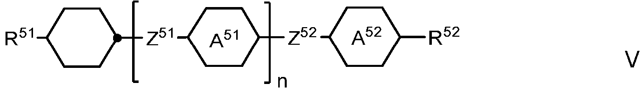 in which
R⁵¹, R⁵² denote alkyl having 1 to 7 C atoms, alkoxy having 1 to 7 C atoms, or alkoxyalkyl, alkenyl or alkenyloxy having 2 to 7 C atoms, 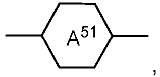 denotes 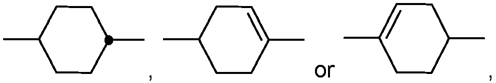 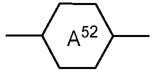 denotes 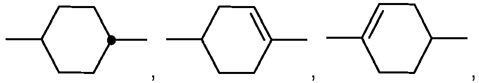 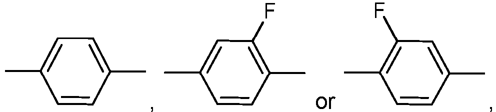
Z⁵¹, Z⁵² each, independently of one another, denote -CH₂-CH₂-, -CH₂-O-, -CH=CH-, -C=C-, -COO- or a single bond, and
n is 1 or 2.

The compounds of formula V are preferably selected from the compounds of the formulae V-1 to V-14: 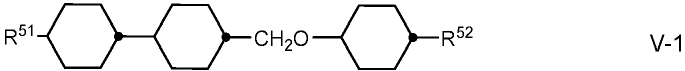 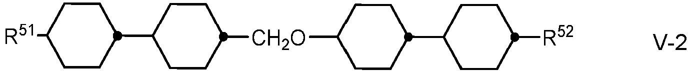 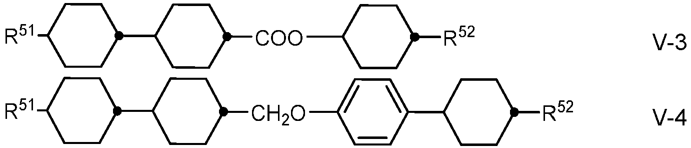 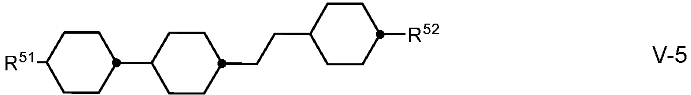 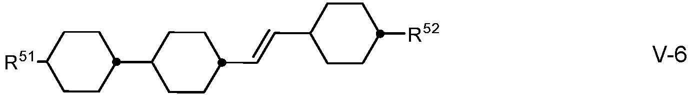 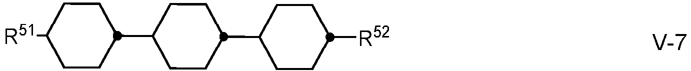 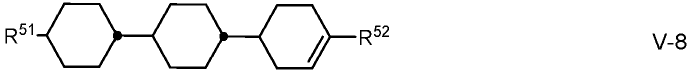 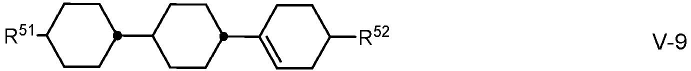 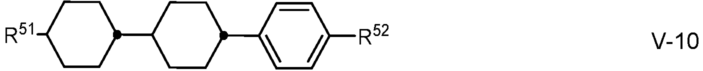 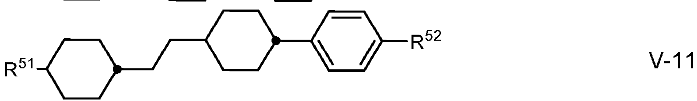 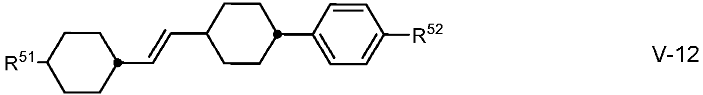 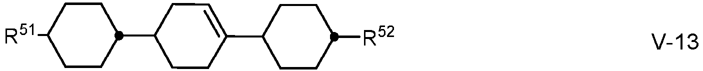 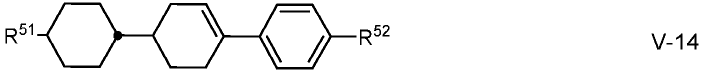 in which R⁵¹ and R⁵² have the meanings indicated for formula V above.
R⁵¹ and R⁵² preferably each, independently of one another, denote straight-chain alkyl having 1 to 7 C atoms or alkenyl having 2 to 7 C atoms.

Preferred media comprise one or more compounds of the formulae V-1, V-3, V-4, V-6, V-7, V-10, V-11, V-12 and/or V-14.

In a preferred embodiment, the medium according to the invention comprises one or more compounds of formula Vb 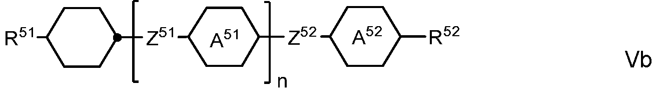 in which
R⁵¹, R⁵² denote alkyl having 1 to 7 C atoms, alkoxy having 1 to 7 C atoms, or alkoxyalkyl, alkenyl or alkenyloxy having 2 to 7 C atoms, 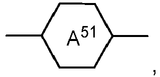 denotes 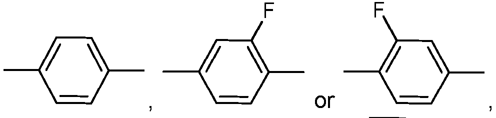 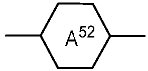 denotes 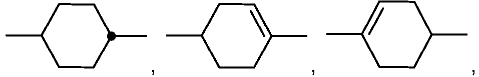 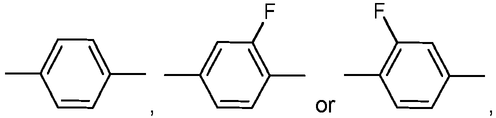
Z⁵¹, Z⁵² each, independently of one another, denote -CH₂-CH₂-, -CH₂-O-, -CH=CH-, -C=C-, -COO- or a single bond, and
n is 2.

The compounds of formula Vb are preferably selected from the compounds of the formulae Vb-1 to Vb-2:

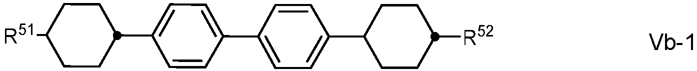

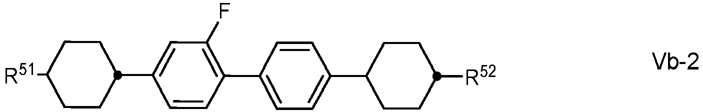

In a preferred embodiment of the present invention the medium additionally comprises one or more compounds of formula VI 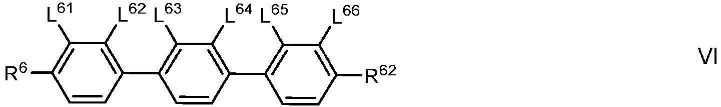 in which R⁶ and R⁶² have the meanings of R^{2A} as defined in claim 1 and R⁶² alternatively denotes F, Cl, CF₃ or OCF₃, preferably F, and L⁶¹, L⁶², L⁶³, L⁶⁴, L⁶⁵, and L⁶⁶ independently denote H or F, where at least one of L⁶¹, L⁶², L⁶³, L⁶⁴, L⁶⁵, and L⁶⁶ denotes F, and wherein the compounds of formula IIC and IIE are excluded.

The compounds of formula VI are preferably selected from the formulae VI-1 to VI-20, in particular from the formulae VI-1, VI-2, IV-4, VI-14, VI-19 and VI-20: 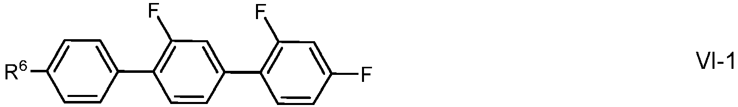 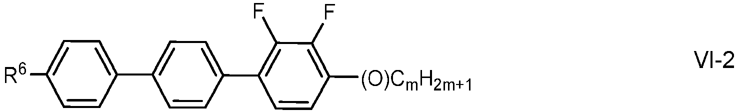 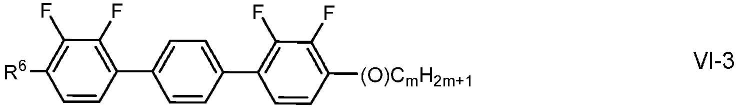 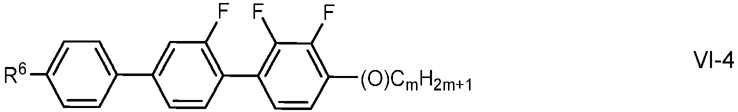 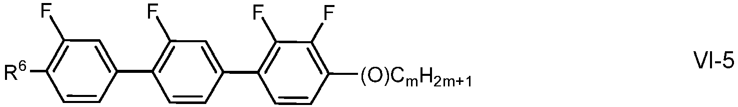 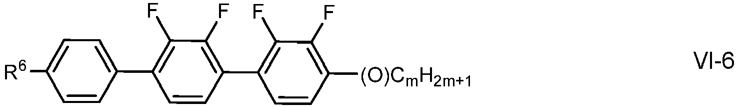 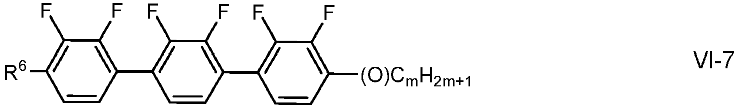 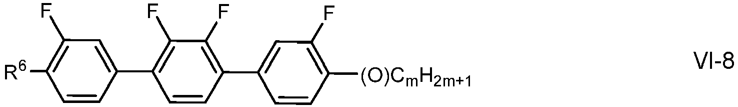 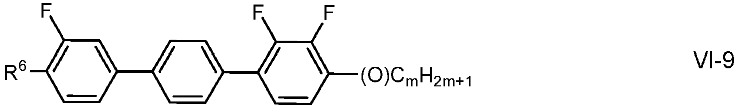 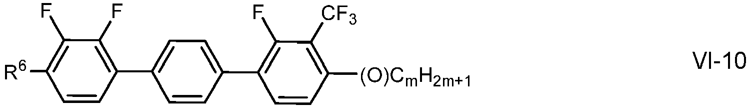 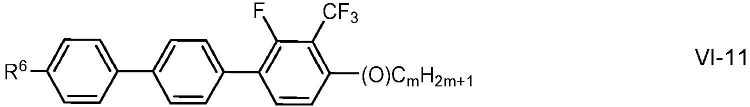 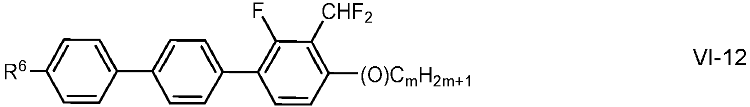 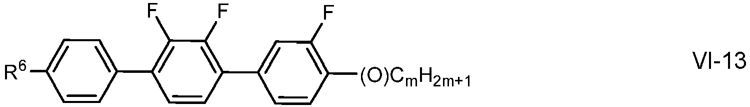 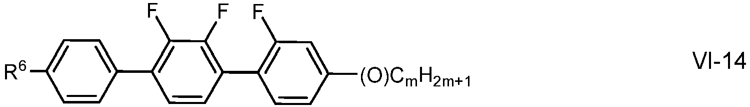 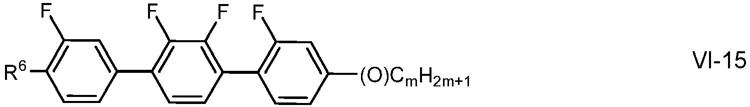 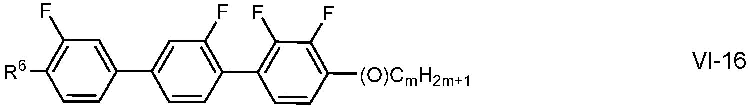 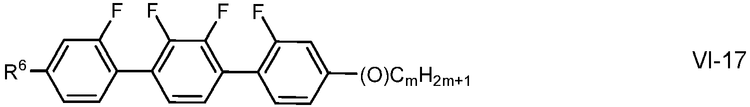 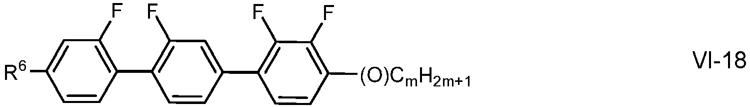 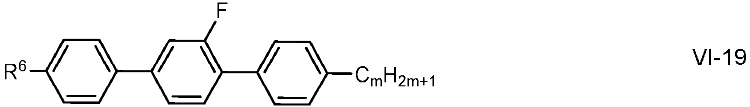 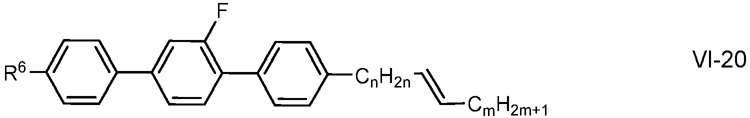 in which R⁶ denotes a straight-chain alkyl or alkoxy radical having 1 to 6 C atoms, (O) denotes -O- or a single bond, and m is 0, 1, 2, 3, 4, 5 or 6 and n is 0, 1, 2, 3 or 4. R⁶ preferably denotes methyl, ethyl, propyl, butyl, pentyl, hexyl, methoxy, ethoxy, propoxy, butoxy or pentoxy.

Particular preference is given to compounds of the formulae VI-1, VI-2, VI-4, VI-19 and VI-20.

In a preferred embodiment of the present invention the medium additionally comprises one or more compounds of formula VIA 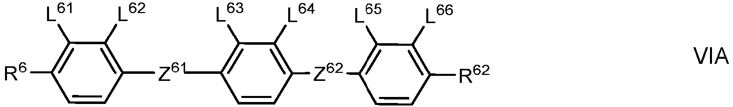
in which R⁶ and R⁶² have the meanings of R^{2A} as defined in claim 1 and R⁶² alternatively denotes F, Cl, CF₃ or OCF₃, preferably F, and L⁶¹, L⁶², L⁶³, L⁶⁴, L⁶⁵, and L⁶⁶ independently denote H or F, where at least one of L⁶¹, L⁶², L⁶³, L⁶⁴, L⁶⁵, and L⁶⁶ denotes F and
Z⁶¹ and Z⁶² independently denote a single bond, -CH₂-CH₂-, -CH₂-O-, -CH=CH-, -C≡C-, -COO- or -CF₂-O- but Z⁶¹ ≠ Z⁶².

Very preferably, the medium according to the invention comprises the compound of formula VIA-1 and/or formula X 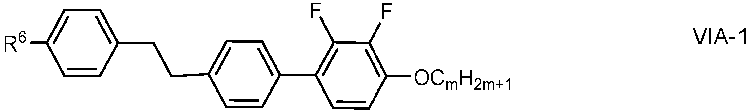 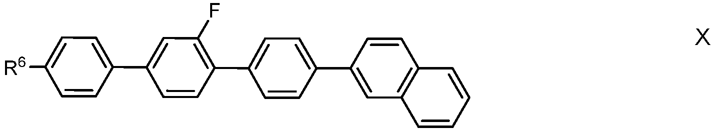 in which R⁶ and m have the meanings defined above and preferably R⁶ denotes methyl, ethyl, n-propyl, n-butyl, or n-pentyl, and m is 2, 3 or 4. In a particular preferred embodiment R⁶ denotes n-propyl and m denotes 2.

In a preferred embodiment of the present invention the medium additionally comprises one or more compounds of the formulae VII-1 to VII-9 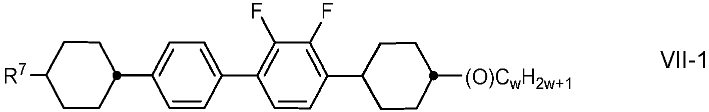 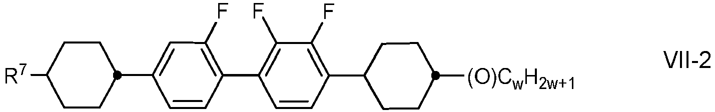 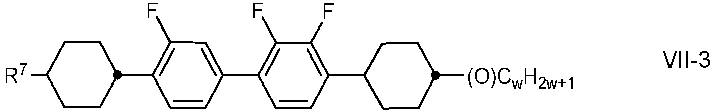 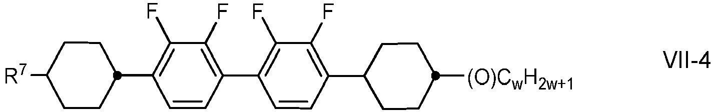 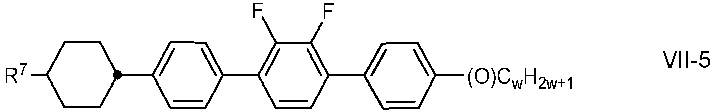 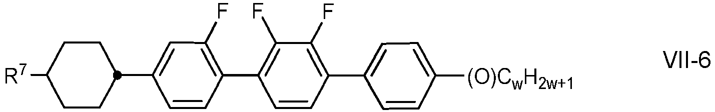 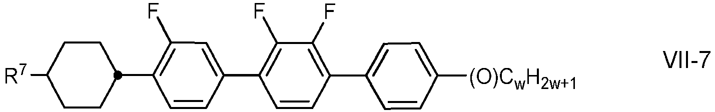 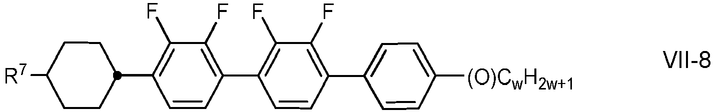 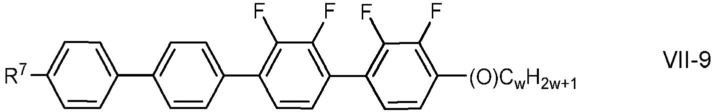 in which
- R⁷: denotes a straight-chain alkyl or alkoxy radical having 1 to 6 C atoms, or a straight chain alkenyl radical having 2 to 6 C atoms, and
- w: is an integer from 1 to 6.

Particular preference is given to mixtures comprising at least one compound of the formula VII-9.

Further preferred embodiments are listed below:
a) Liquid-crystalline medium comprising at least one compound of the formulae Z-1 to Z-8, 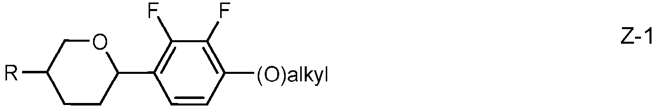 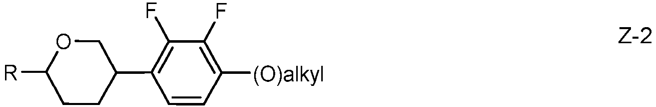 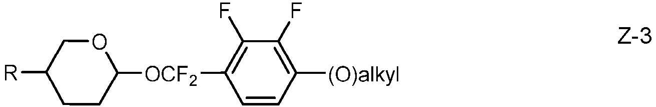 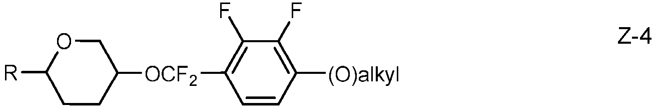 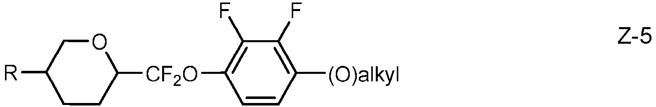 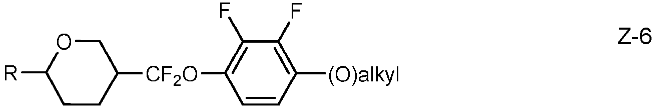 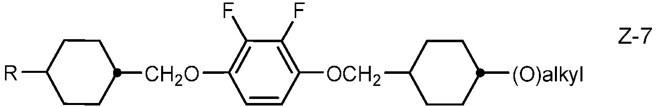 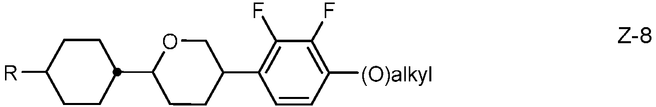 in which R has the meanings of R^{2A} in formula IIA and alkyl denotes a straight-chain alkyl radical having 1 to 6 C atoms.

In a preferred embodiment the liquid crystal mixtures according to the present invention contain at least one compound of formula Z-8.
b) Preferred liquid-crystalline media according to the invention comprise one or more substances which contain a tetrahydronaphthyl or naphthyl unit, such as, for example, the compounds of the formulae N-1 to N-5, 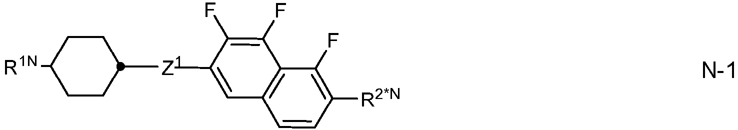 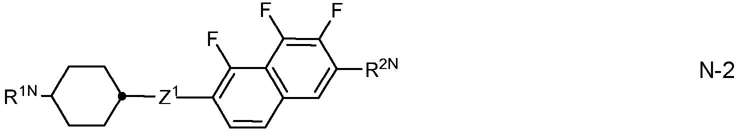 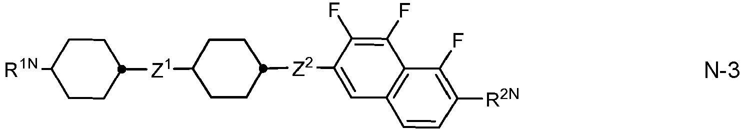 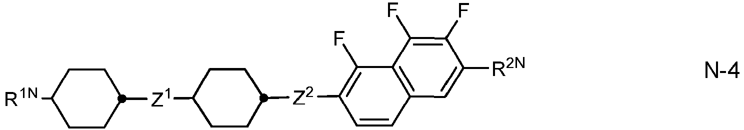 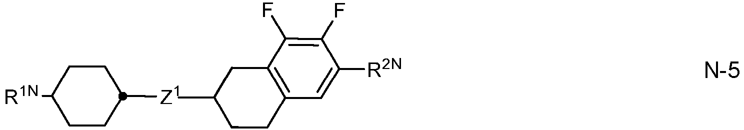
   in which R^{1N} and R^{2N} each, independently of one another, have the meanings indicated for R^{2A}, preferably denote straight-chain alkyl, straight-chain alkoxy or straight-chain alkenyl, and
   Z¹ and Z² each, independently of one another,
      denote -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CF₂O-, -OCF₂-, -CH₂- or a single bond.
c) Preferred mixtures comprise one or more compounds selected from the group of the difluorodibenzochroman compounds of the formula BC, chromans of the formula CR, and fluorinated phenanthrenes of the formulae PH-1 and PH-2, 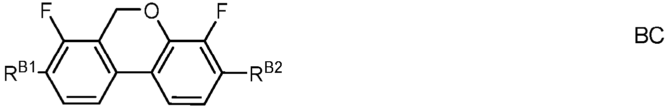 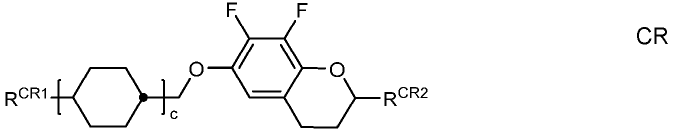 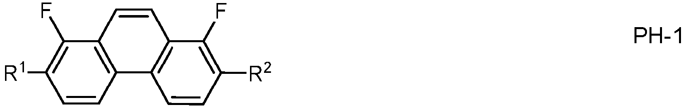 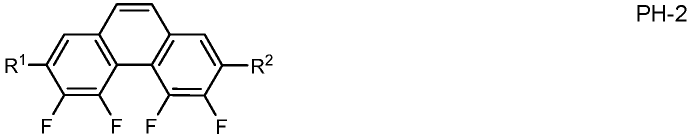 in which R^{B1}, R^{B2}, R^{CR1}, R^{CR2}, R¹, R² each, independently of one another, have the meaning of R^{2A}. c is 0, 1 or 2. R¹ and R² preferably, independently of one another, denote alkyl or alkoxy having 1 to 6 C atoms.

Particularly preferred compounds of the formulae BC and CR are the compounds BC-1 to BC-7 and CR-1 to CR-5, 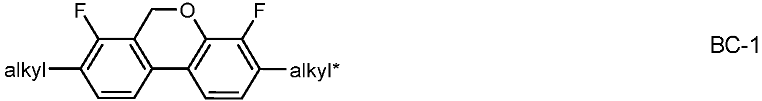 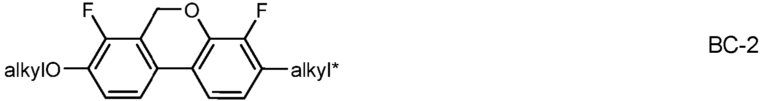 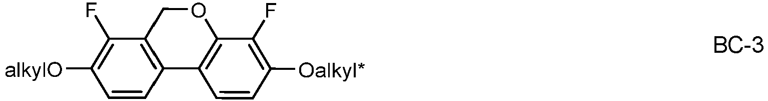 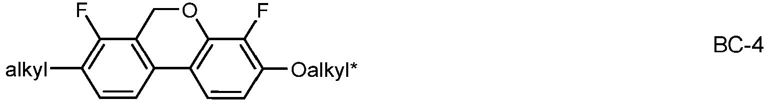 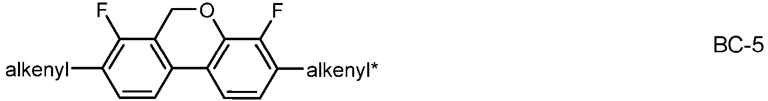 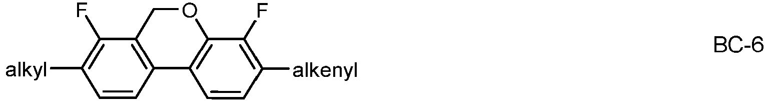 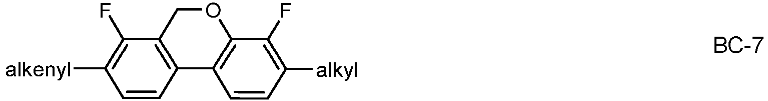 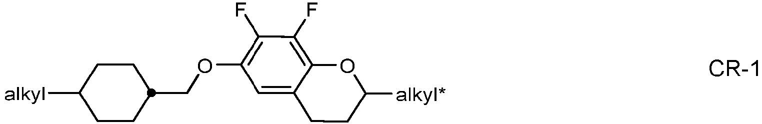 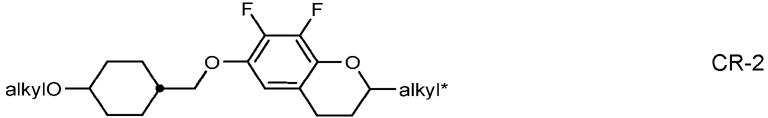 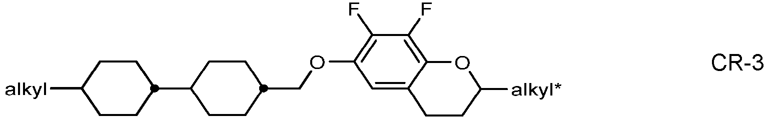 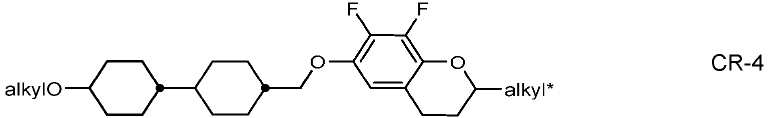 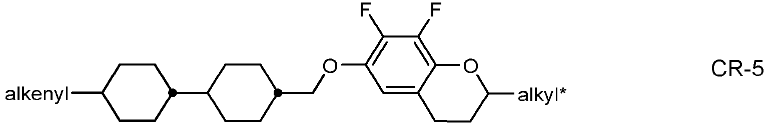 in which
alkyl and alkyl* each, independently of one another, denote a straight-chain alkyl radical having 1 to 6 C atoms, and
alkenyl and alkenyl* each, independently of one another, denote a straight-chain alkenyl radical having 2 to 6 C atoms.

Very particular preference is given to mixtures comprising one, two or three compounds of the formula BC-2, BF-1 and/or BF-2.

d) Preferred mixtures comprise one or more indane compounds of the formula In, 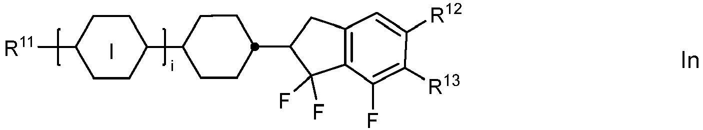 in which
R¹¹, R¹², and R¹³ each, independently of one another, denote a straight-chain alkyl, alkoxy, alkoxyalkyl or alkenyl radical having 1 to 6 C atoms,
R¹² and R¹³ alternatively denote halogen, preferably F, 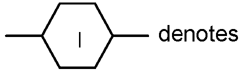 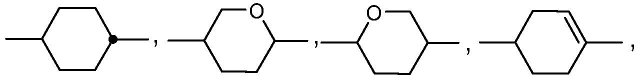 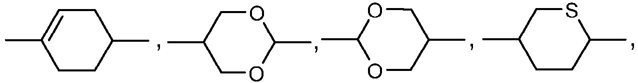 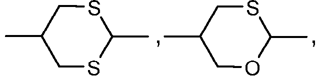
i denotes 0, 1 or 2.

Preferred compounds of the formula In are the compounds of the formulae In-1 to In-16 indicated below: 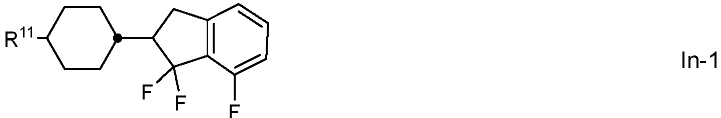 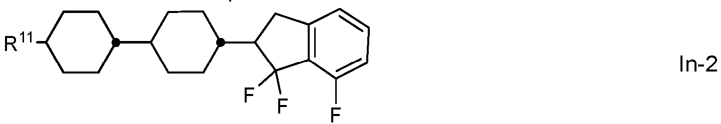 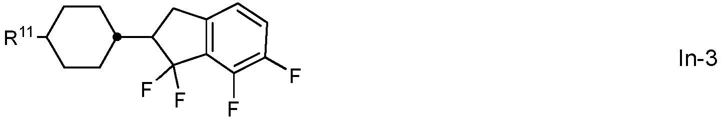 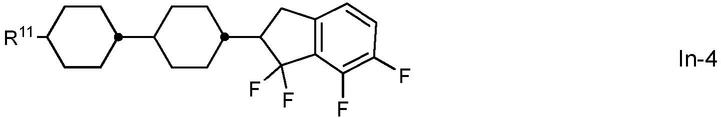 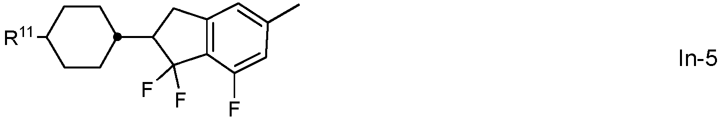 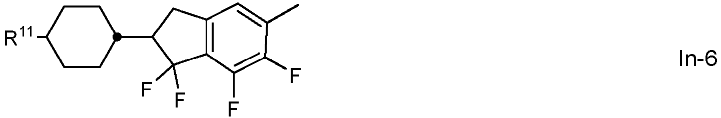 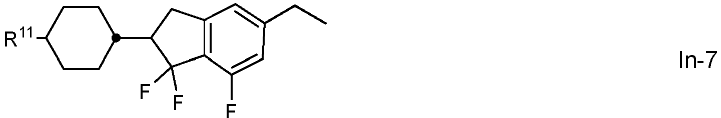 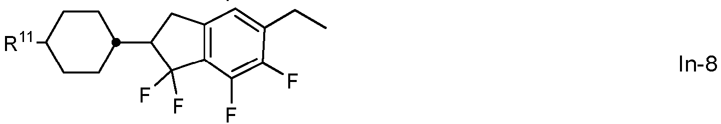 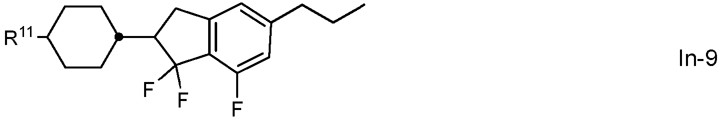 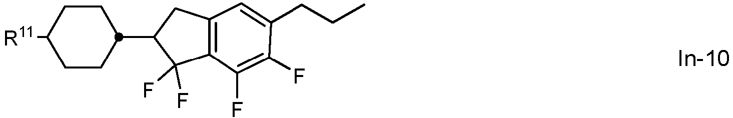 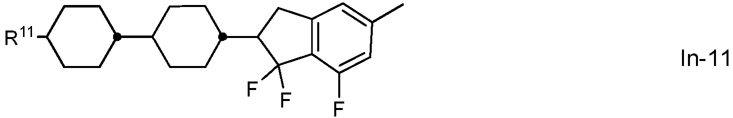 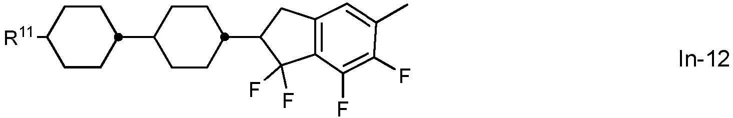 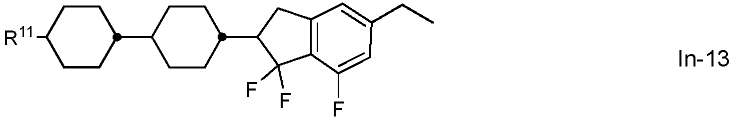 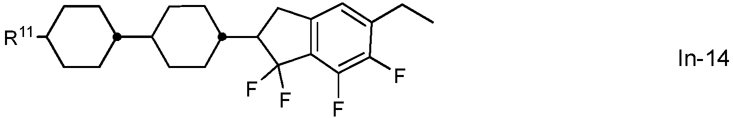 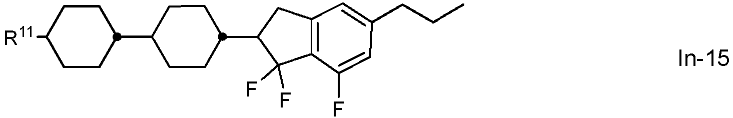 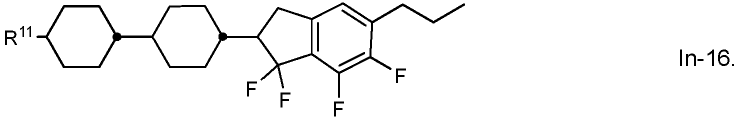 wherein R¹¹ has one of the meanings given for R^{2A} in formula IIA above.

Particular preference is given to the compounds of the formulae In-1, In-2, In-3 and In-4.

e) Preferred mixtures additionally comprise one or more compounds of the formulae L-1 to L-11, 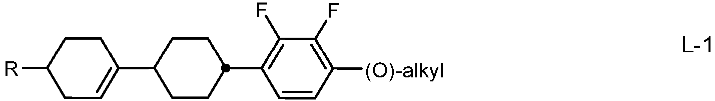 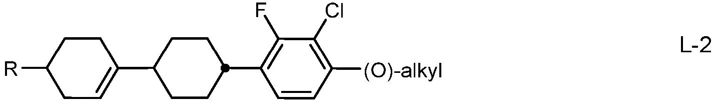 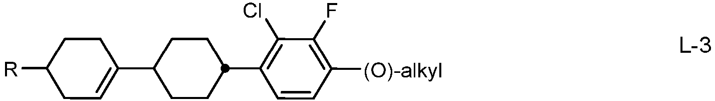 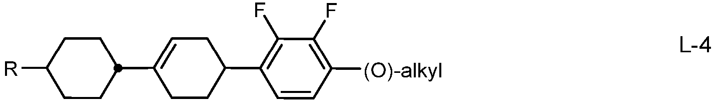 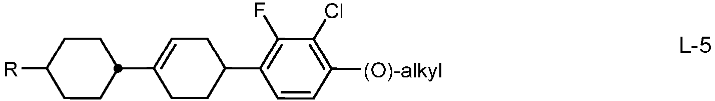 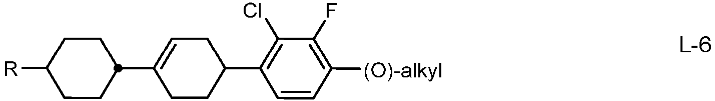 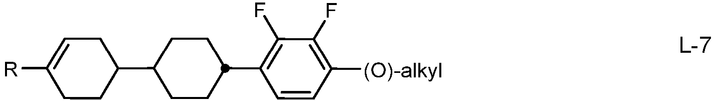 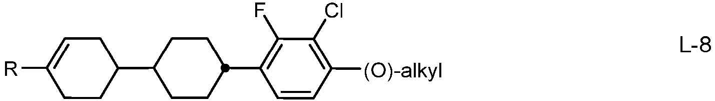 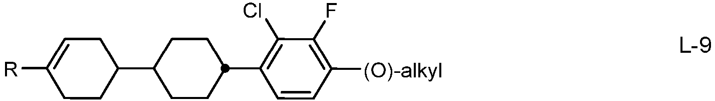 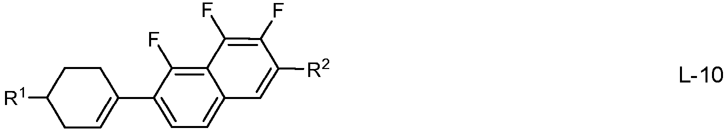 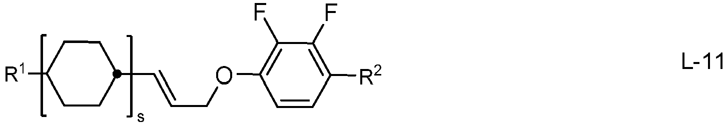 in which
R, R¹ and R² each, independently of one another, have the meanings indicated for R^{2A} in formula IIA above, and alkyl denotes an alkyl radical having 1 to 6 C atoms. The parameter s denotes 1 or 2.

The compounds of the formulae L-1 to L-11 are preferably employed in concentrations of 5 to 15 % by weight, in particular 5 to 12 % by weight and very particularly preferably 8 to 10 % by weight.

f) Preferred mixtures additionally comprise one or more compounds of formula IIA-Y 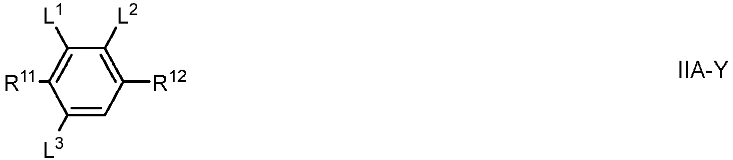 in which R¹¹ and R¹² have one of the meanings given for R^{2A} in formula IIA above, and L¹ and L², identically or differently, denote F or Cl and L³ denotes H or CH₃.

Preferred compounds of the formula IIA-Y are selected from the group consisting of the following sub-formulae 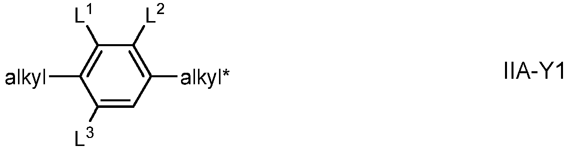 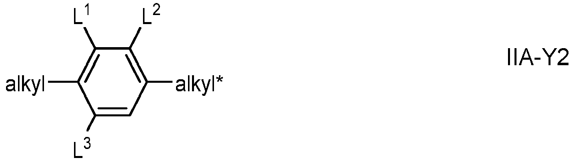 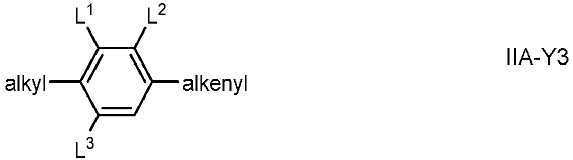 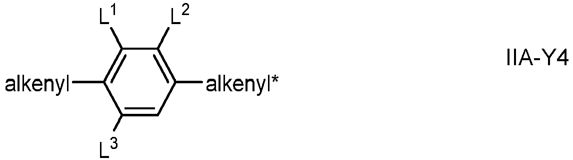 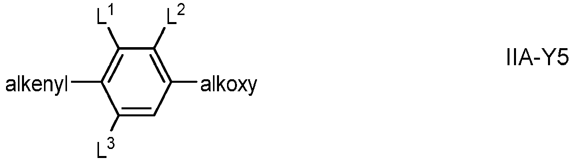 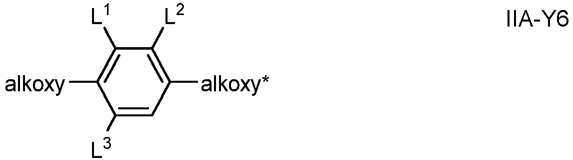 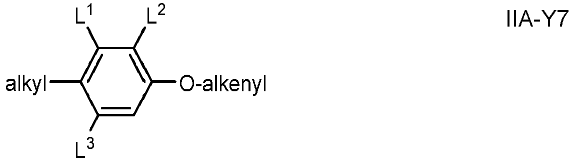 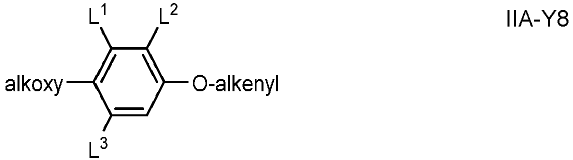 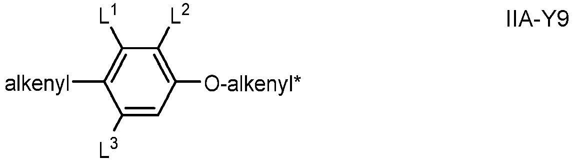 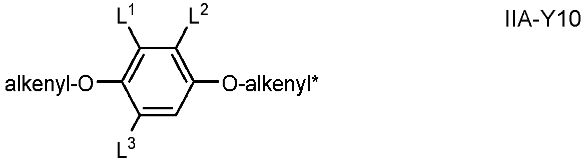 in which alkyl and alkyl* each, independently of one another, denote a straight-chain alkyl radical having 1-6 C atoms; alkoxy and alkoxy* denote a straight-chain alkoxy radical having 1-6 C atoms; alkenyl and alkenyl* each, independently of one another, denote a straight-chain alkenyl radical having 2-6 C atoms. alkenyl and alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-. L¹ and L², identically or differently, denote F or Cl and L³ denotes H or CH₃.

Particularly preferred compounds of the formula IIA-Y are selected from the group consisting of following sub-formulae: 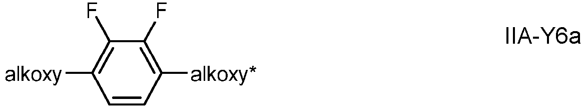 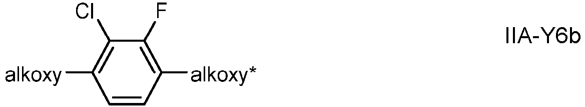 in which alkoxy and alkoxy* have the meanings defined above and preferably denote methoxy, ethoxy, n- propyloxy, n-butyloxy or n-pentyloxy.

g) The medium additionally comprises one or more compounds selected from the compounds of formulae P-1 to P-4: 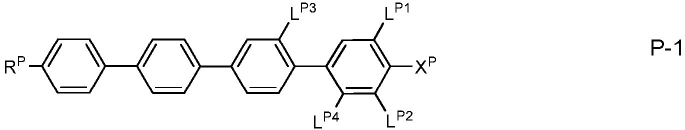 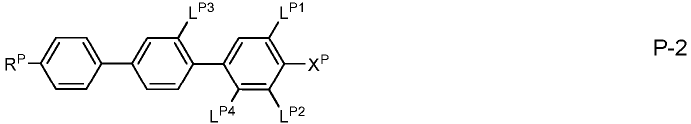 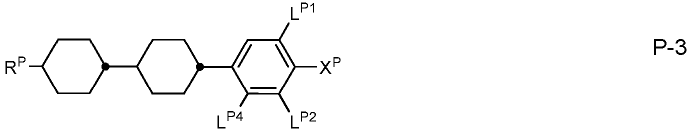 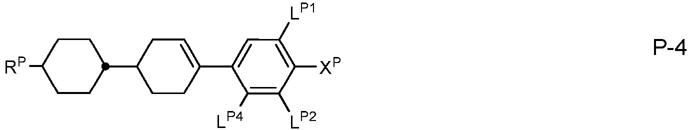 in which
- R^{P}: denotes a straight-chain alkyl or alkoxy radical having 1-6 C atoms or an alkenyl radical having 2-6 C atoms, preferably alkyl, each of which is unsubstituted, or at least monosubstituted by halogen, where one or more CH₂ groups in these radicals may be replaced by -O-, -S-, 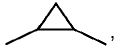 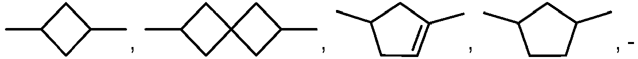 C≡C-, -CF₂O-, -OCF₂-, -OC-O- or -O-CO- in such a way that O atoms are not linked directly to one another;
- X^{P}: straight-chain alkyl having 1-6 C atoms, F, Cl, CF₃, OCF₂H, OCF₃, OCHFCF₃, OCF₂CHFCF₃, OCH=CF₂, preferably F, OCF₃ or CF₃, CH₃,
- L^{P1}, L^{P2} and L^{P3}: each independently of one another denote H or F, and
- L^{P4}: denotes H or CH₃, preferably H.

Preferred compounds of the formulae P1 to P4 are listed in the following: 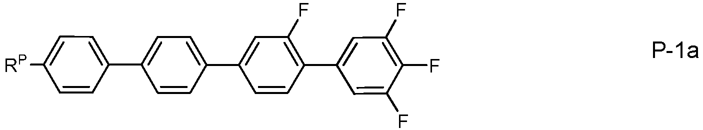 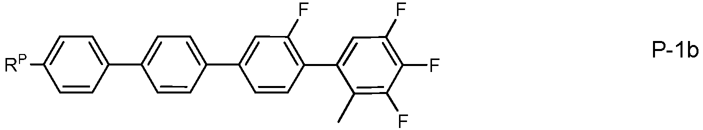 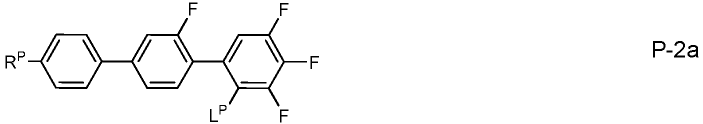 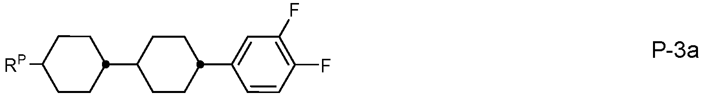 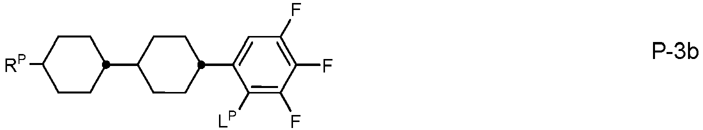 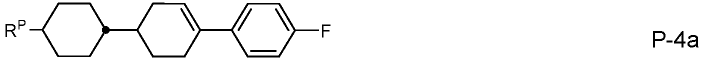 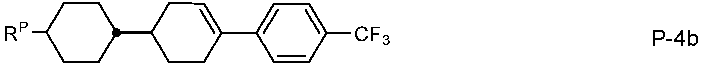 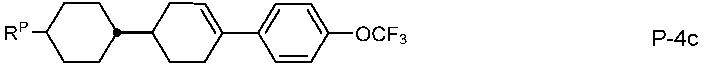 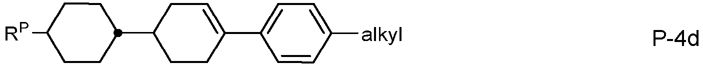 wherein
L^{P} denotes H or CH₃;
R^{P} has the meanings given above. Preferably R^{P} denotes alkyl, cycloalkyl, cycloalklalkyl or alkenyl, in particular ethyl, propyl, butyl, pentyl, cyclopropyl, cyclopentyl, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂- and alkyl denotes a straight-chain alkyl group having 1-6 carbon atoms.

The compounds of formula P-1 have stabilizing properties for the liquid crystal medium. In a preferred embodiment the medium according to the invention comprises at least one compound of formula P-1, more preferably of formula P-1a, preferably in an amount from 0.1 to 5 % by weight, more preferably 0.4 to 2.5 % by weight.

Preferably, the liquid crystal medium according to the invention comprises one or more compounds of the formula H 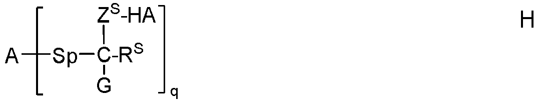 in which
- A: denotes an aliphatic, aromatic or heteroaromatic hydrocarbon group with q valencies and having 1 to 40 C atoms, preferably 6 to 30 C atoms; or a bond for q = 2;
- Sp: denotes a spacer group or a bond;
- R^{S}: denotes H, alkyl having 1 to 12 C atoms or alkenyl having 2 to 12 C atoms;
- Z^{S}: denotes -O-, -C(O)O-, -(CH₂)_{z}- or -(CH₂)_{z}O-, or a single bond; preferably - C(O)O-,
- HA: denotes 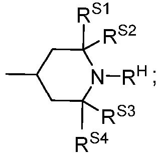
- R^{H}: denotes H, O·, CH₃, OH or OR^{S}, preferably H or O·;
- R^{S1}, R^{S2}, R^{S3} and R^{S4},: identically or differently, denote alkyl having 1 to 6 C atoms, preferably having 1 to 3 C atoms, very preferably CH₃;
- G: denotes H or R^{S} or a group Z^{S}-HA;
- z: is an integer from 1 to 6; and
- q: is 1, 2, 3 or 4, preferably 2.

In formula H, A preferably denotes an aromatic or heteroaromatic hydrocarbon group having 4 to 40 C atoms, comprising one, two, three or four aromatic rings including condensed rings that may be linked directly or via an alkylene linking group having 1 to 12 C atoms, in which one or more H atoms are optionally replaced with alkyl or alkoxy having 1 to 6 C atoms or alkenyl having 2 to 6 C atoms, or with CN, CF₃ or halogen, and in which one or more CH₂ groups may each, independently of one another, be replaced by -O-, -S-, -NH-, -N(C₁-C₄-alkyl)-, -CO-, -CO-O-, -O-CO-, -O-CO-O-, -CH=CH- or -C≡C- in such a way that O or S atoms are not linked directly to one another.

Preferred aliphatic groups are alkylene, cycloalkylene, more preferably -(CHR^{S5})ₛ-, wherein R^{S5} is H or alkyl with 1 to 5 C atoms, and s is an integer from 1 to 20.

Preferred aryl groups are benzene, naphthalene, anthracene, biphenyl, m-terphenyl, p-terphenyl, and (phenylalkyl)benzene in which alkyl is straight chain alkyl having 1 to 12 C atoms.

The compounds of formula H are described in EP 3354710 A1 and EP 3354709 A1.

The compounds of formula H are preferably applied in a range of 0.1 to 0.3% (by weight).

In a preferred embodiment the medium comprises one or more compounds of formula H selected from compounds of formula H-A 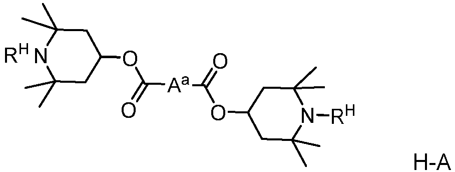 wherein
- A^{a}: denotes an alkylene group with 2 to 12 carbon atoms, wherein one or two CH₂ groups mach be replaced by 1,4-cyclohexylene, and
- R^{H}: denotes H or O·.

The group A^{a} preferably denotes 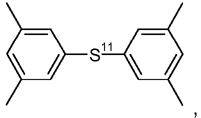 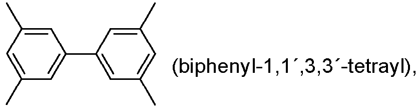 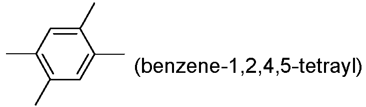 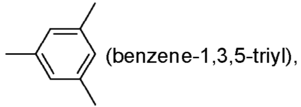 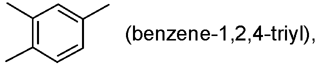 -(CH₂-)₂, -(CH₂-)₃, -(CH₂-)₄, -(CH₂-)₅, -(CH₂-)₆, -(CH₂-)₇, - (CH₂-)₈, *i*.*e*. ethane-1,2-diyl, propane-1,3-diyl, butane-1,4-diyl, pentane-1,5-diyl, hexane-1,6-diyl, heptane-1,7-diyl, octane-1,8-diyl, 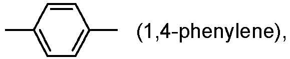 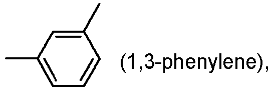 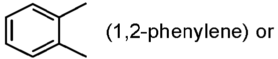 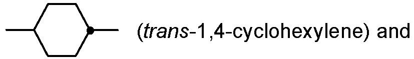 wherein
- S¹¹: denotes an alkylene group having 1 to 20 C atoms,

The compounds of formula H are preferably selected from the compounds of the formulae H-1 to H-12: 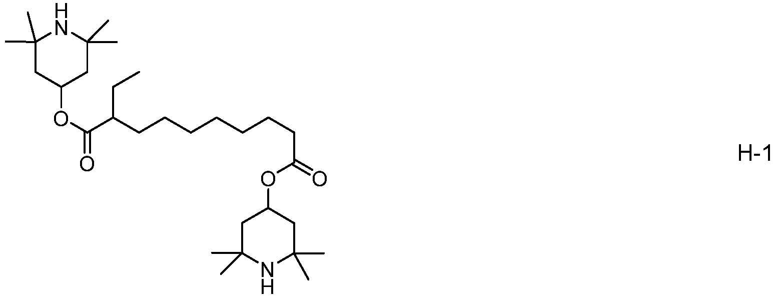 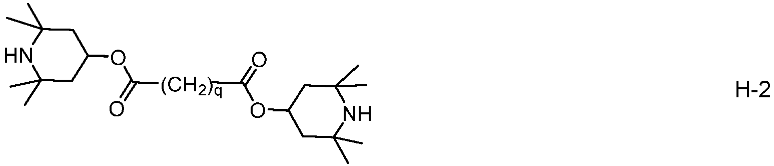 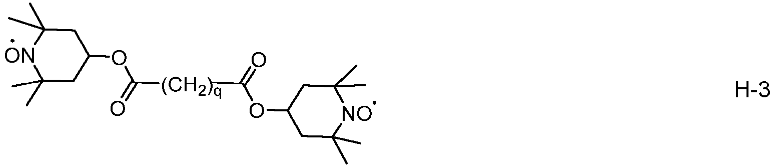 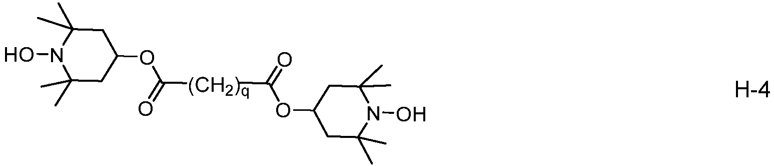 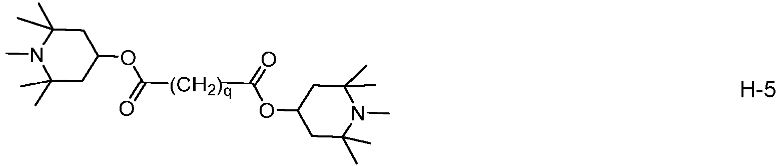 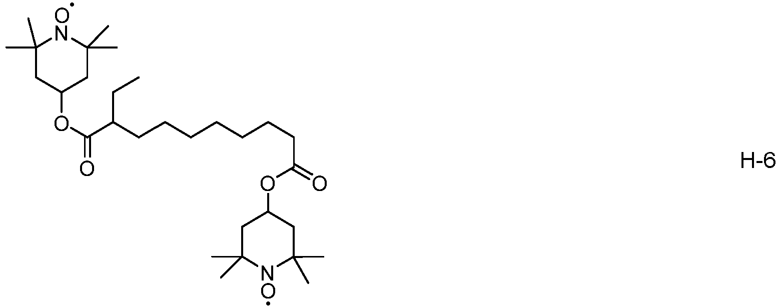 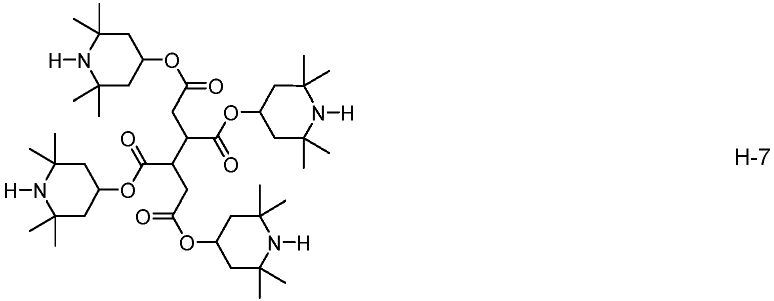 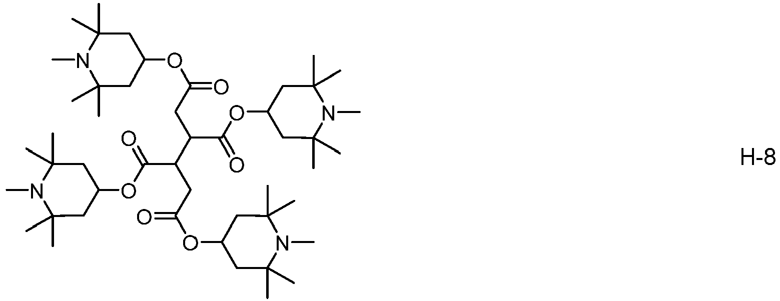 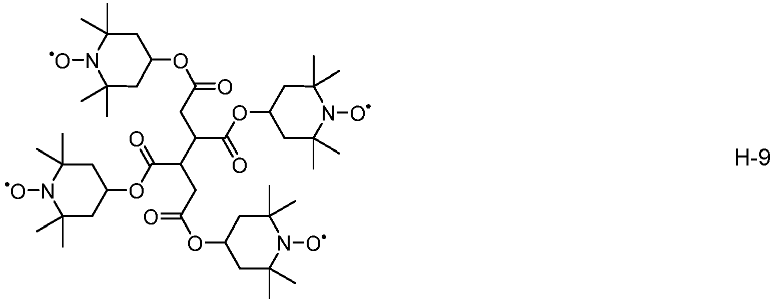 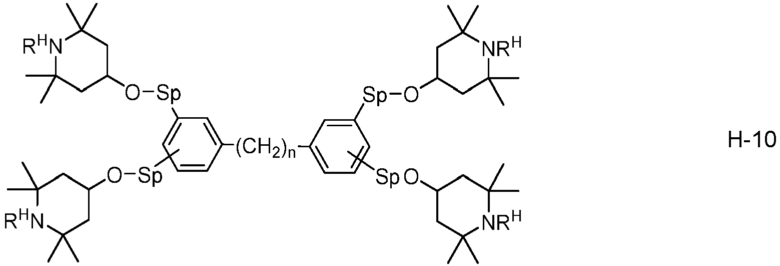 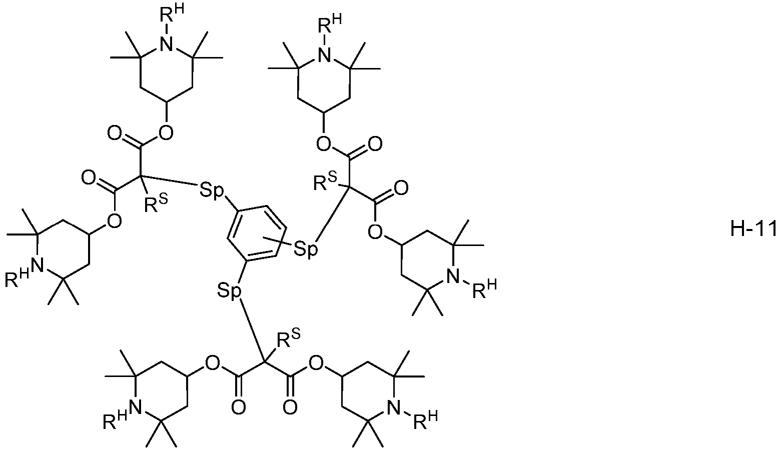 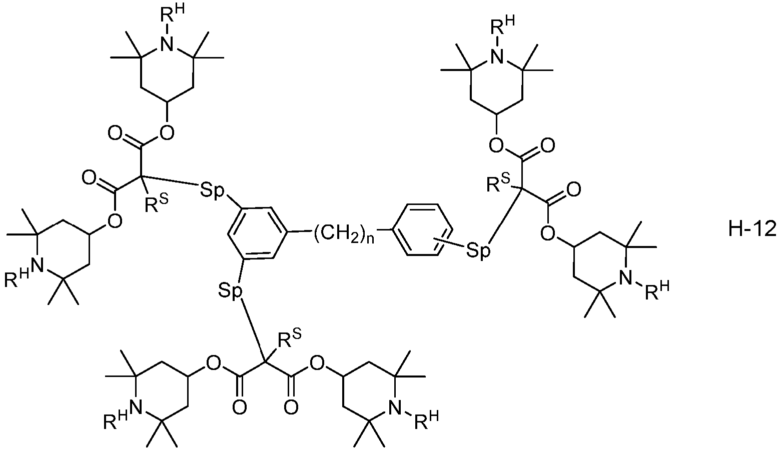
in which R^{H} has the meanings given above and preferably denote H or O·, and
q is an integer from 0 to 12, preferably 2, 4, 6, 8 or 10,
n is an integer from 0 to 12, preferably 5, 6, 7, 8 or 9, very preferably 7, and
Sp denotes a spacer group, preferably alkylene having 1 to 12 C atoms in which one or more non-adjacent -CH₂- groups may be replaced with -O-, and
R^{S} on each occurrence identically or differently, preferably identically, denotes H or alkyl having 1 to 6 C atoms.

Preferred compounds of formula H-10 are selected from the compounds of the formula H-10-1: 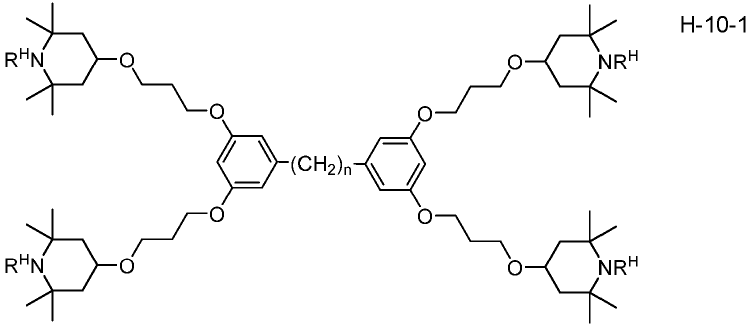 in which R^{H} has the meanings given above and preferably denotes H or O·, and n is an integer from 0 to 12, preferably 5, 6, 7, 8 or 9, very preferably 7.

Preferred compounds of formula H-11 are selected from the compounds of the formula H-11-1: 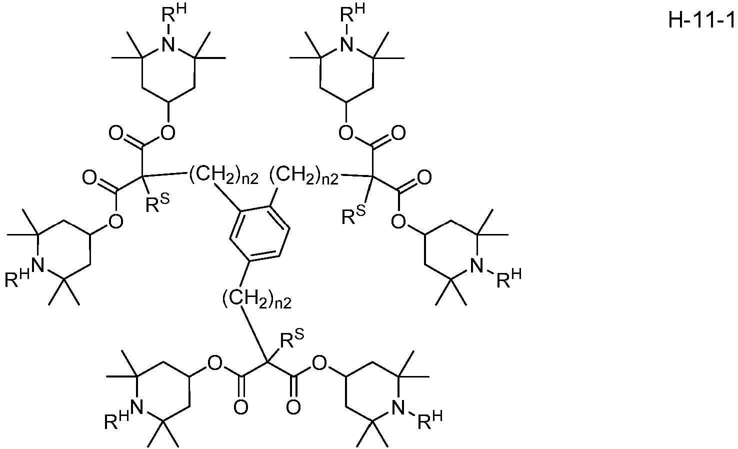
in which R^{H} has the meanings given above and preferably denotes H or O·, and
n2, on each occurrence identically or differently, preferably identically, is an integer from 1 to 12, preferably 2, 3, 4, 5, or 6, very preferably 3, and R^{S} on each occurrence identically or differently, preferably identically, denotes H or alkyl having 1 to 6 C atoms, preferably n-butyl.

Preferred compounds of formula H-12 are selected from the compounds of the formula H-12-1: 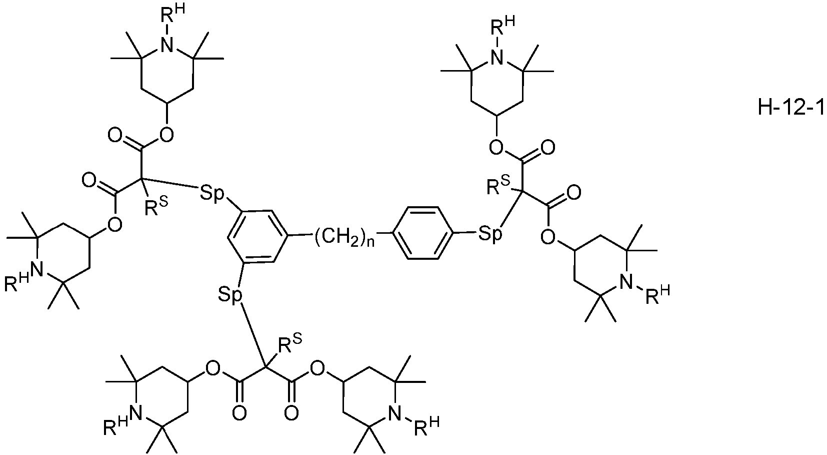
in which R^{H}, R^{S} and Sp have the meanings given above and preferably R^{H} denotes H or O·, and
n is an integer from 0 to 12, preferably 5, 6, 7, 8 or 9, very preferably 7.

Preferred stabilizers H are the following:

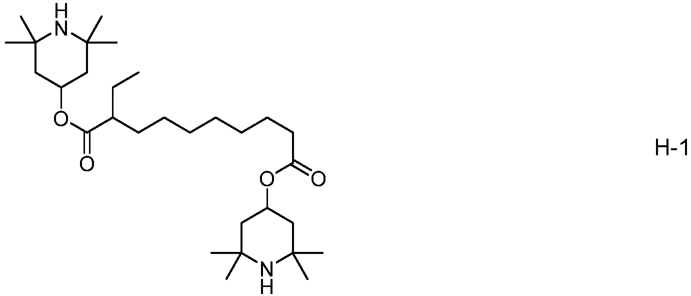

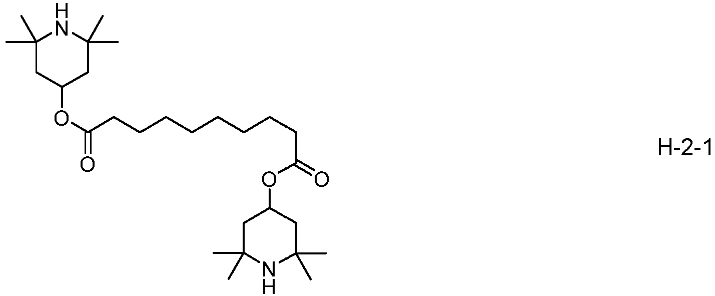

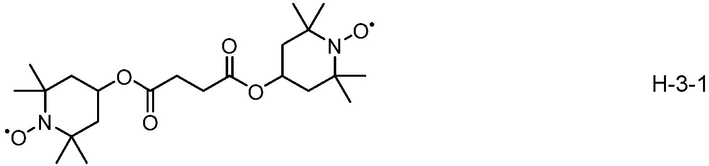

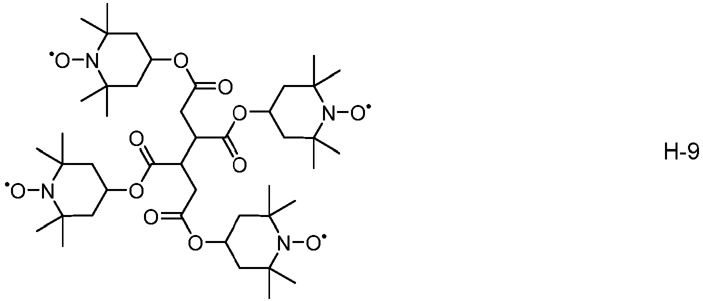

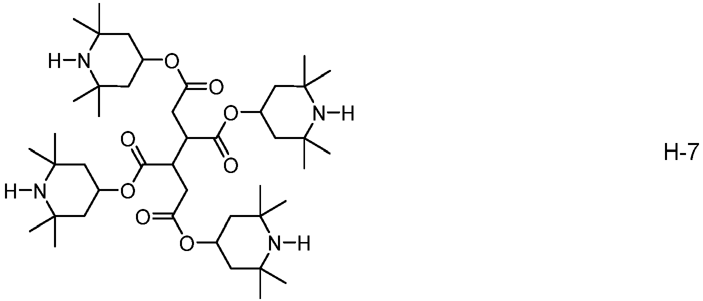

Preferably, the medium according to the invention comprises a compound selected from the group of compounds of the formulae ST-1 to ST-13: 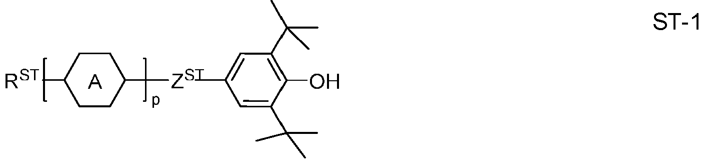 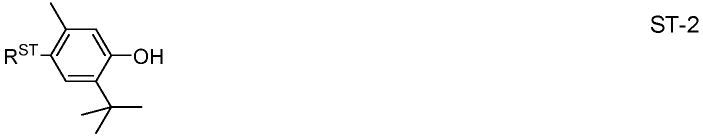 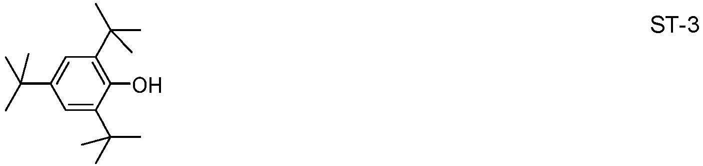 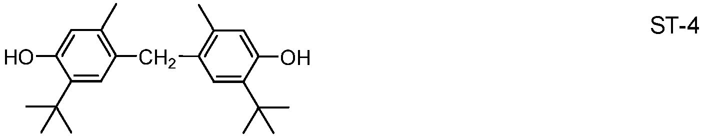 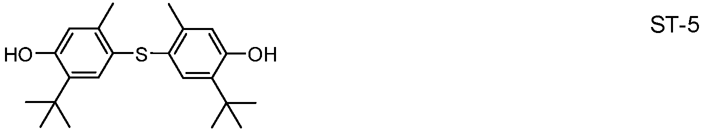 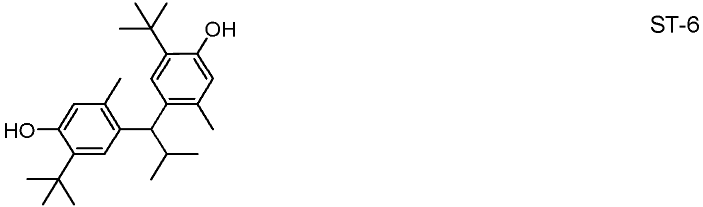 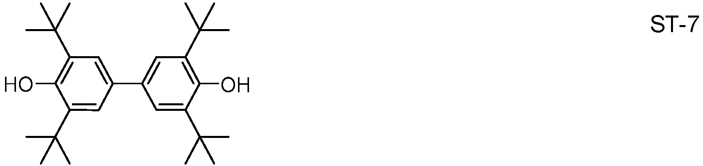 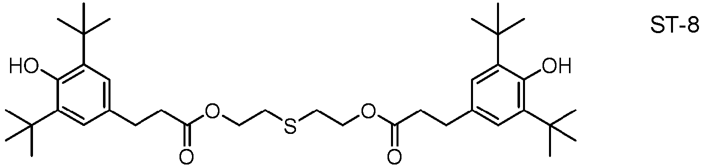 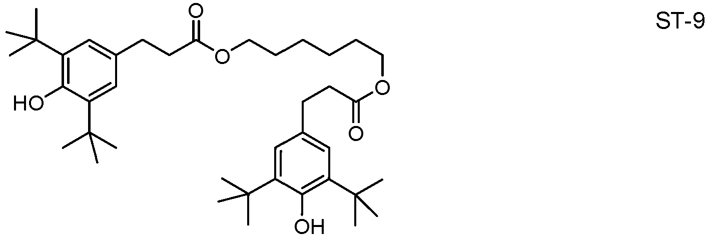 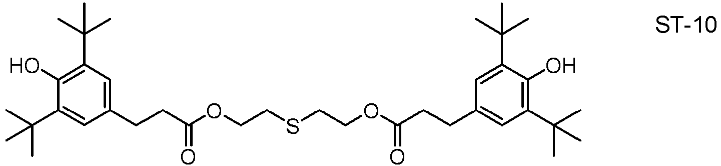 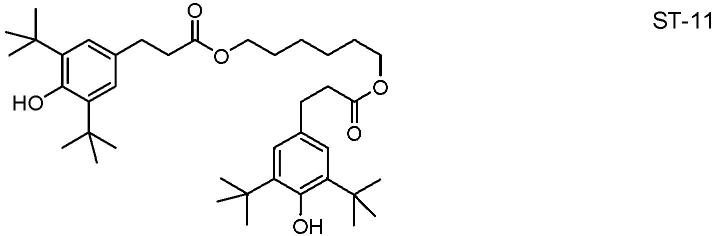 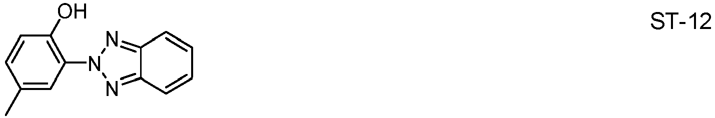 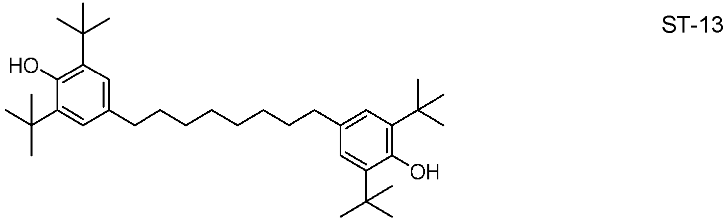 in which
- R^{ST}: denotes H, an alkyl or alkoxy radical having 1 to 15 C atoms, where, in addition, one or more CH₂ groups in these radicals may each be replaced, independently of one another by -C≡C-, -CF₂O-, -OCF₂-, -CH=CH-, 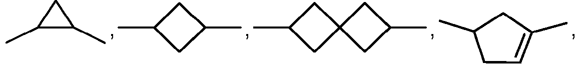 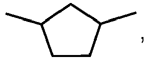 -O-, -CO-O-, -O-CO- in such a way that O atoms are not linked directly to one another, and in which, in addition, one or more H atoms may be replaced by halogen,
preferably R^{ST} denotes alkyl with 1-7 C atoms or cyclopentyl, 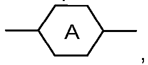 on each occurrence, identically or differently, denotes 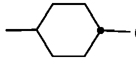 or 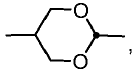
- Z^{ST}: each, independently of one another, denote -CO-O-, -O-CO-, -CF₂O-, -OCF₂-, -CH₂O-, -OCH₂-, -CH₂-, -CH₂CH₂-, -(CH₂)₄-, -CH=CH-, -CH₂O-, -C₂F₄-, -CH₂CF₂-, -CF₂CH₂-, -CF=CF-, -CH=CF-, -CF=CH-, -CH=CH-, -C=C- or a single bond,
- L¹ and L²: each, independently of one another, denote F, Cl, CH₃, CF₃ or CHF₂,
- p: denotes 0, 1 or 2,
- q: denotes 1, 2, 3, 4, 5, 6, 7, 8, 9 or 10.

Of the compounds of the formula ST, special preference is given to the compounds of the formulae ST-1 and ST-3 and in particular: 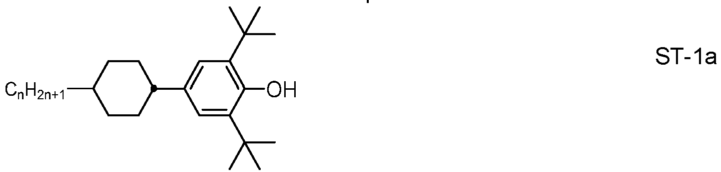 in which n = 1, 2, 3, 4, 5, 6 or 7, preferably n = 3 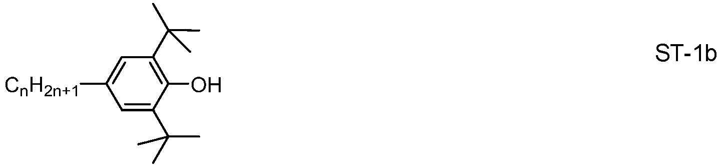 in which n = 1, 2, 3, 4, 5, 6 or 7, preferably n = 1 or 7 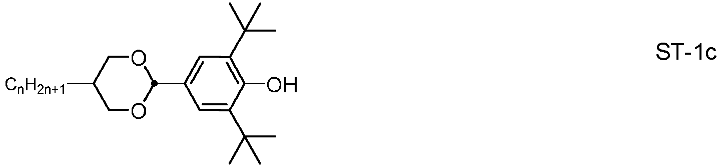 in which n = 1, 2, 3, 4, 5, 6 or 7, preferably n = 3

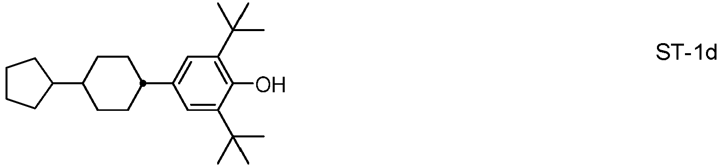

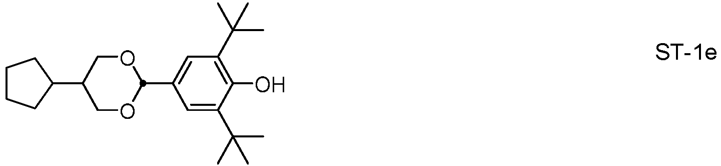

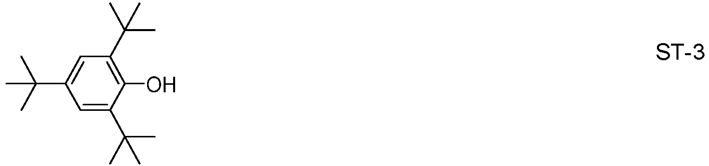

Very particularly preferred mixtures according to the invention comprise one or more stabilizers from the group of the compounds of the formulae ST-1a, ST-1b-1 and ST-1c-1:

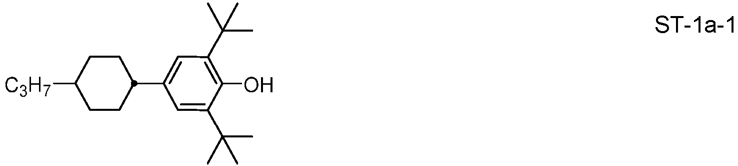

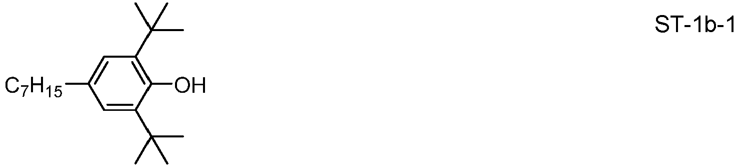

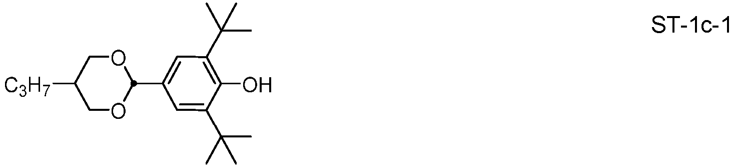

The compounds of the formulae ST-1 to ST-12 are preferably each present in the liquid-crystal mixtures according to the invention in amounts of 0.1 to 0.5%, based on the mixture.

However, the total proportion of the compounds of the formulae ST-1 to ST-12, based on the mixture according to the invention, should not exceed 2%.

The medium according to the invention preferably has negative dielectric anisotropy.

### Definitions

The term "reliability" as used herein means the quality of the performance of the display during time and with different stress loads, such as light load, temperature, humidity, voltage, and comprises display defects such as image sticking (area and line image sticking), mura, yogore etc. which are known to the skilled person in the field of LC displays. As a standard parameter for categorising the reliability usually the voltage holding ration (VHR) value is used, which is a measure for maintaining a constant electrical voltage in a test display. Among other factors, a high VHR is a prerequisite for a high reliability of the LC medium.

As used herein, the terms "active layer" and "switchable layer" mean a layer in an electrooptical display, for example an LC display, that comprises one or more molecules having structural and optical anisotropy, like for example LC molecules, which change their orientation upon an external stimulus like an electric or magnetic field, resulting in a change of the transmission of the layer for polarized or unpolarized light.

Unless indicated otherwise, the term LC display is used herein when referring to an information display based on switchable liquid crystals. It includes back-lit and reflective displays, for direct or indirect view, for virtual or augmented reality systems or projection systems. The size ranges from microdisplays to large screens. The addressing can be realized in such a way that the LC display comprises simple electrodes on a substrate, an array of thin-film-transisitors with electrodes for each pixel, or a structured silicon semiconductor as backplane, the latter of which is preferred.

As used herein, the terms "optically active" and "chiral" are synonyms for materials that are able to induce a helical pitch in a nematic host material, also referred to as "chiral dopants".

Throughout the patent application, 1,4-cyclohexylene rings and 1,4-phenylene rings are depicted as follows:

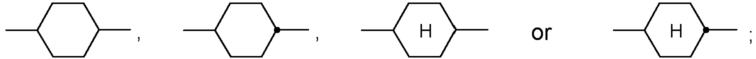

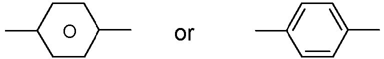

The cyclohexylene rings are trans-1,4-cyclohexylene rings.

Above and below, 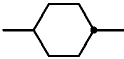 denotes a trans-1,4-cyclohexylene ring.

In a group 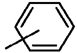 the single bond shown between the two ring atoms can be attached to any free position of the benzene ring.

Above and below "organic group" denotes a carbon or hydrocarbon group.

"Carbon group" denotes a mono- or polyvalent organic group containing at least one carbon atom, where this either contains no further atoms (such as, for example, -C≡C-) or optionally contains one or more further atoms, such as, for example, N, O, S, B, P, Si, Se, As, Te or Ge (for example carbonyl, etc.). The term "hydrocarbon group" denotes a carbon group which additionally contains one or more H atoms and optionally one or more heteroatoms, such as, for example, N, O, S, B, P, Si, Se, As, Te or Ge.

"Halogen" denotes F, Cl, Br or I, preferably F or CI. -CO-, -C(=O)- and -C(O)- denote a carbonyl group, i.e.

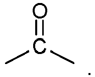

A carbon or hydrocarbon group can be a saturated or unsaturated group. Unsaturated groups are, for example, aryl, alkenyl or alkynyl groups. A carbon or hydrocarbon radical having more than 3 C atoms can be straight-chain, branched and/or cyclic and may also contain spiro links or condensed rings.

The terms "alkyl", "aryl", "heteroaryl", etc., also encompass polyvalent groups, for example alkylene, arylene, heteroarylene, etc.

The term "aryl" denotes an aromatic carbon group or a group derived therefrom. The term "heteroaryl" denotes "aryl" as defined above, containing one or more heteroatoms, preferably selected from N, O, S, Se, Te, Si and Ge.

Herein, alkyl is straight-chain or branched and has 1 to 15 C atoms, is preferably straight-chain and has, unless indicated otherwise, 1, 2, 3, 4, 5, 6 or 7 C atoms and is accordingly preferably methyl, ethyl, n-propyl, n-butyl, n-pentyl, n-hexyl or n-heptyl.

Herein, branched alkyl is alkyl having a secondary and/or tertiary, preferably secondary, carbon atom and is preferably isopropyl, s-butyl, isobutyl, isopentyl, 2-methylhexyl or 2-ethylhexyl, 2-methylpropyl, 2-pentyl, 3-pentyl, 2-methylbutyl, 3-methylbutyl.

Herein, a cyclic alkyl group is taken to mean a cycloaliphatic radical or an alkyl group in which a methylene group is replaced with a cycloaliphatic group (i.e. a cycloalkylalkyl or alkylcycloalkylalkyl), which may be saturated or partially unsaturated, and preferably denotes cyclopropyl, methylcyclopropyl, cyclobutyl, methylcyclobutyl, cyclopentyl, methylcyclopentyl, cyclopent-1-enyl, cyclopropylmethyl, cyclopropylethyl, cyclobutylmethyl, cyclobutylethyl, cyclopentylmethyl, cyclopentylethyl, cyclopent-1-enylmethyl.

Herein, an alkoxy radical is straight-chain or branched and contains 1 to 15 C atoms. It is preferably straight-chain and has, unless indicated otherwise, 1, 2, 3, 4, 5, 6 or 7 C atoms and is accordingly preferably methoxy, ethoxy, n-propoxy, n-butoxy, n-pentoxy, n-hexoxy or n-heptoxy.

Herein, an alkenyl radical is preferably an alkenyl radical having 2 to 15 C atoms, which is straight-chain or branched and contains at least one C-C double bond. It is preferably straight-chain and has 2 to 7 C atoms. Accordingly, it is preferably vinyl, prop-1- or -2-enyl, but-1-, -2- or -3-enyl, pent-1-, -2-, -3- or -4-enyl, hex-1-, -2-, -3-, - 4- or -5-enyl, hept-1-, -2-, -3-, -4-, -5- or -6-enyl. If the two C atoms of the C-C double bond are substituted, the alkenyl radical can be in the form of E and/or Z isomer (trans/cis). In general, the respective E isomers are preferred. Of the alkenyl radicals, prop-2-enyl, but-2- and -3-enyl, and pent-3- and -4-enyl are particularly preferred.

Herein, alkynyl is taken to mean an alkynyl radical having 2 to 15 C atoms, which is straight-chain or branched and contains at least one C-C triple bond. 1- and 2-propynyl and 1-, 2- and 3-butynyl are preferred.

Preferred carbon and hydrocarbon groups are optionally substituted, straight-chain, branched or cyclic, alkyl, alkenyl, alkynyl, alkoxy, alkylcarbonyl, alkoxycarbonyl, alkylcarbonyloxy and alkoxycarbonyloxy having 1 to 40, preferably 1 to 20, very preferably 1 to 12, C atoms, optionally substituted aryl or aryloxy having 5 to 30, preferably 6 to 25, C atoms, or optionally substituted alkylaryl, arylalkyl, alkylaryloxy, arylalkyloxy, arylcarbonyl, aryloxycarbonyl, arylcarbonyloxy and aryloxycarbonyloxy having 5 to 30, preferably 6 to 25, C atoms, wherein one or more C atoms may also be replaced by hetero atoms, preferably selected from N, O, S, Se, Te, Si and Ge.

Further preferred carbon and hydrocarbon groups are C₁-C₂₀ alkyl, C₂-C₂₀ alkenyl, C₂-C₂₀ alkynyl, C₃-C₂₀ allyl, C₄-C₂₀ alkyldienyl, C₄-C₂₀ polyenyl, C₆-C₂₀ cycloalkyl, C₄-C₁₅ cycloalkenyl, C₆-C₃₀ aryl, C₆-C₃₀ alkylaryl, C₆-C₃₀ arylalkyl, C₆-C₃₀ alkylaryloxy, C₆-C₃₀ arylalkyloxy, C₂-C₃₀ heteroaryl, C₂-C₃₀ heteroaryloxy.

Particular preference is given to C₁-C₁₂ alkyl, C₂-C₁₂ alkenyl, C₂-C₁₂ alkynyl, C₆-C₂₅ aryl and C₂-C₂₅ heteroaryl.

Further preferred carbon and hydrocarbon groups are straight-chain, branched or cyclic alkyl having 1 to 20, preferably 1 to 12, C atoms, which are unsubstituted or mono- or polysubstituted by F, Cl, Br, I or CN and in which one or more non-adjacent CH₂ groups may each be replaced, independently of one another, by - C(R^{x})=C(R^{x})-, -C=C-, -N(R^{x})-, -O-, -S-, -CO-, -CO-O-, -O-CO-, -O-CO-O- in such a way that O and/or S atoms are not linked directly to one another.

R^{x} preferably denotes H, F, Cl, CN, a straight-chain, branched or cyclic alkyl chain having 1 to 25 C atoms, in which, in addition, one or more non-adjacent C atoms may be replaced by -O-, -S-, -CO-, -CO-O-, -O-CO-, -O-CO-O- and in which one or more H atoms may be replaced by F or CI, or denotes an optionally substituted aryl or aryloxy group with 6 to 30 C atoms, or an optionally substituted heteroaryl or heteroaryloxy group with 2 to 30 C atoms.

Preferred alkyl groups are, for example, methyl, ethyl, n-propyl, isopropyl, n-butyl, isobutyl, s-butyl, t-butyl, 2-methylbutyl, n-pentyl, s-pentyl, cyclopentyl, n-hexyl, cyclohexyl, 2-ethylhexyl, n-heptyl, cycloheptyl, n-octyl, cyclooctyl, n-nonyl, n-decyl, n-undecyl, n-dodecyl, trifluoromethyl, perfluoro-n-butyl, 2,2,2-trifluoroethyl, perfluorooctyl, perfluorohexyl, etc.

Preferred alkenyl groups are, for example, ethenyl, propenyl, butenyl, pentenyl, cyclopentenyl, hexenyl, cyclohexenyl, heptenyl, cycloheptenyl, octenyl, cyclooctenyl, etc.

Preferred alkynyl groups are, for example, ethynyl, propynyl, butynyl, pentynyl, hexynyl, octynyl, etc.

Preferred alkoxy groups are, for example, methoxy, ethoxy, 2-methoxyethoxy, n-propoxy, i-propoxy, n-butoxy, i-butoxy, s-butoxy, t-butoxy, 2-methylbutoxy, n-pentoxy, n-hexoxy, n-heptoxy, n-octoxy, n-nonoxy, n-decoxy, n-undecoxy, n-dodecoxy, etc.

Preferred amino groups are, for example, dimethylamino, methylamino, methylphenylamino, phenylamino, etc.

Aryl and heteroaryl groups can be monocyclic or polycyclic, i.e. they can contain one ring (such as, for example, phenyl) or two or more rings, which may also be fused (such as, for example, naphthyl) or covalently bonded (such as, for example, biphenyl), or contain a combination of fused and linked rings. Heteroaryl groups contain one or more heteroatoms, preferably selected from O, N, S and Se.

Particular preference is given to mono-, bi- or tricyclic aryl groups having 6 to 25 C atoms and mono-, bi- or tricyclic heteroaryl groups having 5 to 25 ring atoms, which optionally contain fused rings and are optionally substituted. Preference is furthermore given to 5-, 6- or 7-membered aryl and heteroaryl groups, in which, in addition, one or more CH groups may be replaced by N, S or O in such a way that O atoms and/or S atoms are not linked directly to one another.

Preferred aryl groups are, for example, phenyl, biphenyl, terphenyl, [1,1':3',1"]terphenyl-2'-yl, naphthyl, anthracene, binaphthyl, phenanthrene, 9,10-dihydro-phenanthrene, pyrene, dihydropyrene, chrysene, perylene, tetracene, pentacene, benzopyrene, fluorene, indene, indenofluorene, spirobifluorene groups, etc.

Preferred heteroaryl groups are, for example, 5-membered rings, such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, isoindole, indolizine, indazole, benzimidazole, benzotriazole, purine, naphthimidazole, phenanthrimidazole, pyridimidazole, pyrazinimidazole, quinoxalinimidazole, benzoxazole, naphthoxazole, anthroxazole, phenanthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]thiophene, dithienothiophene, isobenzothiophene, dibenzothiophene, benzothiophene, benzothiadiazothiophene, or combinations of these groups.

The aryl and heteroaryl groups mentioned above and below may also be substituted by alkyl, alkoxy, thioalkyl, fluorine, fluoroalkyl or further aryl or heteroaryl groups.

The (non-aromatic) alicyclic and heterocyclic groups encompass both saturated rings, i.e. those containing exclusively single bonds, and also partially unsaturated rings, i.e. those which may also contain multiple bonds. Heterocyclic rings contain one or more heteroatoms, preferably selected from Si, O, N, S and Se.

The (non-aromatic) alicyclic and heterocyclic groups can be monocyclic, i.e. contain only one ring (such as, for example, cyclohexane), or polycyclic, i.e. contain a plurality of rings (such as, for example, decahydronaphthalene or bicyclooctane). Particular preference is given to saturated groups. Preference is furthermore given to mono-, bi- or tricyclic groups having 5 to 25 ring atoms, which optionally contain fused rings and are optionally substituted. Preference is furthermore given to 5-, 6-, 7- or 8-membered carbocyclic groups, in which, in addition, one or more C atoms may be replaced by Si and/or one or more CH groups may be replaced by N and/or one or more non-adjacent CH₂ groups may be replaced by -O- and/or -S-.

Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]pentane-1,3-diyl, bicyclo[2.2.2]octane-1,4-diyl, spiro[3.3]heptane-2,6-diyl, octahydro-4,7-methanoindane-2,5-diyl.

Preferred substituents are, for example, solubility-promoting groups, such as alkyl or alkoxy, electron-withdrawing groups, such as fluorine, nitro or nitrile, or substituents for increasing the glass transition temperature (Tg) in the polymer, in particular bulky groups, such as, for example, t-butyl or optionally substituted aryl groups.

Preferred substituents, hereinafter also referred to as "L", are, for example, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, straight-chain or branched alkyl, alkoxy, alkylcarbonyl, alkoxycarbonyl, alkylcarbonyloxy or alkoxycarbonyloxy each having 1 to 25 C atoms, in which one or more H atoms may optionally be replaced by F or C!, optionally substituted silyl having 1 to 20 Si atoms, or optionally substituted aryl having 6 to 25, preferably 6 to 15, C atoms,
wherein R^{x} denotes H, F, Cl, CN, or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F, CI, P- or P-Sp-, and
Y' denotes halogen.

"Substituted silyl or aryl" preferably means substituted by halogen, -CN, R°, -OR⁰, -CO-R⁰, -CO-O-R⁰, -O-CO-R⁰ or -O-CO-O-R⁰, wherein R° denotes H or alkyl with 1 to 20 C atoms.

Particularly preferred substituents L are, for example, F, Cl, CN, NO₂, CH₃, C₂H₅, OCH₃, OC₂H₅, COCH₃, COC₂H₅, COOCH₃, COOC₂H₅, CF₃, OCF₃, OCHF₂, OC₂F₅, furthermore phenyl.

The LC medium according to the invention may additionally comprise one or more further components or additives, preferably selected from the list including but not limited to co-monomers, polymerisation initiators, inhibitors, stabilizers, surfactants, wetting agents, lubricating agents, dispersing agents, hydrophobing agents, adhesive agents, flow improvers, defoaming agents, deaerators, diluents, reactive diluents, auxiliaries, colourants, dyes, pigments and nanoparticles.

The LC media according to the invention may comprise one, two or three chiral dopants, preferably one chiral dopant.

Preferred embodiments, taken alone or in combination with one another, are listed below. The medium according to the invention preferably comprises
- the compound of formula I in a concentration in the range of from 15% to 60%, preferably of 20% to 50%, very preferably from 25% to 45%;
- one or more of the compounds selected from the compound of formula ST-1 and ST-12 in a concentration in the range of from 0.01% to 0.85%, preferably of 0.05% to 0.60%, very preferably from 0.1% to 0.5%;
- the compound of formula H, preferably of the formula H-A, more preferably of formula H-1 in a concentration in the range of from 0.008% to 0.08%, preferably of 0.012% to 0.06%, very preferably from 0.015% to 0.04%;
- one or more compounds of the formula IIA, IIB, IIC, IID, IIE and III in a total concentration in the range of from 68% to 88%, more preferably from 70% to 85% and very preferably from 71% to 83%;
- one, two, three or more compounds of the formula III, preferably of the formula III-1 and/or !!!-2, more preferably of the formula III-2, in a total concentration in the range of from 0% to 15%, more preferably from 1% to 12%, very preferably from 2% to 10% and in particular from 3% to 8%;
- one or more compounds of the formula IIA in a total concentration in the range of from 15% to 50%, more preferably from 15% to 45% and very preferably from 35% to 43% or from 20% to 25%;
- one or more compounds of the formula IIB-2 in a total concentration in the range of from 1% to 30%, more preferably from 1% to 25% and very preferably from 1% to 10%;
- one or more compounds of the formula IIB-10 in a total concentration in the range of from 1% to 20%, more preferably from 1% to 15% and very preferably from 1% to 10%;
- one or more compounds of the formula IIB-2 and/or IIB-10, in a total concentration in the range of from 1% to 30%, more preferably from 1% to 20% and very preferably from 2% to 15%;
- one or more compounds selected from the compounds of formula IIC, more preferably of IIC-1 and IIC-2, preferably of the formula IIC-1, in a total concentration in the range of from 1% to 25%, more preferably from 1% to 20%, and very preferably from 1% to 15%;
- one or more compounds of the formula IIE, preferably of the formula IIE-1, in a total concentration in the range of from 1% to 18%, more preferably from 1% to 15%, and very preferably from 1% to 12%;
- one or more compounds of the formula III, more preferably selected from III-1, IIIA-1, III-2 and IIIA-2, in a total concentration in the range of from 3% to 30%, more preferably from 5% to 25% and very preferably from 7% to 22%;
- two or more tolan compounds of the formulae !, T-1, T-2 and T-3, preferably selected from the formulae I-1, I-2, T-1 and T-3, in a total concentration in the range of from 25% to 80%, more preferably from 30% to 75%, and very preferably from 35% to 65%;
- one or more tolan compounds of the formulae T-1, T-2 and T-3, preferably selected from the formulae T-1 and T-3, in a total concentration in the range of from 10% to 65%, more preferably from 18% to 60%, and very preferably from 18% to 56%;
- one or more of the compounds selected from the compound of formula IV-1/2/3/4 in a concentration in the range of from 6% to 40%, preferably of 7% to 38%, very preferably from 8% to 37%;
- the compound of formula IV-2 in a concentration in the range of from 4% to 20%, preferably of 5% to 15%, very preferably from 6% to 12%.

It is advantageous for the LC medium according to the invention to preferably have a nematic phase from ≤ -20°C to ≥ 90°C, particularly preferably from ≤ -30°C to ≥ 100°C, very particularly preferably from ≤ -40°C to ≥ 105°C.

In a preferred embodiment, the medium according to the invention has a clearing temperature (clearing point) of 80°C or more, more preferably of 90°C or more, more preferably of 100 °C or more and in particular of 105°C or more.

Herein, the expression "to have a nematic phase" at a given temperature means that no smectic phase and no crystallisation is observed at low temperatures and on the other hand that clearing (phase transition to the isotropic phase) does not occur on heating of a nematic phase at a given temperature. The investigation at low temperatures is carried out in a flow viscometer at the corresponding temperature and checked by storage in test cells having a layer thickness corresponding to the electro-optical use for at least 100 hours. If the storage stability at a temperature of -20°C in a corresponding test cell is 1000 h or more, the medium is referred to as stable at this temperature. At temperatures of -30°C and -40°C, the corresponding times are 500 h and 250 h respectively. At high temperatures, the clearing point is measured by conventional methods in capillaries.

The liquid-crystal mixture preferably has a nematic phase range of at least 60 K and a flow viscosity v₂₀ of at most 30 mm² · s⁻¹ at 20°C.

The mixture is nematic at a temperature of -20°C or less, preferably at -30°C or less, very preferably at -40°C or less.

The medium according to the invention has a birefringence (Δn) in the range of from 0.085 to 0.28, preferably from 0.13 to 0.26, and in particular from 0. 15 to 0.255.

In a preferred embodiment, the medium has a birefringence in the range of from 0.15 to 0.20, preferably from 0.16 to 0.19.

In an alternative preferred embodiment, especially for phase modulation, the medium has a birefringence of 0.19 to 0.28, preferably of 0.2 to 0.27, and particularly from 0.21 to 0.26.

In a preferred embodiment, the medium according to the invention has a dielectric anisotropy Δε of -2.5 to -6.5, preferably of -2.8 to -5.2, in particular -3.5 to -4.9.

In a very preferred embodiment, the liquid-crystal mixture according to the invention has a dielectric anisotropy Δε of -3.8 to -4.8.

The rotational viscosity γ₁ at 20°C is preferably in the range of from 90 to 300 mPa s, more preferably from 100 to 290 mPa s.

The medium according to the invention has an elastic constant K₁ in the range of from 16 to 22 pN, more preferably 18 pN or more.

In a preferred embodiment, the medium according to the invention has a ratio of the rotational viscosity to the splay elastic constant γ₁ / K₁ of 15 mPa·s·pN⁻¹ or less.

The liquid-crystal media according to the invention have relatively low values for the threshold voltage (V₀). They are preferably in the range from 1.7 V to 3.0 V, particularly preferably ≤ 2.6 V and very particularly preferably ≤ 2.4 V.

For the present invention, the term "threshold voltage" relates to the capacitive threshold (V₀), also called the Freedericks threshold, unless explicitly indicated otherwise.

In addition, the liquid-crystal media according to the invention have high values for the voltage holding ratio in liquid-crystal cells.

In general, liquid-crystal media having a low addressing voltage or threshold voltage exhibit a lower voltage holding ratio than those having a higher addressing voltage or threshold voltage and vice versa.

For the present invention, the term "dielectrically positive compounds" denotes compounds having a Δε > 1.5, the term "dielectrically neutral compounds" denotes those having -1.5 ≤ Δε ≤ 1.5 and the term "dielectrically negative compounds" denotes those having Δε < -1.5. The dielectric anisotropy of the compounds is determined here by dissolving 10 % of the compounds in a liquid-crystalline host and determining the capacitance of the resultant mixture in at least one test cell in each case having a layer thickness of 20 µm with homeotropic and with homogeneous surface alignment at 1 kHz. The measurement voltage is typically 0.5 V to 1.0 V, but is always lower than the capacitive threshold of the respective liquid-crystal mixture investigated.

All temperature values indicated for the present invention are in °C.

The mixtures according to the invention are suitable for all VA-TFT applications, such as, for example, VAN, MVA, (S)-PVA, ASV, PSA (polymer sustained alignment VA) and PS-VA (polymer stabilized VA). They are furthermore suitable for IPS (in-plane switching) and FFS (fringe field switching) applications having negative Δε.

The mixtures are also particularly suitable for VA-TFT application of the LCoS type, more preferably LCoS microdisplays. LCoS microdisplays are reflective displays which typically contain a liquid-crystal layer having a nematic structure between a silicon backplane and a cover glass. The silicon backplane is an array of pixels, each of which has a mirrored surface which at the same time acts as electrical conductor. Each pixel comprises a stationary mirror covered by an active liquid-crystal layer having a twisted nematic alignment which can be switched between homeotropic and homogeneous alignment by application of a voltage. LCoS microdisplays are small, with a diagonal of typically less than 1 inch, but enable high resolutions nevertheless.

Owing to the small pixel size, LCoS displays also have a very small cell thickness, which is typically in the range of 1-2 µm. The liquid-crystalline phases used in these displays therefore need to have high values for the optical anisotropy Δn, in contrast to conventional reflective-type LC displays, which usually require LC phases of low Δn.

In a preferred embodiment, the LCoS panel according to the invention comprises inorganic alignment layers, more preferably vertical alignment layers for vertical alignment of the liquid crystal medium. Such inorganic alignment layers are especially suitable for LCoS panels having high light intensities. A typical and preferred material for those layers is silica (SiOₓ), which is applied with specific deposition techniques.

An LCoS device provides a dense array of light modulating elements, or pixels, within a small aperture (e.g., a few centimeters in width). The pixels are typically approximately 10 microns or less meaning that the optical system can be compact. An LCoS device is typically reflective which means that the circuitry which drives the pixels of a LCoS can be buried under the reflective surface. This results in a higher aperture ratio meaning there is very little dead space between the pixels. An LCoS panel uses a silicon backplane which has the advantage that the pixels are optically flat. This is particularly important for a phase modulating device.

Hence, in a preferred embodiment and referring to Fig. 1 there is provided a reflective spatial light modulator, in particular an LCoS panel 100 including the liquid crystal material 140 as defined above, sandwiched between a transparent glass layer 110 having a transparent electrode 120, a pixelated mirror 150 mounted on a silicon CMOS backplane 160 and its mounting (not shown). The mirror is divided into a two-dimensional array of individually addressable pixels. Each pixel is individually drivable by a voltage signal to provide a local phase change to at least one polarization or phase component of an optical signal, thereby providing a two-dimensional array of phase manipulating regions. Pre-alignment of the liquid crystal 140 is provided by alignment layers 131 and 132.

Said LCOS panel is useful for the integration into optical devices. The described LCOS panel outputs spatially modulated light in reflection. Reflective LCoS panels have the advantage that the signal lines, gate lines and transistors are below the mirrored surface, which results in high fill factors (typically greater than 90 percent) and high resolutions. Another advantage of using a reflective LCOS spatial light modulator is that the liquid crystal layer can be half the thickness than would be necessary if a transmissive device were used. This greatly improves the switching speed of the liquid crystal (a key advantage for the projection of moving video images).

Examples of devices comprising the optical component according to the invention are holographic projectors, head-up displays comprising at least one holographic projection channel, a driver monitoring system for a head-up display, more preferably an infrared holographic projector for a driver monitoring system of a head-up display, an augmented reality head-up display, "AR-HUD", including eye-tracking or head-tracking, a picture generating unit and integrated infrared holographic illuminator for head-tracking or eye-tracking.

A spatial light modulator may be used to display a diffractive pattern including a computer-generated hologram. If the hologram is a phase-only hologram, a spatial light modulator which modulates phase is required. If the hologram is a fully-complex hologram, a spatial light modulator which modulates phase and amplitude may be used or a first spatial light modulator which modulates phase and a second spatial light modulator which modulates amplitude may be used.

Other preferred devices are infrared imagers, wavelength selective switches, LCoS-SLM, LIDAR systems, wavelength-division multiplexing (WDM) systems, reconfigurable optical add-drop multiplexer (ROADM), and nonmechanical beam steering, e.g., steerable Electro Evanescent Optical Refraction (SEEOR) prism as published in the article P. McManamon, 2006, "Agile Nonmechanical Beam Steering," Opt. Photon. News 17(3): 24-29.

The technology incorporates an LCoS panel and a red-green-blue (RGB) light source. The red-green-blue (RGB) light source is configured to emit red color, green color, and blue color light at the same time or at different times (e.g., time multiplexed RGB LEDs or laser diodes). As one example, the light source is an RGB light source using arrays of red, green and blue micro-LEDs as proposed in for example EP3539157 A1.

RGB refers to the three primary colors of light, red, green and blue, out of which the other colors and white may be formed. A conventional single LED may only send single-color (monochromatic) light, which may be one of these three primary colors. To create more colors, three LEDs may be used together for an RGB mix. An RGB LED is in principle three single-color LEDs placed close to one another, often in the same package, and which are red, green and blue in color. When all the LEDs of an RGB-LED emit at proportionately the same luminous intensity, and the right kind optics is used, the light emitted from an RGB-LED appears white to the human eye.

The use of an RGB light source avoids exposure of the liquid crystal to UV light which can be unavoidable when conventional light sources are used, such as for example cold-cathode fluorescent lamps.

According to another aspect of the present invention there is thus provided an optical device comprising an RGB light source, and the optical component described above, where the phase of an incident optical signal from said RGB light source is modulated by the component when the optical device is in operation.

According to another aspect of the present invention there is provided a method of spatially modulating visible or infrared light, the method comprising,
i) providing a LCoS panel according to the invention;
ii) receiving incident visible or infrared light at a surface of said LCoS panel;
iii) applying a predetermined voltage to each of the individual electrodes of the LCoS panel in order to modulate a refractive index of the liquid crystal layer.

According to another aspect of the present invention there is provided a method of manufacturing an LCoS panel, comprising at least the steps of
a) providing a first substrate with a first electrode having a two dimensional array of individually electrically drivable pixels;
b) depositing a preferred liquid crystal medium as disclosed herein over the first substrate; and
c) mounting a second substrate with a second electrode onto the liquid crystal material.

It goes without saying for the person skilled in the art that the liquid crystal mixture used for the invention may also comprise compounds in which, for example, H, N, O, CI and F have been replaced by the corresponding isotopes.

The compounds according to the present invention can be synthesized by or in analogy to known methods described in the literature (for example in the standard works such as Houben-Weyl, Methoden der Organischen Chemie [Methods of Organic Chemistry], Georg-Thieme-Verlag, Stuttgart), under reaction conditions which are known and suitable for said reactions. Use may also be made here of variants which are known per se, but are not mentioned here. In particular, they can be prepared as described in or in analogy to the following reaction schemes. Further methods for preparing the inventive compounds can be taken from the examples.

Other mesogenic compounds which are not explicitly mentioned above can optionally and advantageously also be used in the media in accordance with the present invention. Such compounds are known to the person skilled in the art.

For the present invention and in the following examples, the structures of the liquid-crystal compounds are indicated by means of acronyms, with the transformation into chemical formulae taking place in accordance with Tables A to C below. All radicals CₘH₂ₘ₊₁, CₙH₂ₙ₊₁, and CₗH₂ₗ₊₁ or CₘH₂ₘ₋₁, CₙH₂ₙ₋₁ and CₗH₂ₗ₋₁ are straight-chain alkyl radicals or alkylene radicals, in each case having n, m and I C atoms respectively. Preferably n, m and I are independently of each other 1, 2, 3, 4, 5, 6, or 7. Table A shows the codes for the ring elements of the nuclei of the compound, Table B lists the bridging units, and Table C lists the meanings of the symbols for the left- and right-hand end groups of the molecules. The acronyms are composed of the codes for the ring elements with optional linking groups, followed by a first hyphen and the codes for the left-hand end group, and a second hyphen and the codes for the right-hand end group. Table D shows illustrative structures of compounds together with their respective abbreviations.

**Table A: Ring elements**

| | | | |
|---|---|---|---|
| **C** | 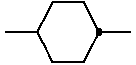 | | |
| **D** | 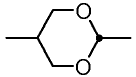 | **DI** | 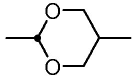 |
| **A** | 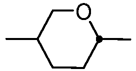 | **AI** | 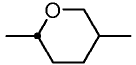 |
| **P** | 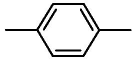 | | |
| **G** | 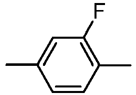 | **GI** | 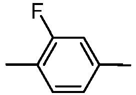 |
| **U** | 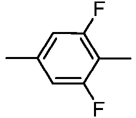 | **UI** | 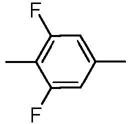 |
| **Y** | 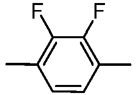 | | |
| **P(F,Cl)** | 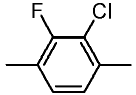 | **P(Cl,F)** | 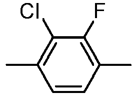 |
| **np** | 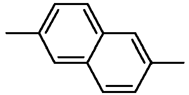 | | |
| **n3f** | 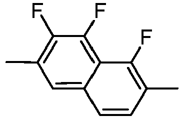 | **nN3fl** | 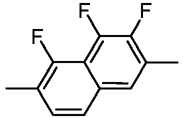 |
| **th** | 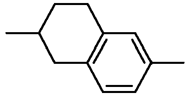 | **thI** | 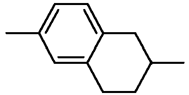 |
| **tH2f** | 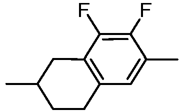 | **tH2fl** | 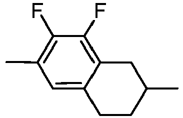 |
| **o2f** | 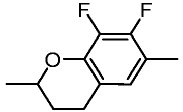 | **o2fl** | 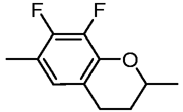 |
| **dh** | 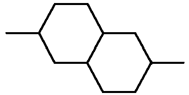 | | |
| **B** | 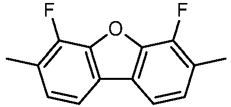 | **B(S)** | 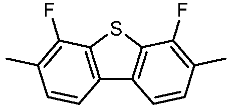 |
| **O** | 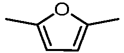 | **S** | 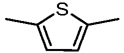 |
| **K** | 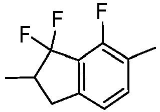 | **KI** | 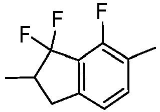 |
| **L** | 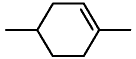 | **LI** | 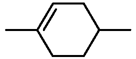 |
| **F** | 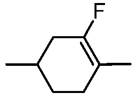 | **FI** | 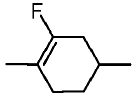 |
| **Bh** | 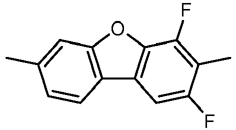 | **Bh(S)** | 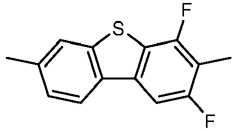 |
| **Bf** | 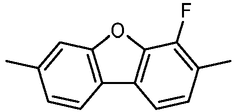 | **Bf(S)** | 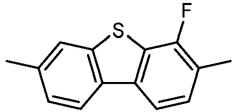 |
| **Bfi** | 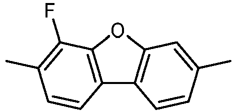 | **Bfi(S)** | 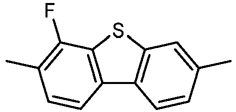 |

**Table B: Bridging units**

| | | | |
|---|---|---|---|
| **E** | -CH₂-CH₂- | | |
| **V** | -CH=CH- | | |
| **T** | -C≡C- | | |
| **W** | -CF₂-CF₂- | | |
| **B** | -CF=CF- | | |
| **Z** | -CO-O- | **ZI** | -O-CO- |
| **X** | -CF=CH- | **XI** | -CH=CF- |
| **O** | -CH₂-O- | **OI** | -O-CH₂- |
| **Q** | -CF₂-O- | **QI** | -O-CF₂- |

**Table C: End groups**

| **On the left individually or in combination** | | **On the right individually or in combination** | |
|---|---|---|---|
| **-n-** | CₙH₂ₙ₊₁- | **-n** | -CₙH₂ₙ₊₁ |
| **-nO-** | CₙH₂ₙ₊₁-O- | **-On** | -O- CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ- | **-Vn** | -CH=CH-CₙH₂ₙ₊₁ |
| **-nVm-** | CₙH₂ₙ₊₁-CH=CH-CₘH₂ₘ- | **-nVm** | - CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| -**CL**- | Cl- | **-CL** | -Cl |
| -**M**- | CFH₂- | **-M** | -CFH₂ |
| -**D**- | CF₂H- | **-D** | -CF₂H |
| -**T**- | CF₃- | **-T** | -CF₃ |
| -**MO**- | CFH₂O - | **-OM** | -OCFH₂ |
| -**DO**- | CF₂HO - | **-OD** | -OCF₂H |
| -**TO**- | CF₃O - | **-OT** | -OCF₃ |
| -**A**- | H-C≡C- | **-A** | -C≡C-H |
| -**nA**- | CnH₂ₙ₊₁-C≡C- | **-An** | -C≡C-CnH₂ₙ₊₁ |
| -**NA**- | N≡C-C≡C- | **-AN** | -C≡C-C≡N |
| -**(cn)**- | 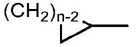 | **-(cn)** | 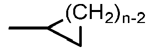 |
| -**(cn)m-** | 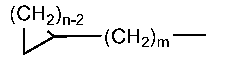 | **-m(cn)** | 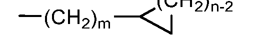 |

| **On the left only in combination** | | **On the right only in combination** | |
|---|---|---|---|
| **-...n...-** | -CₙH₂ₙ- | **-...n...** | -CₙH₂ₙ- |
| **-...M...-** | -CFH- | **-...M...** | -CFH- |
| **-...D...-** | -CF₂- | **-...D...** | -CF₂- |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

in which n and m are each integers, and the three dots "... " are placeholders for other abbreviations from this table.

Apart from the compounds of formula IV-2, I and ST-1 the mixtures according to the invention optionally comprise one or more compounds of the compounds listed in Table D.

The following abbreviations are used:
(n, m, k and I are, independently of one another, each an integer, preferably 1 to 9 preferably 1 to 7, k and I possibly may be also 0 and preferably are 0 to 4, more preferably 0 or 2 and most preferably 2, n preferably is 1, 2, 3, 4 or 5, in the combination "-nO-" it preferably is 1, 2, 3 or 4, preferably 2 or 4, m preferably is 1, 2, 3, 4 or 5, in the combination "-Om" it preferably is 1, 2, 3 or 4, more preferably 2 or 4. The combination "-IVm" preferably is "2V1".)

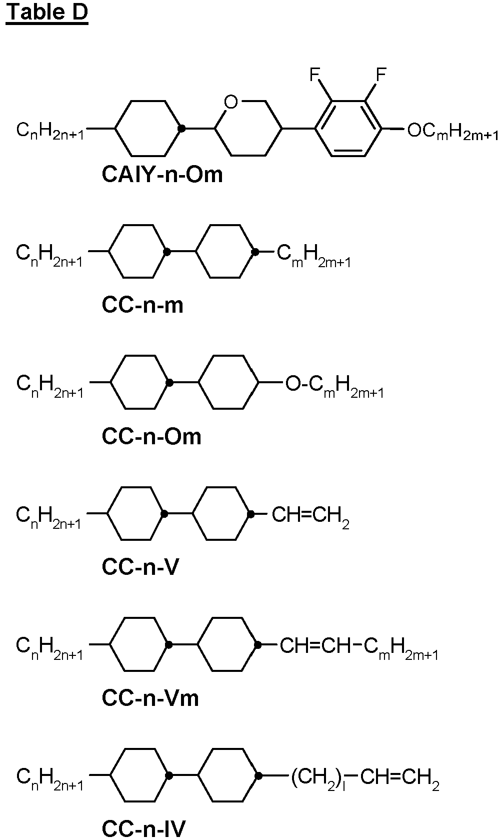

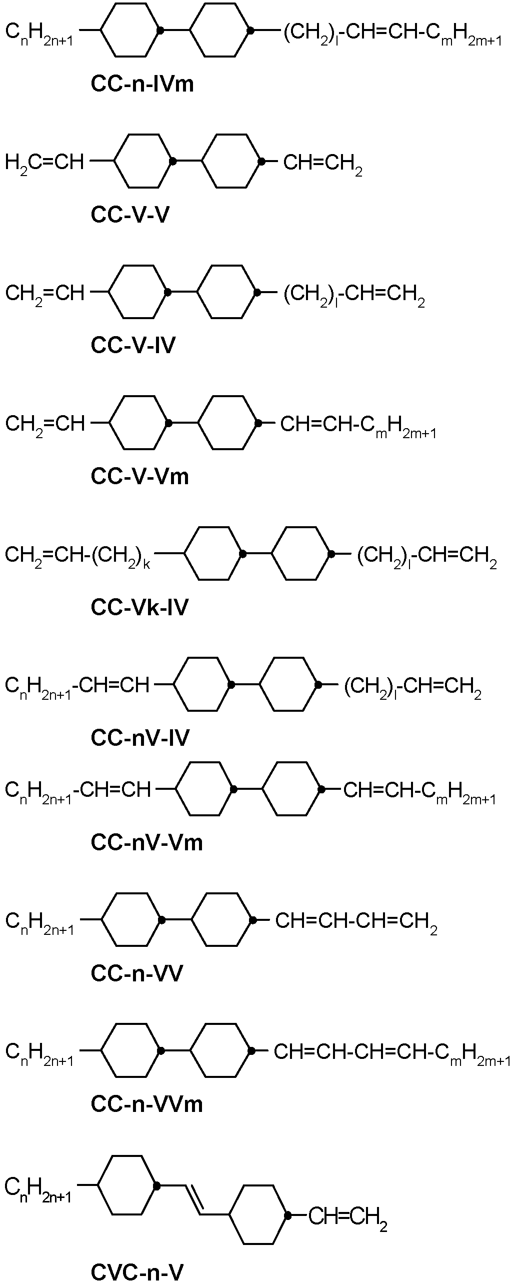

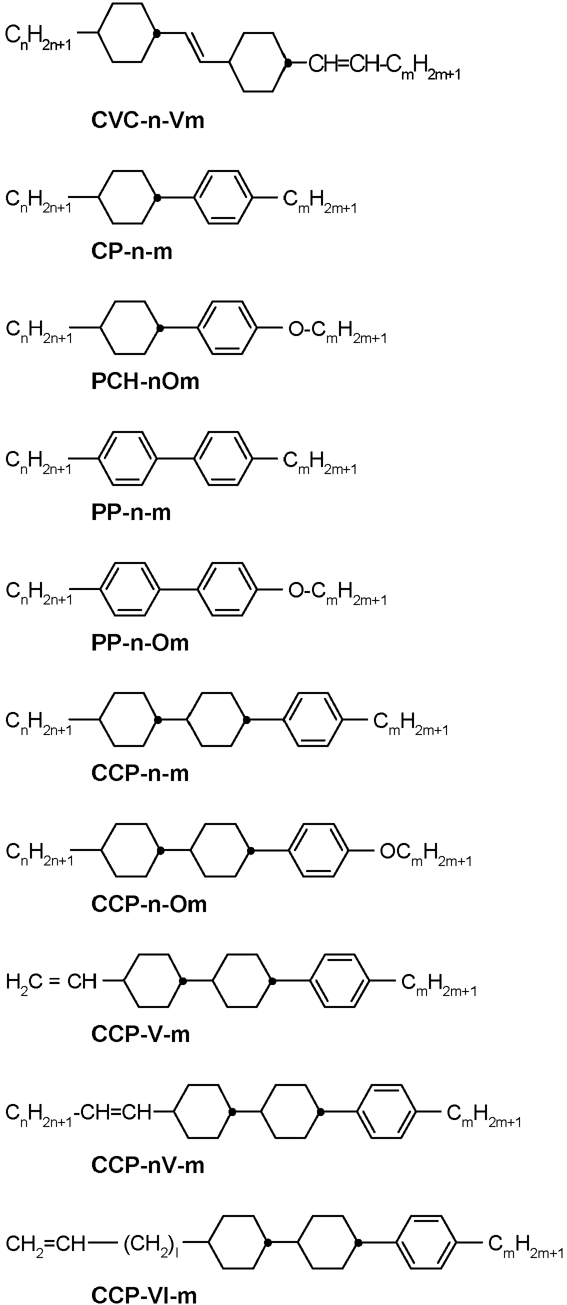

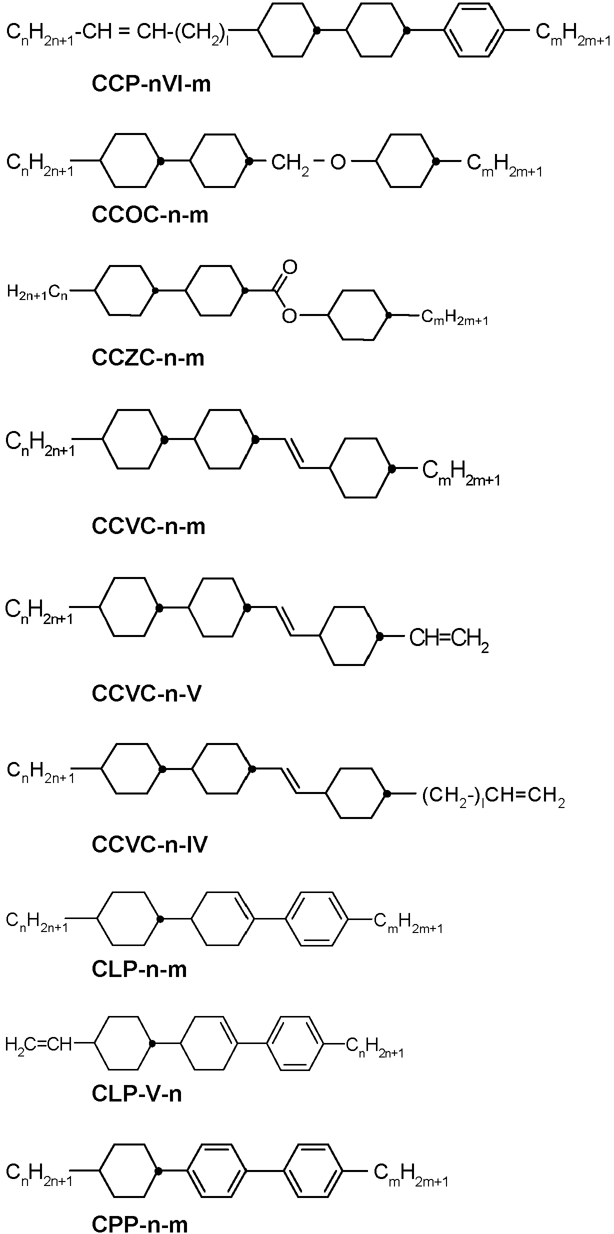

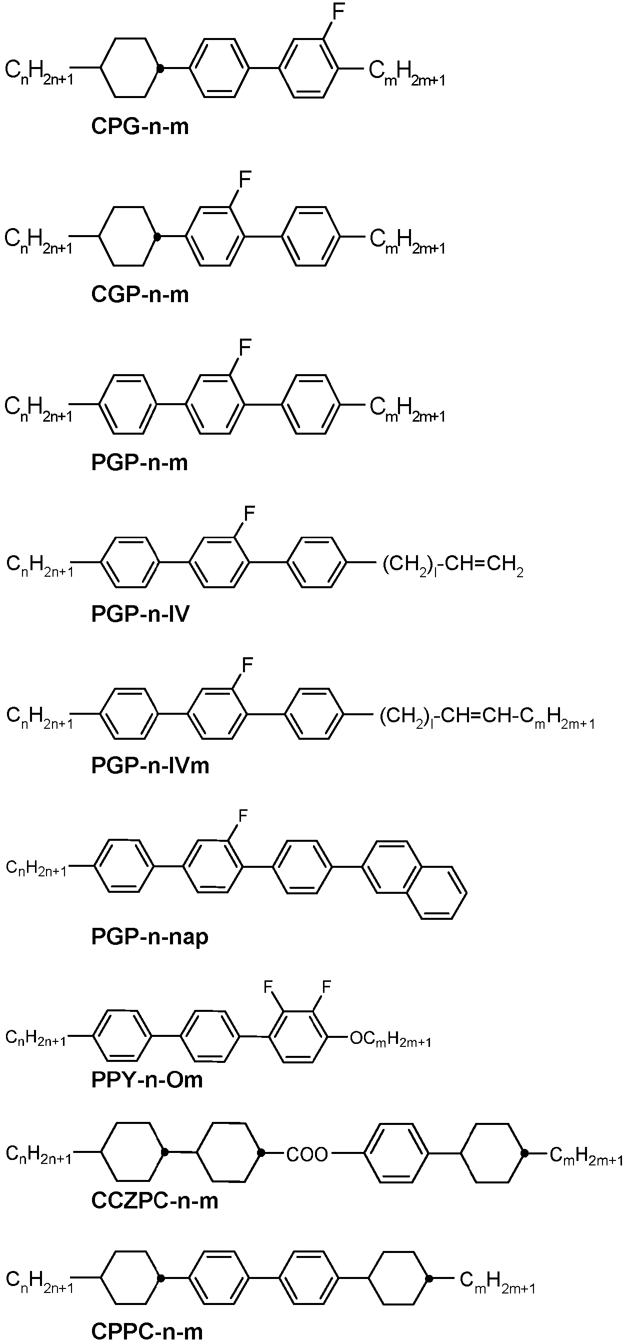

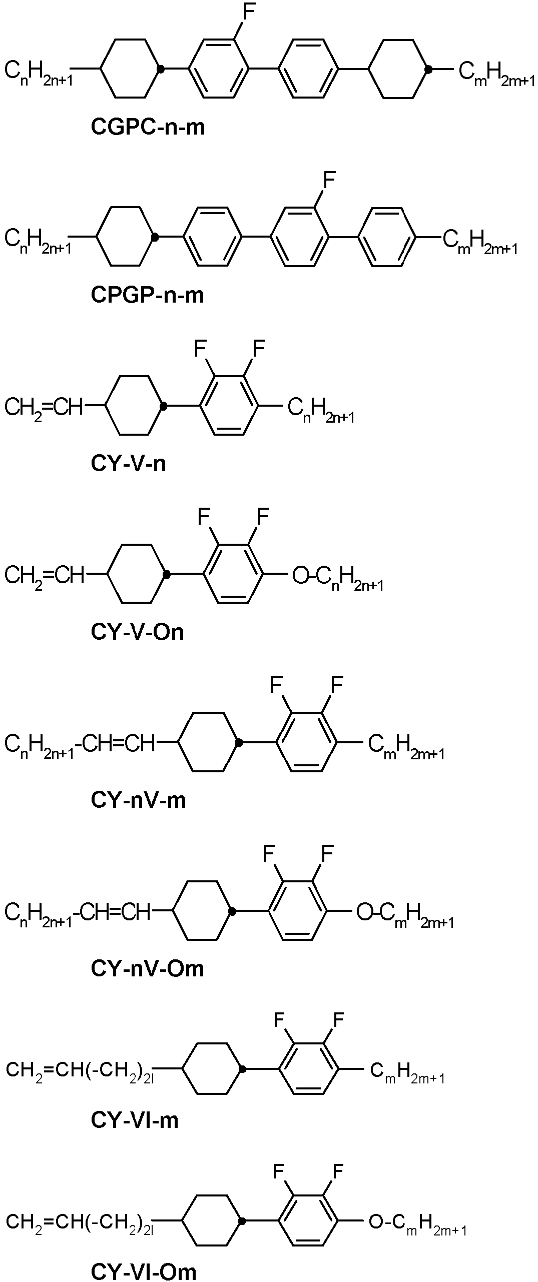

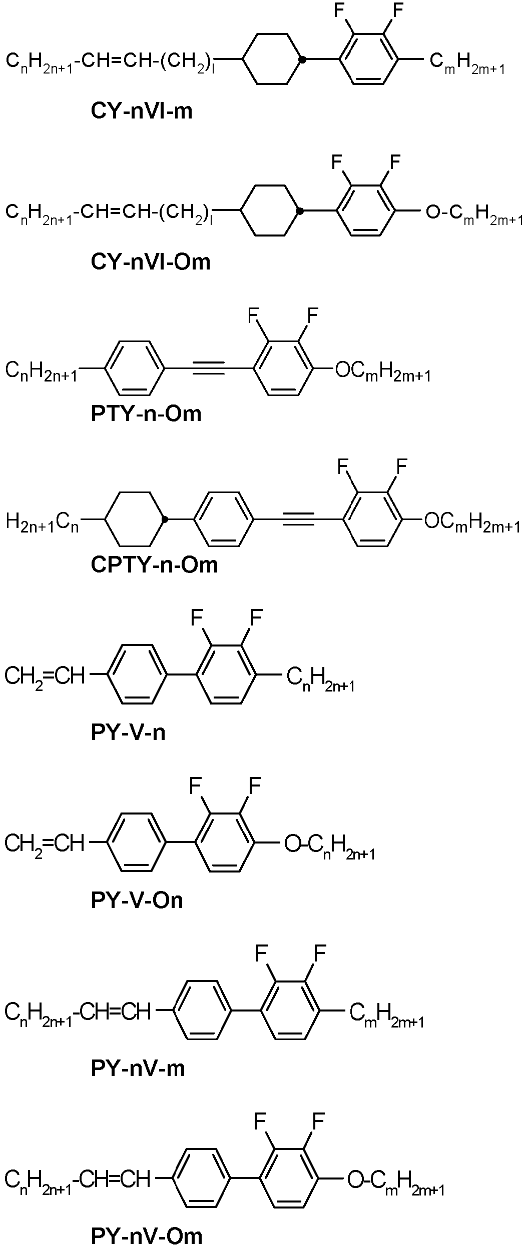

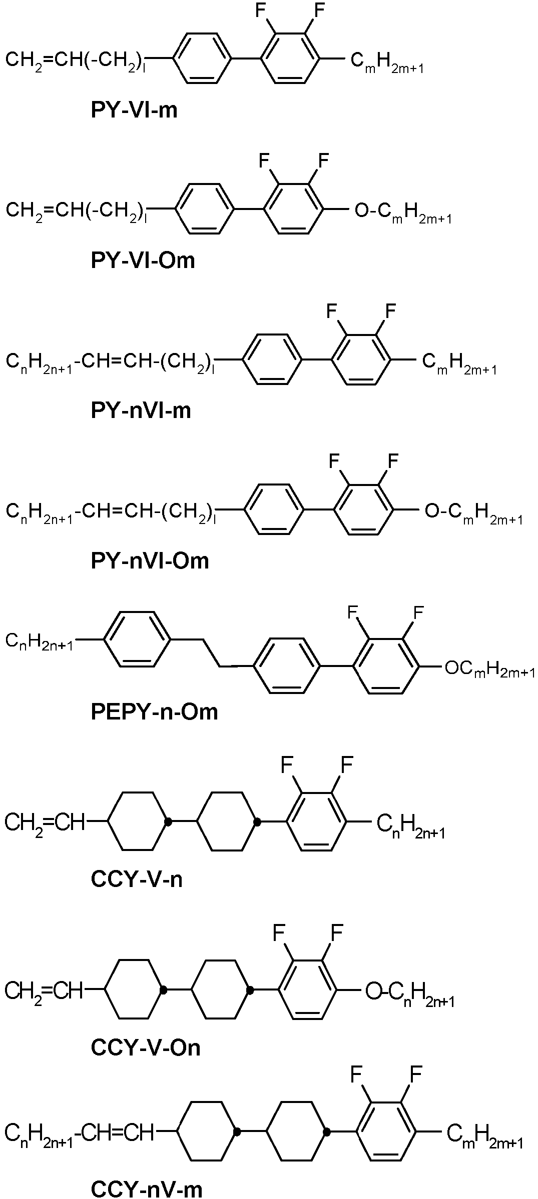

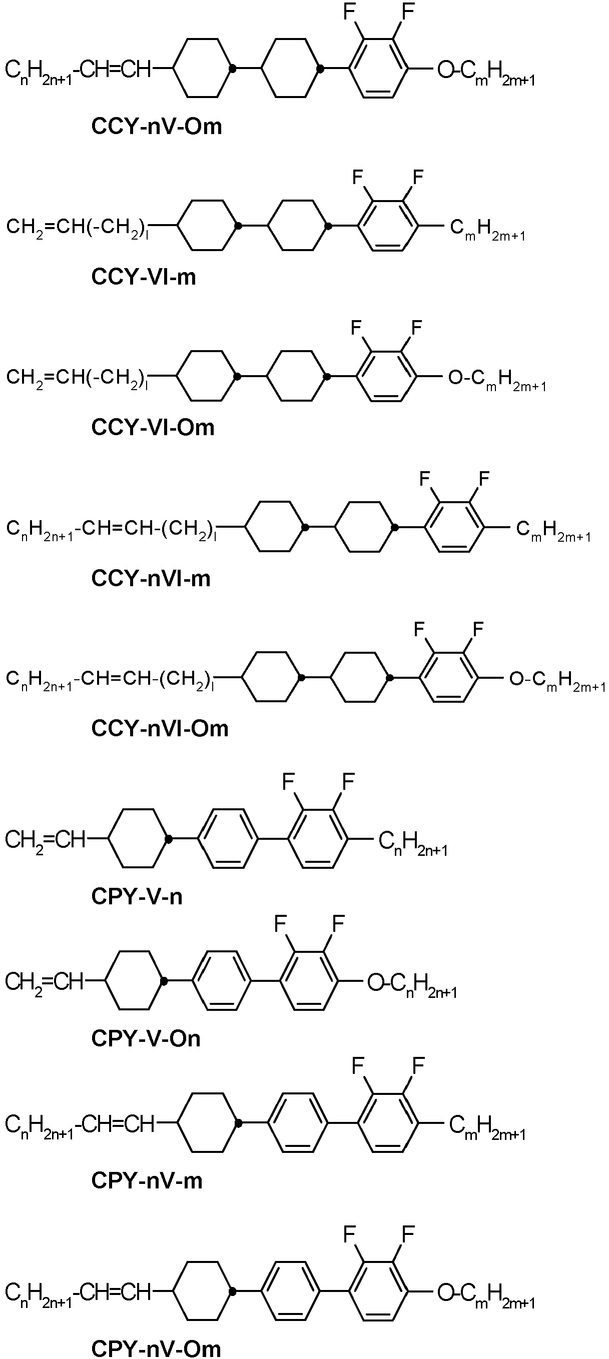

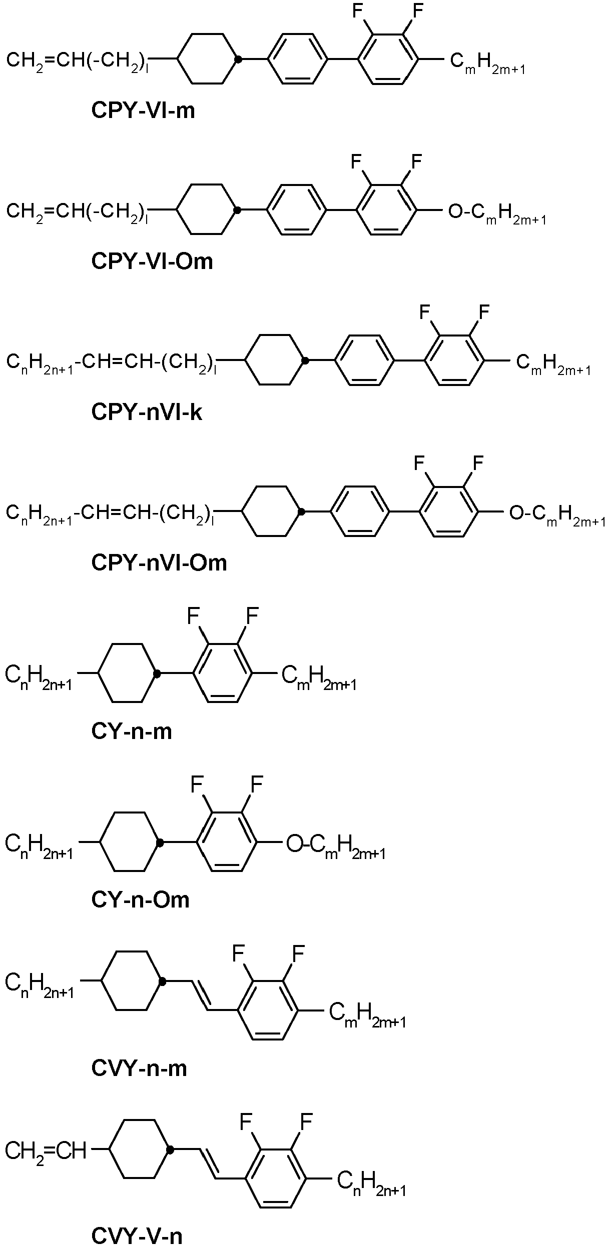

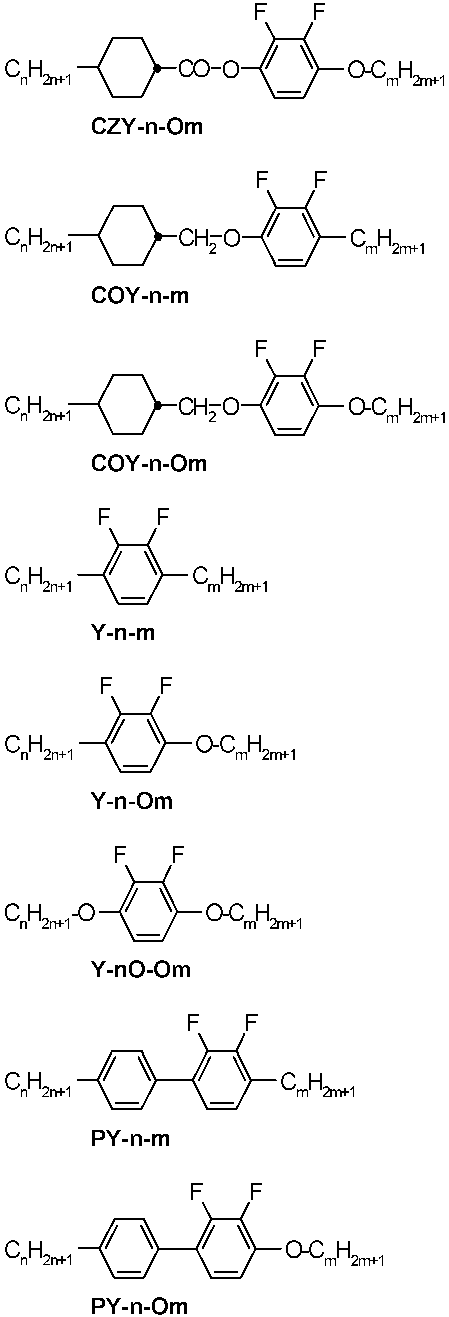

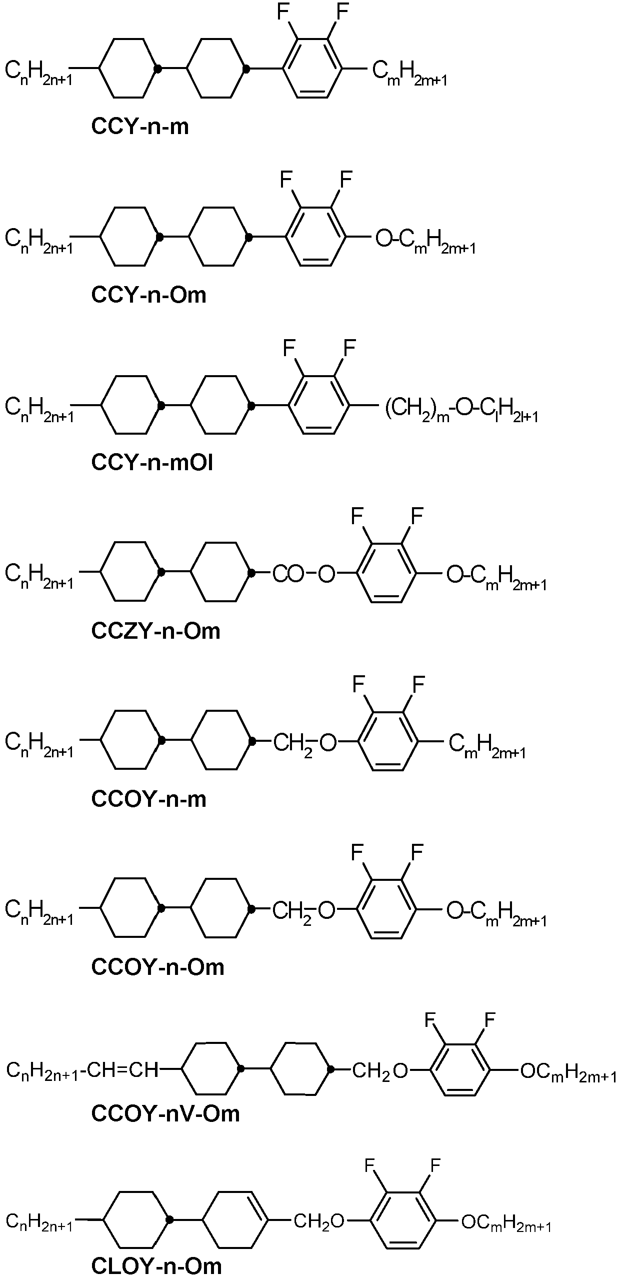

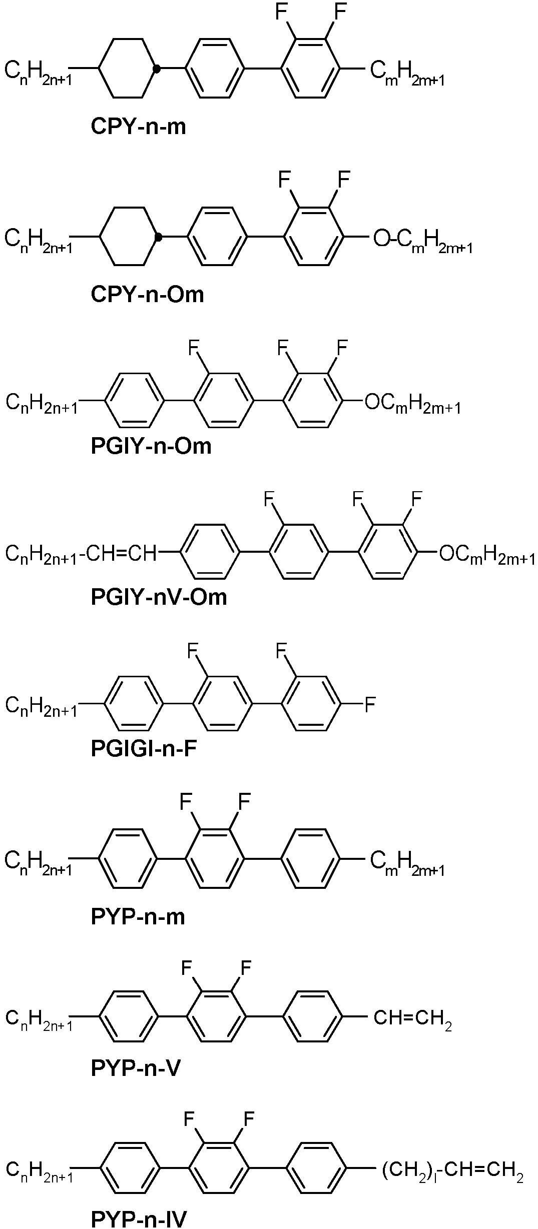

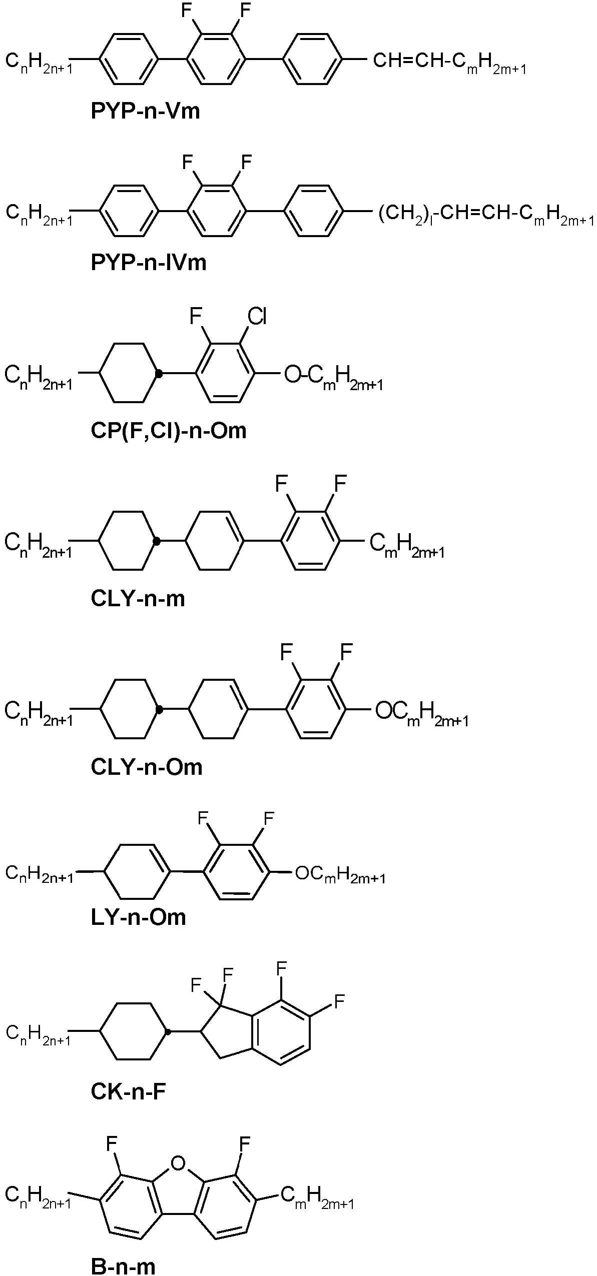

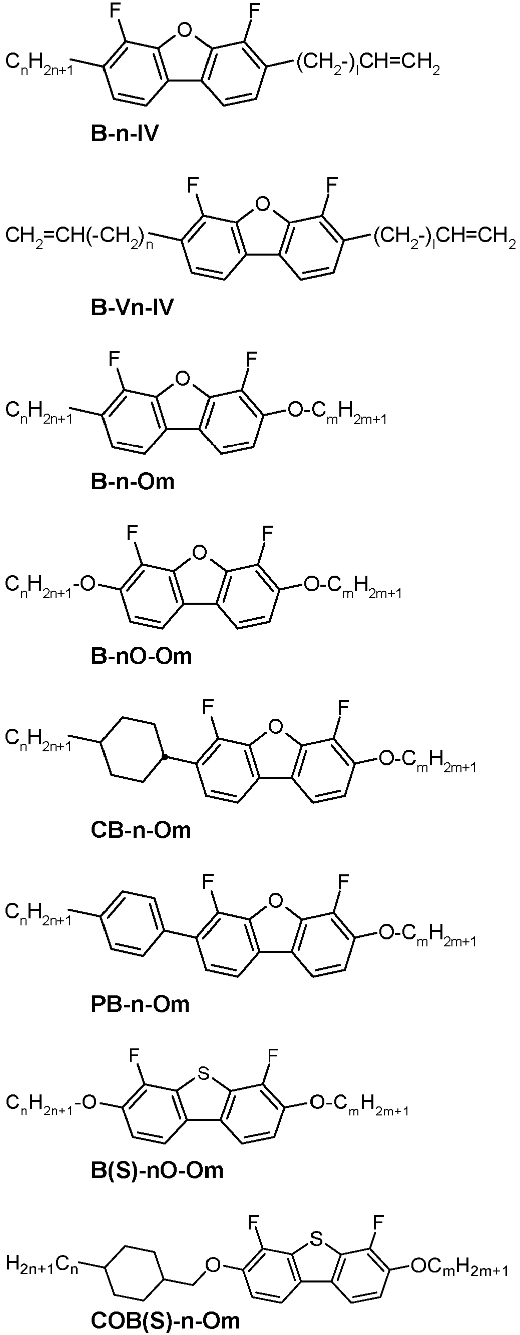

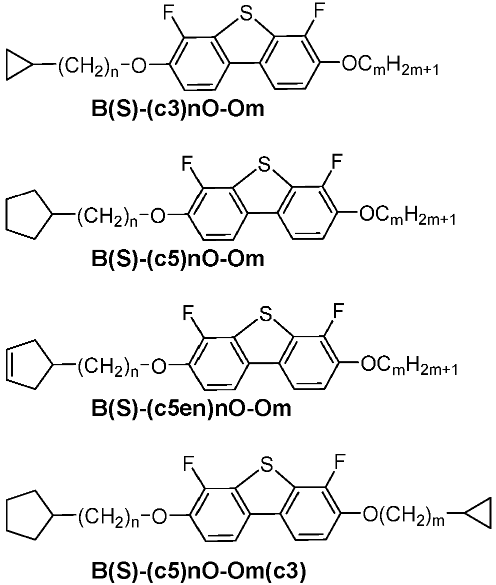

Table E shows chiral dopants which are preferably employed in the mixtures according to the invention.

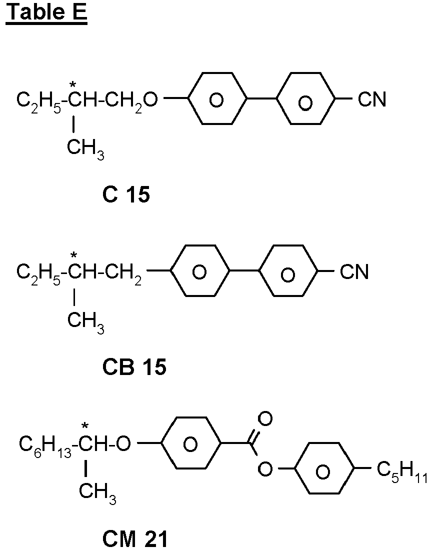

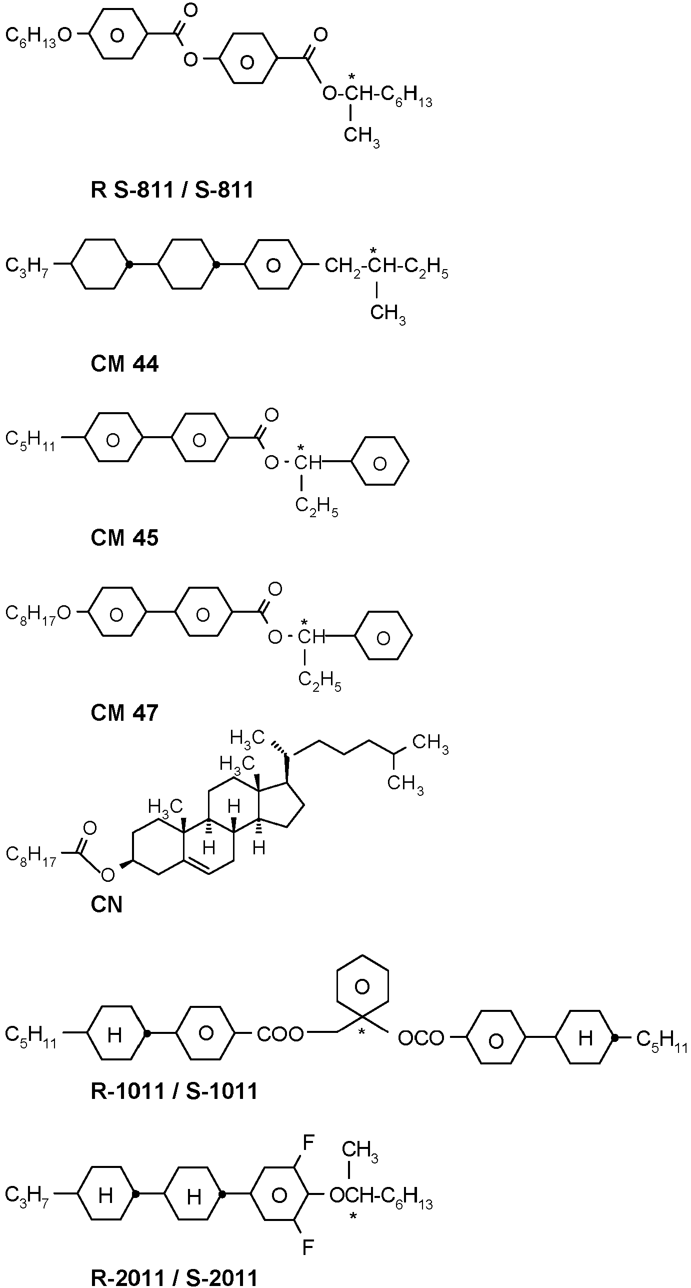

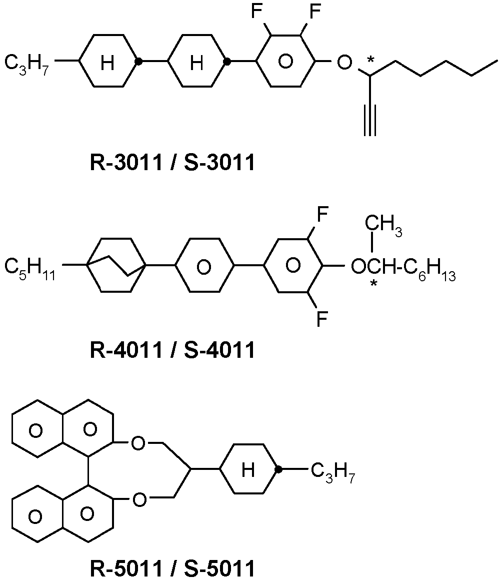

In a preferred embodiment of the present invention, the media according to the invention comprise one or more compounds selected from the group of the compounds from Table E.

### Examples

The present invention is illustrated in detail by the following non-restrictive working examples.

The following abbreviations and symbols are used:
- V₀: threshold voltage, capacitive [V] at 20°C,
- nₑ: extraordinary refractive index at 20°C and 589 nm,
- nₒ: ordinary refractive index at 20°C and 589 nm,
- Δn: optical anisotropy at 20°C and 589 nm,
- ε_{⊥}: dielectric permittivity perpendicular to the director at 20°C and 1 kHz,
- ε_{∥}: dielectric permittivity parallel to the director at 20°C and 1 kHz,
- Δε: dielectric anisotropy at 20°C and 1 kHz,
- cl.p., T(N,I): clearing point [°C],
- γ₁: rotational viscosity at 20°C [mPa·s],
- K₁: elastic constant, "splay" deformation at 20°C [pN],
- K₂: elastic constant, "twist" deformation at 20°C [pN],
- K₃: elastic constant, "bend" deformation at 20°C [pN].

Unless explicitly noted otherwise, all concentrations in the present application are quoted in per cent by weight and relate to the corresponding mixture as a whole, comprising all solid or liquid-crystalline components, without solvents.

Unless explicitly noted otherwise, all temperature values indicated in the present application, such as, for example, for the melting point T(C,N), the transition from the smectic (S) to the nematic (N) phase T(S,N) and the clearing point T(N,I), are quoted in degrees Celsius (°C). M.p. denotes melting point, cl.p. = clearing point. Furthermore, C = crystalline state, N = nematic phase, S = smectic phase and I = isotropic phase. The data between these symbols represent the transition temperatures.

All physical properties are and have been determined in accordance with "Merck Liquid Crystals, Physical Properties of Liquid Crystals", Status Nov. 1997, Merck KGaA, Germany, and apply for a temperature of 20°C, and Δn is determined at 589 nm and Δε at 1 kHz, unless explicitly indicated otherwise in each case.

The term "threshold voltage" for the present invention relates to the capacitive threshold (V₀), also known as the Freedericks threshold, unless explicitly indicated otherwise. In the examples, the optical threshold may also, as generally usual, be quoted for 10% relative contrast (V₁₀).

Unless stated otherwise, methods of preparing test cells and measuring their electrooptical and other properties are carried out by the methods as described hereinafter or in analogy thereto.

The display used for measurement of the capacitive threshold voltage consists of two plane-parallel glass outer plates with a distance of 25 µm, each of which has on the inside an electrode layer and an unrubbed polyimide alignment layer on top, which effect homeotropic alignment of the liquid-crystal molecules.

Unless indicated otherwise, the VHR is determined at 20°C (VHR₂₀) and after 5 minutes in an oven at 100°C (VHR₁₀₀) in a commercially available instrument Model LCM-1 (O0004) from TOYO Corporation, Japan. The voltage used has a frequency of in a range from 1 Hz to 60 Hz, unless indicated more precisely.

The stability to UV irradiation is investigated in a "Suntest CPS+", a commercial instrument from Heraeus, Germany, using a Xenon lamp NXE1500B. The sealed test cells are irradiated for 2.0 h, unless explicitly indicated, without additional heating. The irradiation power in the wavelength range from 300 nm to 800 nm is 765 W / m² V. A UV "cut-off" filter having an edge wavelength of 310 nm is used in order to simulate the so-called window glass mode. In each series of experiments, at least four test cells are investigated for each condition, and the respective results are indicated as averages of the corresponding individual measurements.

In order to investigate the low-temperature stability, also known as "LTS", i.e. the stability of the LC mixture in the bulk against spontaneous crystallisation of individual components at low temperatures or the occurrence of smectic phases, as the case may be, several sealed bottles, each containing about 1 g of the material, are stored at one or more given temperatures, typically of -10°C, -20°C, -30°C and/or -40°C and it is inspected at regular intervals visually, whether a phase transition is observed or not. As soon as the first one of the samples at a given temperature shows a change time is noted. The time until the last inspection, at which no change has been observed, is noted as the respective LTS.

The ion density from which the resistivity is calculated is measured using the commercially available LC Material Characteristics Measurement System Model 6254 from Toyo Corporation, Japan, using VHR test cells with AL16301 Polyimide (JSR Corp., Japan) having a 3.2µm cell gap. The measurement is performed after 5 min of storage in an oven at 60 °C or 100 °C.

The clearing point is measured using the Mettler Thermosystem FP900. The optical anisotropy (Δn) is measured using an Abbe Refractometer H005 (Natrium-spectral lamp Na10 at 589nm, 20 °C). The dielectric anisotropy (Δε) is measured using an LCR-Meter E4980A/Agilent (G005) at 20°C (ε-parallel-cells with JALS 2096-R1). The turn on voltage (V₀) is measured using an LCR-Meter E4980A/Agilent (G005) at 20°C (ε-parallel-cells with JALS 2096-R1). The rotational viscosity (γ₁) is measured using a TOYO LCM-2 (0002) at 20°C (gamma 1 negative cells with JALS-2096-R1). The elastic constant (K₁, splay) is measured using an LCR-Meter E4980A/Agilent (G005) at 20°C (ε parallel-cells with JALS 2096-R1). K₃: The elastic constant (K₃, bend) is measured using an LCR-Meter E4980A/Agilent (G005) at 20°C (ε-parallel-cells with JALS 2096-R1).

The following mixture examples having negative dielectric anisotropy are suitable, in particular, for vertically aligned liquid-crystal displays.

### Mixture Examples

The following stabilizing compounds are used and described with the acronyms as follows:

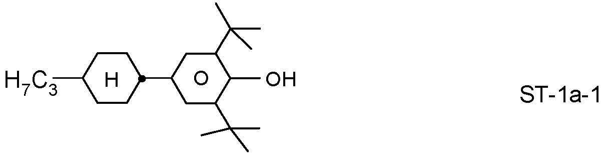

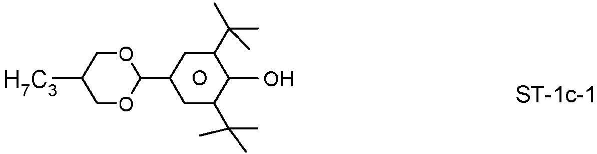

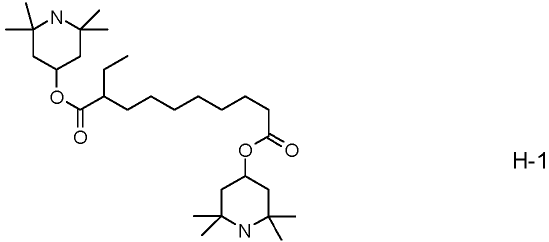

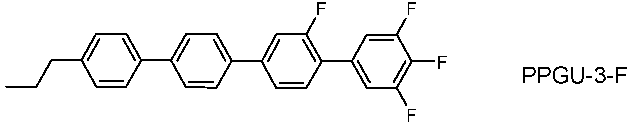

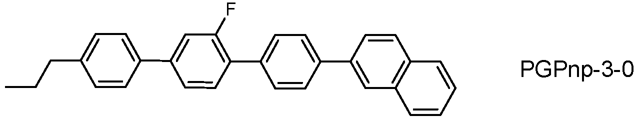

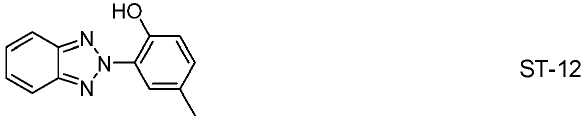

The following nematic LC mixtures have the composition and physical properties given in the following tables:

### Comparative Mixture CM1

| | | | |
|---|---|---|---|
| B(S)-2O-O4 | 6.972 % | T_{(N,I)} [°C]: | 125.5 |
| B(S)-2O-O5 | 5.976 % | Δn (589 nm, 20°C): | 0.19 |
| B(S)-2O-O6 | 5.976 % | nₑ (20°C, 589.3 nm): | 1.68 |
| B-2O-O5 | 4.98 % | nₒ (20°C, 589.3 nm): | 1.49 |
| CPP-3-2 | 9.96 % | Δε (1 kHz, 20°C): | -4.0 |
| CC-3-V | 6.972 % | ε_{∥} (1 kHz, 20°C): | 4.0 |
| CCP-V-1 | 14.94 % | ε_{⊥} (1 kHz, 20°C): | 8.0 |
| CCP-V2-1 | 4.98 % | K₁ [pN], (20°C): | |
| CLY-3-O2 | 8.964 % | K₃ [pN], (20°C): | |
| CPY-3-O2 | 8.964 % | γ₁ [mPa·s], (20°C): | 258 |
| PGIGI-3-F | 1.992 % | V₀ [V], (20°C): | |
| PGP-2-2V | 14.94 % | | |
| PPTUI-3-2 | 3.984 % | | |
| ST-12 | 0.4 % | | |
| ∑ | 100.0 % | | |

### Example Mixture M2

| | | | |
|---|---|---|---|
| B(S)-2O-O4 | 6 % | T_{(N,I)} [°C]: | 127 |
| B(S)-2O-O5 | 5 % | Δn (589 nm, 20°C): | 0.18 |
| B(S)-2O-O6 | 3 % | nₑ (20°C, 589.3 nm): | 1.68 |
| CPP-3-2 | 8 % | nₒ (20°C, 589.3 nm): | 1.49 |
| CPPC-3-3 | 3 % | Δε (1 kHz, 20°C): | -3.7 |
| CC-3-V | 17.5% | ε_{∥} (1 kHz, 20°C): | 3.7 |
| CC-3-O1 | 8 % | ε_{⊥} (1 kHz, 20°C): | 7.4 |
| CCP-V-1 | 11 % | K₁ [pN], (20°C): | 21.1 |
| CPTY-3-O2 | 15 % | K₃ [pN], (20°C): | 24.1 |
| CPTY-5-O2 | 15 % | γ₁ [mPa·s], (20°C): | 243 |
| PTP-1-O2 | 8.5 % | V₀ [V], (20°C): | 2.69 |
| ∑ | 100.0 % | LTS [h], (-30°C) | >1000 |

### Example Mixture M3

| | | | |
|---|---|---|---|
| B(S)-2O-O4 | 6 % | T_{(N,I)} [°C]: | 124.5 |
| B(S)-2O-O5 | 6 % | Δn (589 nm, 20°C): | 0.18 |
| CC-3-V | 22 % | nₑ (20°C, 589.3 nm): | 1.68 |
| CC-3-O1 | 8 % | nₒ (20°C, 589.3 nm): | 1.49 |
| CCP-V-1 | 10 % | Δε (1 kHz, 20°C): | -3.7 |
| COB(S)-2-O4 | 8 % | ε_{∥} (1 kHz, 20°C): | 3.7 |
| CPTP-3-O1 | 6% | ε_{⊥} (1 kHz, 20°C): | 7.3 |
| CPTY-3-O2 | 13 % | K₁ [pN], (20°C): | 20.9 |
| CPTY-5-O2 | 15 % | K₃ [pN], (20°C): | 23.9 |
| PTP-1-O2 | 6 % | γ₁ [mPa·s], (20°C): | 246 |
| ∑ | 100.0 % | V₀ [V], (20°C): | 2.69 |
| | | LTS [h], (-30 °C) | >1000 |

### Example Mixture M4

| | | | |
|---|---|---|---|
| B(S)-2O-O4 | 6 % | T_{(N,I)} [°C]: | 123 |
| B(S)-2O-O5 | 5 % | Δn (589 nm, 20°C): | 0.18 |
| CPPC-3-3 | 1 % | nₑ (20°C, 589.3 nm): | |
| CC-3-V | 27.5 % | nₒ (20°C, 589.3 nm): | |
| CC-3-O1 | 8 % | Δε (1 kHz, 20°C): | -4,4 |
| COB(S)-2-O4 | 6.5 % | ε_{∥} (1 kHz, 20°C): | |
| CPTP-3-O1 | 4.5 % | ε_{⊥} (1 kHz, 20°C): | |
| CPTY-3-O2 | 17.5 % | K₁ [pN], (20°C): | |
| CPTY-5-O2 | 18 % | K₃ [pN], (20°C): | |
| PTP-302 | 6 % | γ₁ [mPa·s], (20°C): | 215 |
| ∑ | 100.0 % | V₀ [V], (20°C): | |

### Example Mixture M5

| | | | |
|---|---|---|---|
| ST-12 | 0.4 % | T_{(N,I)} [°C]: | 100.5 |
| B(S)-2O-O4 | 5.976 % | Δn (589 nm, 20°C): | 0.25 |
| B(S)-2O-O5 | 4.98 % | nₑ (20°C, 589.3 nm): | 1.75 |
| B(S)-2O-O6 | 3.984 % | nₒ (20°C, 589.3 nm): | 1.50 |
| B-2O-O5 | 3.984 % | Δε (1 kHz, 20°C): | -4.6 |
| CC-3-V | 8.466 % | ε_{∥} (1 kHz, 20°C): | 4.7 |
| CC-3-O1 | 7.968 % | ε_{⊥} (1 kHz, 20°C): | 9.2 |
| CPTY-3-O2 | 12.948 % | K₁ [pN], (20°C): | 18.6 |
| PGIY-2-O4 | 5.976 % | K₃ [pN], (20°C): | 20.2 |
| PPTUI-3-2 | 19.92 % | γ₁ [mPa·s], (20°C): | 313 |
| PPTUI-3-4 | 7.968 % | V₀ [V], (20°C): | 2.22 |
| PTY-3-O2 | 12.948 % | LTS [h], (-20°C) | >1000 |
| PY-3-O2 | 4.482 % | | |
| ∑ | 100.0 % | | |

This mixture is especially suitable for phase modulation combined with short switching times.

### Example Mixture M6

| | | | |
|---|---|---|---|
| ST-12 | 0.4 % | T_{(N,I)} [°C]: | 103 |
| B(S)-2O-O4 | 5.976 % | Δn (589 nm, 20°C): | 0.25 |
| B(S)-2O-O5 | 4.98 % | nₑ (20°C, 589.3 nm): | |
| B(S)-2O-O6 | 3.984 % | nₒ (20°C, 589.3 nm): | |
| B-2O-O5 | 3.984 % | Δε (1 kHz, 20°C): | -4.5 |
| CC-3-V | 11.454 % | ε_{∥} (1 kHz, 20°C): | |
| CC-3-O1 | 7.968 % | ε_{⊥} (1 kHz, 20°C): | |
| CPTY-3-O2 | 15.936 % | K₁ [pN], (20°C): | |
| PGIY-2-O4 | 1.992 % | K₃ [pN], (20°C): | |
| PPTUI-3-2 | 18.426 % | γ₁ [mPa·s], (20°C): | 313 |
| PPTUI-3-4 | 7.968 % | V₀ [V], (20°C): | |
| PTY-3-O2 | 14.94 % | | |
| PTY-5-O2 | 1.992 % | | |
| ∑ | 100.0 % | | |

This mixture is especially suitable for phase modulation combined with short switching times.

The above Example Mixtures are filled at 20 °C into test cells (d = 2.5 µm) with inorganic alignment (SiOₓ) layers or to LCoS panels. Alignment is tested with crossed polarizers. The cells are further observed with camera with magnification (x3). The devices are tested under enforced temperature and illumination (30 h at 300 mW/cm², 460 nm LED). Occurrence of bubbles and dark stains (mura) is avoided over prolonged time. Alignment is found to be vertical and stable. Further results concerning the reliability are summarized in the following table.

**Table 1. Results for the mixtures identified by their number.**

| **No.** | **vertical alignment in cell after filling** | **White spots/bubbles (2 h, 460 nm at 300 mWcm⁻²)** | **Mura (30 h, 460 nm at 300 mWcm⁻²)** |
|---|---|---|---|
| CM1 | + | + | + |
| M2 | + | - | - |
| M3 | + | - | - |
| M5 | + | - | - |
| M5 | + | - | - |
| M6 | + | - | - |

| | | | |
|---|---|---|---|
| (+): feature provided, (-) not provided, (o) no/uncertain result. | | | |

## Claims

1. Liquid Crystal on Silicon (LCoS) panel comprising a semiconductor substrate having a plurality of reflective electrodes, a transparent substrate comprising a transparent electrode assembled with the semiconductor substrate, and a liquid crystal layer arranged between the semiconductor substrate and the transparent substrate,
wherein the liquid crystal layer comprises a liquid crystal medium comprising
a) one or more compounds of formula I 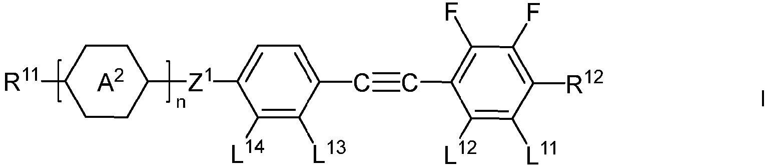 in which
R¹¹ and R¹² denotes alkyl having 1 to 7 C atoms, alkoxy having 1 to 7 C atoms, or alkoxyalkyl, alkenyl or alkenyloxy having 2 to 7 C atoms, where, in addition, one or more CH₂ groups in these radicals may each be replaced, independently of one another by 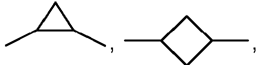 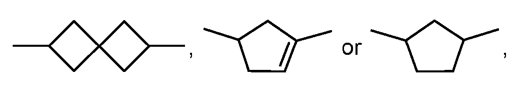 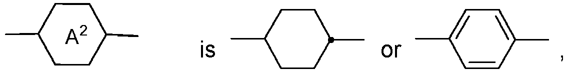
Z¹ denotes a single bond, -CH₂CH₂- or -(CO)O-,
n independently denotes 0 or 1,
L¹¹, L¹², L¹³, L¹⁴ independently denote H or methyl,
b) one or more compounds of formula III 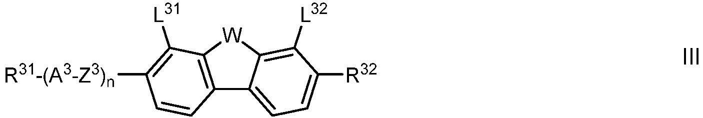 in which
R³¹ and R³² each, independently of one another, denote H, an alkyl or alkoxy radical having 1 to 7 C atoms, where one or more CH₂ groups in these radicals may each be replaced, independently of one another, by 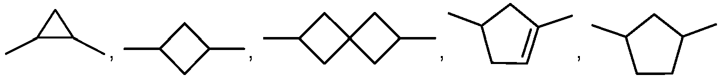 ,-C≡C-, -CF₂O-, -OCF₂-, -CH=CH-, -O-, -CO-O- or -O-CO- in such a way that O atoms are not linked directly to one another, and in which one or more H atoms may be replaced by halogen,
A³ on each occurrence, independently of one another, denotes a 1,4-phenylene radical, in which one or two CH groups may be replaced by N, or a 1,4-cyclohexylene or 1,4-cyclohexenylene radical, in which one or two non-adjacent CH₂ groups may be replaced by -O- or -S-, where the radicals may be mono- or polysubstituted by halogen atoms,
n denotes 0, 1 or 2,
Z³ on each occurrence independently of one another denotes -CF₂O-, -OCF₂-, -CHzO-, -OCH₂-, -CH₂-, -CH₂CH₂-, -CH=CH-, -C≡C- or a single bond,
L³¹ and L³² each, independently of one another, denote F, Cl, CF₃ or CHF₂, and
W denotes O or S,
and
c) one or more compounds of formula IV 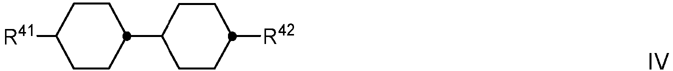 in which
R⁴¹ denotes an unsubstituted alkyl radical having 1 to 7 C atoms or an unsubstituted alkenyl radical having 2 to 7 C atoms, and
R⁴² denotes an unsubstituted alkyl radical having 1 to 7 C atoms or an unsubstituted alkoxy radical having 1 to 6 C atoms or an unsubstituted alkenyl radical having 2 to 7 C atoms.

2. A LCoS panel according to claim 1 comprising one or more inorganic alignment layers.

3. A LCoS panel according to claim 1 or 2 wherein the liquid crystal medium has a clearing point of 90 °C or more.

4. A LCoS panel according to one or more of claims 1 to 3, wherein the liquid crystal medium is vertically aligned with regard to the substrates.

5. A LCoS panel according to one or more of claims 1 to 4, wherein the liquid crystal medium comprises
one or more compounds of formula IV selected from formula IV-2, 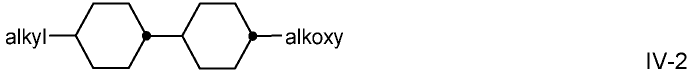 wherein
alkyl denotes alkyl having 1 to 7 C atoms, and
alkoxy denotes alkoxy having 1 to 5 C atoms.

6. A liquid crystal medium comprising
a) one or more compounds of formula I 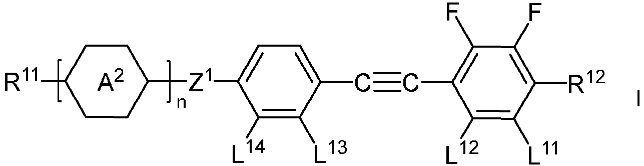 in which
R¹¹ and R¹² denotes alkyl having 1 to 7 C atoms, alkoxy having 1 to 7 C atoms, or alkoxyalkyl, alkenyl or alkenyloxy having 2 to 7 C atoms, where, in addition, one or more CH₂ groups in these radicals may each be replaced, independently of one another by 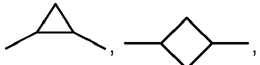 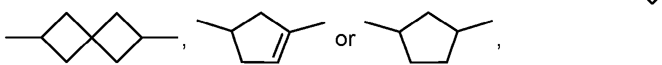 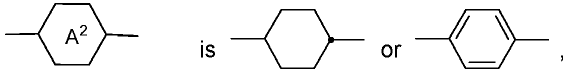
Z¹ denotes a single bond, -CH₂CH₂- or -(CO)O-,
n independently denotes 0 or 1,
L¹¹, L¹², L¹³, L¹⁴ independently denote H or methyl,
b) one or more compounds of formula III 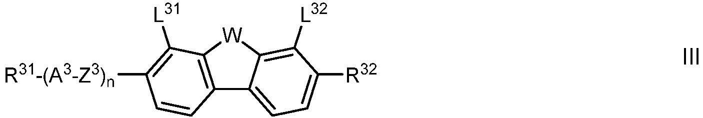 in which
R³¹ and R³² each, independently of one another, denote H, an alkyl or alkoxy radical having 1 to 7 C atoms, where one or more CH₂ groups in these radicals may each be replaced, independently of one another, by 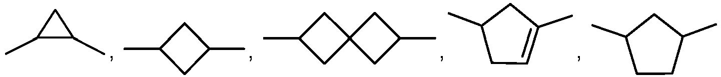 , -C≡C-, -CF₂O-, -OCF₂-, -CH=CH-,
-O-, -CO-O- or -O-CO- in such a way that O atoms are not linked directly to one another, and in which one or more H atoms may be replaced by halogen,
A³ on each occurrence, independently of one another, denotes a 1,4-phenylene radical, in which one or two CH groups may be replaced by N, or a 1,4-cyclohexylene or 1,4-cyclohexenylene radical, in which one or two non-adjacent CH₂ groups may be replaced by -O- or -S-,
where the radicals may be mono- or polysubstituted by halogen atoms, preferably a 1,4-cyclohexylene or 1,4-cyclohexenylene,
n denotes 0, 1 or 2,
Z³ on each occurrence independently of one another denotes -CF₂O-, -OCF₂-, -CHzO-, -OCH₂-, -CH₂-, -CH₂CH₂-, -CH=CH-, -C≡C- or a single bond,
L³¹ and L³² each, independently of one another, denote F, CI, CF₃ or CHF₂, and
W denotes O or S.
and
c) one or more compounds of formula IV 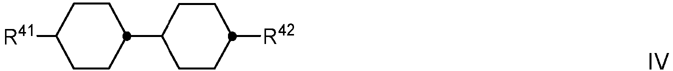 in which
R⁴¹ denotes an unsubstituted alkyl radical having 1 to 7 C atoms or an unsubstituted alkenyl radical having 2 to 7 C atoms, and
R⁴² denotes an unsubstituted alkyl radical having 1 to 7 C atoms or an unsubstituted alkoxy radical having 1 to 6 C atoms, an unsubstituted alkenyl radical having 2 to 7 C atoms.

7. The liquid crystal medium according to claim 6, wherein the medium comprises one or more compounds selected from the group of the formulae e):
e) formulae IIA, IIB, IIC, IID and IIE, 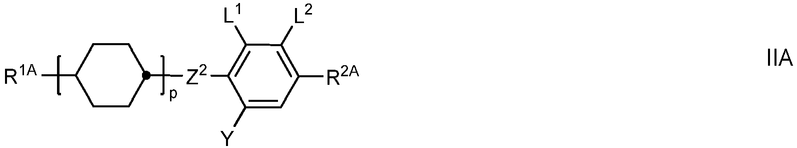 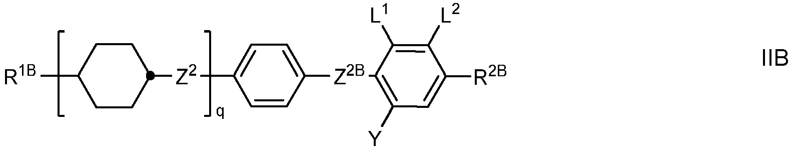 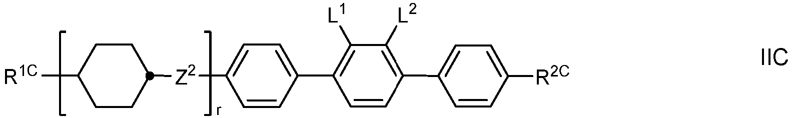 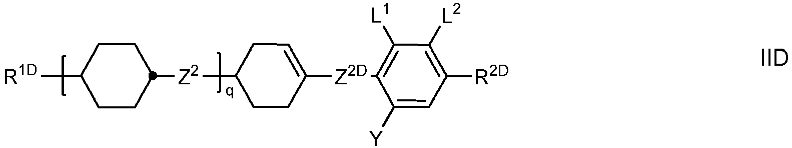 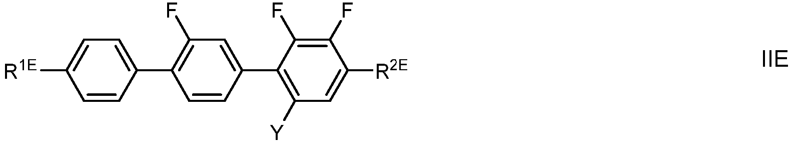 in which
R^{1A}, R^{1B}, R^{1C} and R^{1D} each, independently of one another, denote H, an alkyl radical having 1 to 7 C atoms or an alkenyl radical having 2 to 7 C atoms, each of which is unsubstituted, or at least monosubstituted by halogen, where one or more CH₂ groups in these radicals may be replaced by -O-, -S-, 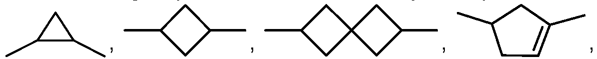 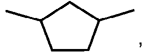 -C≡C-, -CF₂O-, -OCF₂-, -OC-O- or -O-CO- in such a way that O atoms are not linked directly to one another;
R^{2A}, R^{2B}, R^{2C} and R^{2D} each, independently of one another, denote H, an alkyl radical having 1 to 7 C atoms or an alkenyl radical having 2 to 7 C atoms, each of which is unsubstituted, or at least monosubstituted by halogen, where one or more CH₂ groups in these radicals may be replaced by -O-, -S-, 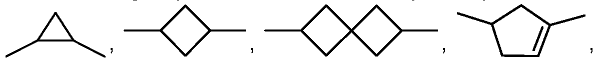 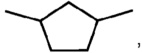 -C≡C-, -CF₂O-, -OCF₂-, -OC-O- or -O-CO- in such a way that O atoms are not linked directly to one another;
L¹ and L² each, independently of one another, denote F, CI, CF₃ or CHF₂;
Y denotes H, F, Cl, CF₃, CHF₂ or CH₃;
Z², Z^{2B} and Z^{2D} each, independently of one another, denote a single bond, -CH₂CH₂-, -CF₂O-, -OCF₂-, -CHzO-, -OCH₂-, -COO-, -OCO-;
R^{1E} independently denotes H, an alkyl radical having 1 to 7 C atoms or an alkenyl radical having 2 to 7 C atoms, each of which is unsubstituted, or at least monosubstituted by halogen, where one or more CH₂ groups in these radicals may be replaced by -O-, -S-, 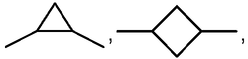 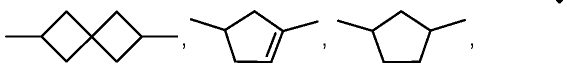 -C≡C-, -CF₂O-, -OCF₂-, -OC-O- or -O-CO- in such a way that O atoms are not linked directly to one another;
R^{2E} independently denotes an alkoxy or alkyl radical having 1 to 7 C atoms or an alkenyl radical having 2 to 7 C atoms, each of which is unsubstituted, or at least monosubstituted by halogen, where one or more CH₂ groups in these radicals may be replaced by 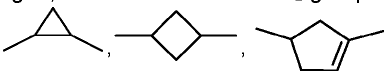 or 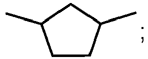
p denotes 0, 1 or 2,
q denotes 0 or 1, and
v denotes 1, 2, 3, 4, 5 or 6.

8. The liquid crystal medium according to one or more of claims 6 to 7, wherein the medium comprises one or more compounds selected from the group of compounds of the formulae T-1 to T-3: 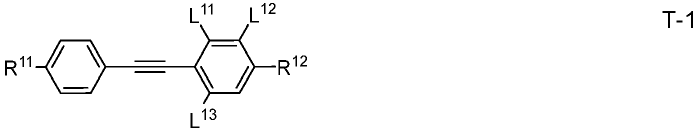 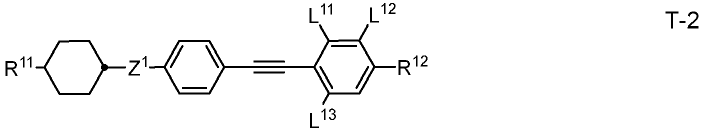 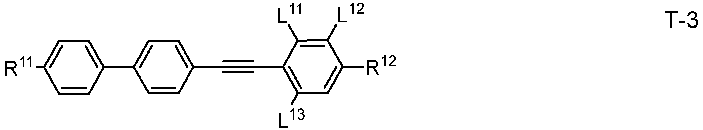
in which R¹¹, R¹² denote alkyl having 1 to 7 C atoms, alkoxy having 1 to 7 C atoms, or alkoxyalkyl, alkenyl or alkenyloxy having 2 to 7 C atoms, where, in addition, one or more CH₂ groups in these radicals may each be replaced, independently of one another by 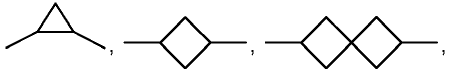 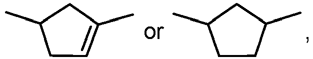
Z¹ is a single bond, -CH₂CH₂-, -CH=CH-, -CF₂O-, -OCF₂-, -CH₂O-, -OCH₂-, -COO-, -OCO-, -C₂F₄-, -CF=CF- or -CH=CHCH₂O-,
L¹¹, L¹² are H, F, CH₃, where L¹¹ and L¹² are not both F,
and
L¹³ is H or F.

9. The liquid crystal medium according to one or more of claims 6 to 8 for use in a LCoS panel.

10. A LCoS panel according to any of claims 1 to 5, wherein the liquid crystal medium is one according to any of claims 6 to 9.

11. A projection system, a near-eye display, an optical phase modulator or a beam-stearing application comprising a LCoS panel according to any of claims 1 to 5, a light source and light directing elements.

12. Use of the liquid crystal medium according to one or more of claims 6 to 9 in a LCoS panel, a projection system, a near-eye display, an optical phase modulator or in a beam-stearing application.

13. Use of the liquid crystal medium according to one or more of claims 6 to 9 for energy-saving LC displays.

14. Method of manufacturing a LCoS panel according to claim 1, comprising at least the steps of
a) providing a first substrate with a first electrode having a two dimensional array of individually electrically drivable pixels;
b) depositing a liquid crystal medium as set forth in claim 6 over the first substrate;
and
c) mounting a second substrate with a second electrode onto the liquid crystal material.
